# EUROPEAN PATENT APPLICATION

(11) **EP 1 217 430 A2**
(43) Date of publication of application: **26.06.2002**
(21) Application number: 01128552.5
(22) Date of filing: 29.11.2001
(51) Int. Cl.: G03C 1/498, G03C 5/26, G03C 11/02, H04N 1/00, H04N 1/60

(54) **Image forming method and system**

(30) Priority: 30.11.2000 JP 2000365909
(71) Applicant: Fuji Photo Film Co., Ltd., Kanagawa-ken (JP)
(72) Inventor: Arakawa, Jun, Fuji Photo Film Co., Ltd., Ashigarakami-gun, Kanagawa-ken (JP); Nakamura, Hiroaki, Fuji Photo Film Co., Ltd., Ashigarakami-gun, Kanagawa-ken (JP); Nishio, Tomonori, Fuji Photo Film Co., Ltd., Ashigarakami-gun, Kanagawa-ken (JP); Kachi, Yasuhiko, Fuji Photo Film Co., Ltd., Ashigarakami-gun, Kanagawa-ken (JP)
(74) Representative: Klunker . Schmitt-Nilson . Hirsch

(57) **Abstract**

A photosensitive material containing a photosensitive silver halide and an organic silver salt and capable of forming an image, which corresponds to a latent image recorded on the photosensitive material through exposure, when the photosensitive material is heated, is utilized for forming an image. The photosensitive material, on which the latent image has been recorded, is heated, and the image corresponding to the latent image is formed with the heating on the photosensitive material. The image is read out from the heat-developed photosensitive material, and an image signal having thus been obtained is subjected to image processing for forming a digital image signal, from which the image is capable of being reproduced.

## Description

### BACKGROUND OF THE INVENTION

### Field of the Invention

This invention relates to an image forming method and system. This invention particularly relates to an image forming method and system, wherein a photosensitive material capable of forming an image, which corresponds to a latent image having been recorded on the photosensitive material through an image-wise exposure operation, when the photosensitive material is heated, is utilized as a material, such as photographic film.

### Description of the Related Art

In techniques known as conventional color photography, a photosensitive material (the so-called color negative film) for a photographing operation ordinarily contains a layer for recording blue light information and forming a yellow dye image, a layer for recording green light information and forming a magenta dye image, and a layer for recording red light information and forming a cyan dye image. During development processing, in a step of reducing silver halide grains, which carry a latent image, to silver with a developing agent, the developing agent is oxidized, and the oxidation product of the developing agent undergoes a reaction (coupling) with a coupler in order to form a dye image. In a subsequent bleach-fixing process, undeveloped silver halides and the developed silver are removed. In this manner, color negative film, on which the dye image has been formed and from which the undeveloped silver halides and the developed silver have been removed, is obtained.

In conventional techniques, light having passed through the dye image formed on the color negative film is irradiated to color paper, the color paper is thus exposed image-wise, and the dye image is printed on the color paper in this manner. Thereafter, the development processing, the bleaching process, and the fixing process are performed, and a color print is thereby obtained.

Techniques have also been proposed, wherein the image having been formed on the color negative film is read out photoelectrically, an image signal having thus been obtained from the color negative film is subjected to image processing, an image signal for recording is obtained from the image processing, and an image is recorded on an image recording material in accordance with the image signal for recording. In particular, research has heretofore been conducted to obtain digital printers, in which the image signal described above is converted into a digital image signal, a laser beam is modulated with the digital image signal and is caused to scan on a photosensitive material, such as color paper, the photosensitive material is thus exposed image-wise, and a finished print is thereby obtained. A digital printer constituted in the manner described above is described in, for example, Japanese Unexamined Patent Publication No. 7(1995)-15593.

The conventional techniques described above are bases on the assumption that the ordinary (wet type of) development processing, bleaching processing, and fixing processing are performed on the color negative film having been subjected to the photographing operation, and an image is thereby formed. However, the conventional techniques described above have the drawbacks in that the processes for forming the image are not simple, considerable time and labor are required to process liquids containing chemical agents, such as processing liquids, and the service life of the apparatuses for performing the processing cannot be kept long due to staining of the apparatuses, and the like. Therefore, an image forming method and system have heretofore been proposed, wherein a photosensitive material capable of forming an image, which corresponds to a latent image having been recorded on the photosensitive material through an image-wise exposure operation, when the photosensitive material is superposed upon a predetermined processing material and heated, is utilized as a material, such as photographic film. With the proposed image forming method and system, after a latent image has been recorded on the photosensitive material through the image-wise exposure operation, the photosensitive material and the processing material are superposed one upon the other and heated. In this manner, the image, which corresponds to the latent image having been recorded on the photosensitive material, is formed on the photosensitive material. The photosensitive material, on which the image has thus been formed, is separated from the processing material and is thereby developed. Thereafter, the image on the thus developed photosensitive material is read out with a scanner, and an image signal representing the image is obtained. Predetermined image processing is then performed on the image signal, and a digital image signal, from which the image is capable of being reproduced, is thereby formed.

However, with the proposed image forming method and system, the predetermined processing material must be utilized for the development processing. Also, it is necessary for solvents, such as water, to be utilized such that the adhesion between the processing material and the photosensitive material may be enhanced, such that the development may be accelerated, and such that the transfer of processing agents from the processing material to the photosensitive material may be accelerated. Therefore, the mechanism for the development processing cannot be kept simple.

### SUMMARY OF THE INVENTION

The primary object of the present invention is to provide a method of forming an image simply and quickly, wherein a photosensitive material, on which a latent image has been recorded, is subjected to development processing, an image having been formed on the photosensitive material through the development processing is read out, and an image signal having been obtained from the image read-out operation is converted into a digital image signal.

Another object of the present invention is to provide a system for carrying out the image forming method, which system is small in size and easy to operate.

The present invention provides an image forming method, wherein a photosensitive material containing a photosensitive silver halide and an organic silver salt and capable of forming an image, which corresponds to a latent image having been recorded on the photosensitive material through an image-wise exposure operation, when the photosensitive material is heated, is utilized, the method comprising the steps of:
i) heating the photosensitive material, on which the latent image has been recorded, the image, which corresponds to the latent image having been recorded on the photosensitive material, being thereby formed on the photosensitive material,
ii) performing an image readout for reading out the image from the heat-developed photosensitive material, on which the image has been formed with the heating, an image signal, which represents the image, being thereby obtained, and
iii) performing predetermined image processing on the image signal, a digital image signal, from which the image is capable of being reproduced, being thereby formed.

The present invention also provides an image forming system for use in an image forming method in accordance with the present invention, the system comprising:
a development processing section provided with heating means for heating the photosensitive material, on which the latent image has been recorded, in order to form the image, which corresponds to the latent image, on the heat-developed photosensitive material.

The image forming system in accordance with the present invention may be constituted of a single apparatus, which is provided with all of the processing means ranging from the heating means to image read-out means for reading out the image from the photosensitive material. Alternatively, the image forming system in accordance with the present invention may be constituted of a developing apparatus for performing the processing up to the development processing and a processing apparatus for performing the image readout from the photosensitive material and the image processing. Also, as for various kinds of means, which will be described later, all of the means may be incorporated in a case housing of a single apparatus. Alternatively, the various kinds of means may be constituted as independent apparatuses, and the independent apparatuses may be connected with one another to constitute the image forming system in accordance with the present invention.

In the image forming method and system in accordance with the present invention, the predetermined image processing is performed on the image signal, and the digital image signal, from which the image is capable of being reproduced, is thereby formed. Specifically, the digital image signal is capable of being utilized for reproducing and displaying the image as a visible image.

Also, in the image forming method and system in accordance with the present invention, the heating of the photosensitive material should preferably be performed at a temperature ranging from 100°C to 200°C and for a period ranging from 5 seconds to 60 seconds.

Further, the image forming method and system in accordance with the present invention should preferably be modified such that:
the photosensitive material is a heat-developable photosensitive color photographic material comprising:
   a support, and
   at least three kinds of photosensitive layers, which are overlaid on the support, each of the photosensitive layers containing at least photosensitive silver halide grains, organic silver salt grains, a binder, a color developing agent, and a dye-donating coupler, each of the three kinds of photosensitive layers being sensitive to different wavelength regions, and capable of forming dyes of different hues from an oxidation product of the color developing agent and the dye-donating couplers, and
a color image of at least three colors is formed on the heat-developed photosensitive color photographic material.

Furthermore, the image forming method and system in accordance with the present invention should preferably be modified such that the photosensitive silver halide contains tabular photosensitive silver halide grains, which have an aspect ratio falling within the range between 4 and 100, in a proportion of at least 50% by volume.

Also, in the image forming method and system in accordance with the present invention, the organic silver salt should preferably be a silver salt of a compound containing an imino group.

Further, in the image forming method and system in accordance with the present invention, the organic silver salt should preferably be a silver salt of a derivative of benzotriazole.

Also, the image forming system in accordance with the present invention may be modified such that the development processing section is provided with pre-development temperature and moisture content adjusting means for adjusting a temperature and a moisture content of the photosensitive material at values falling within predetermined ranges immediately before the photosensitive material is heated by the heating means.

Further, the image forming system in accordance with the present invention may be modified such that the development processing section is provided with post-development temperature and moisture content adjusting means for adjusting a temperature and a moisture content of the heat-developed photosensitive material at values falling within predetermined ranges immediately after the photosensitive material is heated by the heating means.

Furthermore, the image forming system in accordance with the present invention may be modified such that the system further comprises:
image read-out means for performing an image readout for reading out the image from the heat-developed photosensitive material, on which the image has been formed with development processing performed in the development processing section, in order to obtain an image signal, which represents the image, and
image processing means for performing predetermined image processing on the image signal in order to form a digital image signal, from which the image is capable of being reproduced.

Also, the image forming system in accordance with the present invention may be modified such that the system further comprises pre-readout temperature and moisture content adjusting means for adjusting a temperature and a moisture content of the heat-developed photosensitive material at values falling within predetermined ranges immediately before the image readout from the heat-developed photosensitive material is performed by the image read-out means and/or while the image readout from the heat-developed photosensitive material is being performed by the image read-out means.

Further, the image forming system in accordance with the present invention may be modified such that the system further comprises compensation processing means for compensating for a contribution of a print-out effect, which occurs in accordance with the undeveloped photosensitive silver halide and developed silver remaining on the heat-developed photosensitive material, to the image signal in cases where an image re-readout is performed by the image read-out means.

Furthermore, the image forming system in accordance with the present invention may be modified such that:
the photosensitive material is provided with a reference region, to which a predetermined exposure quantity is given,
read-out conditions of the image read-out means and image processing conditions of the image processing means are determined in accordance with image signal components, which correspond to the reference region and are obtained when information in the reference region is read out by the image read-out means,
in cases where the image re-readout is performed by the image read-out means, the image re-readout is performed by the image read-out means under the read-out conditions having thus been determined, the image signal being thereby obtained, and
the image processing is performed on the obtained image signal and by the image processing means under the image processing conditions having thus been determined.

The term "image re-readout" as used herein means the operation for reading out the image again. For example, in cases where the image readout could not be performed due to an erroneous operation of the image read-out means occurring at an intermediate point of the image readout, the image re-readout may be performed from the beginning or from the intermediate point. Also, in cases where the image readout was conducted up to the final point but could not be performed appropriately, the image re-readout may be performed from the beginning.

Also, the image forming system in accordance with the present invention may be modified such that:
the system further comprises light quantity storage means for storing information, which represents cumulative light quantity of reading light irradiated to the heat-developed photosensitive material at the time of the image readout,
reference is made to print-out characteristics with respect to light intensities of reading light, which print-out characteristics have been set previously,
read-out conditions of the image read-out means and image processing conditions of the image processing means are determined in accordance with the light quantity, which has been stored in the light quantity storage means, and the print-out characteristics,
in cases where the image re-readout is performed by the image read-out means, the image re-readout is performed by the image read-out means under the read-out conditions having thus been determined, the image signal being thereby obtained, and
the image processing is performed on the obtained image signal and by the image processing means under the image processing conditions having thus been determined.

Further, the image forming system in accordance with the present invention may be modified such that:
the system further comprises read-out condition setting means capable of selecting a spatial resolving power and an image density resolving power, with which the image is to be read out, respectively from a plurality of spatial resolving powers and a plurality of image density resolving powers, and setting the selected spatial resolving power and the selected image density resolving power for the image readout,
the image read-out means performs the image readout with the spatial resolving power and the image density resolving power, which have been set by the read-out condition setting means,
the system still further comprises image processing condition setting means capable of selecting image processing conditions, under which the image processing is to be performed on the image signal having been obtained from the image readout performed by the image read-out means with the spatial resolving power and the image density resolving power having been set by the read-out condition setting means, from a plurality of image processing conditions, and setting the selected image processing conditions for the image processing, and
the image processing means performs the image processing on the image signal and under the image processing conditions, which have been set by the image processing condition setting means.

Furthermore, the image forming system in accordance with the present invention may be modified such that:
the image read-out means performs the image readout with a standard spatial resolving power and a standard image density resolving power, which have been set previously by the read-out condition setting means,
the image processing means performs standard image processing, which has been set previously by the image processing condition setting means, on an image signal, which has been obtained from the image readout performed with the standard spatial resolving power and the standard image density resolving power, in order to form a digital image signal, which represents a standard image,
the image read-out means performs the image readout with a high spatial resolving power and a high image density resolving power, which have been set by the read-out condition setting means, and
the image processing means performs simple image processing, which is simpler than the standard image processing having been set previously by the image processing condition setting means, on an image signal, which has been obtained from the image readout performed with the high spatial resolving power and the high image density resolving power, in order to form a digital image signal, which represents an original image,
whereby at least two kinds of the digital image signals, which represent the standard image and the original image, are formed.

Also, the image forming system in accordance with the present invention may be modified such that:
the image read-out means performs the image readout with a high spatial resolving power and a high image density resolving power, which have been set by the read-out condition setting means,
the image processing means performs simple image processing, which is simpler than standard image processing having been set previously by the image processing condition setting means, on an image signal, which has been obtained from the image readout performed with the high spatial resolving power and the high image density resolving power, in order to form a digital image signal, which represents an original image, and
the image processing means performs re-sizing and image density resolving power transform on the digital image signal, which represents the original image, and in accordance with a standard spatial resolving power and a standard image density resolving power, which have been set previously, in order to form a digital image signal, which represents a standard image.

The term "re-sizing" as used herein means the processing for transforming the spatial resolving power of the original image to the spatial resolving power equivalent to the spatial resolving power of the standard image through thinning-out of the image signal, a linear interpolating operation, a spline interpolating operation, or the like.

The term "image processing simpler than standard image processing" as used herein means one of various kinds of processing simpler than the processing performed as the standard image processing. As the image processing simpler than the standard image processing, no image processing may be conducted.

Further, the image forming system in accordance with the present invention may be modified such that the system further comprises:
identification code appending means for appending a heat-developed photosensitive material identification code for identifying the heat-developed photosensitive material and an image identification code for identifying each of a plurality of images, which have been formed on the heat-developed photosensitive material, to each of digital image signals representing the plurality of the images, each of the digital image signals having been obtained from the predetermined image processing performed on one of image signals, which represent the plurality of the images and have been obtained with the image readout performed by the image read-out means, and
storage means for storing the digital image signals, which represent the plurality of the images, the heat-developed photosensitive material identification code, and the image identification codes, such that it may be clear which heat-developed photosensitive material identification code and which image identification code correspond to which digital image signal.

For example, in cases where the photographic film is a single film strip, on which a plurality of images have been recorded, the single film strip is taken as one group. The heat-developed photosensitive material identification code is appended to each of such groups. The heat-developed photosensitive material identification code represents user information, camera kind information, film kind information, development processing information, and the like. In cases where the storage means described above is an image signal server, the heat-developed photosensitive material identification code also represents an address to the server, log-in information (ID, pass word) to the server, and the like.

The image identification code represents the date of the photographing operation, the object, and the like.

The storage means for storing the digital image signals, the photosensitive material identification code, and the image identification codes may be the image signal server provided with a hard disk having a large capacity, or may be a storage medium, such as a floppy disk drive unit, a nonvolatile memory, a CD-RAM, or a DVD-RAM.

Furthermore, the image forming system in accordance with the present invention may be modified such that:
the system further comprises image signal retrieving means for retrieving each of the digital image signals, which represent the plurality of the images, in accordance with the heat-developed photosensitive material identification code and the image identification code, and in accordance with input conditions specified from a client terminal device, which is connected with the storage means via a communication line, and
the image processing means again performs image processing on the digital image signal, which has been retrieved by the image signal retrieving means, and in accordance with the input conditions.

The term "client terminal device" as used herein means a computer, a potable terminal device, or the like, which is connected with the storage means via the communication line. The term "communication line" as used herein means any of radio communication lines and cable communication lines, such as a wide area network (WAN) and a local area network (LAN).

Also, the image forming system in accordance with the present invention may be modified such that:
the photosensitive material is provided with a patch, on which an image having a predetermined image density is capable of being formed, the patch being located at an area surrounding each of a plurality of images formed on the photosensitive material, and
the system further comprises development judging means for measuring the image density of the image having been formed on the patch after development processing, and making a judgment in accordance with the results of the measurement and as to whether the development processing has been or has not been performed correctly.

Further, the image forming system in accordance with the present invention may be modified such that:
the photosensitive material is provided with a patch, on which a predetermined pattern image is capable of being formed, the patch being located at an area surrounding each of a plurality of images formed on the photosensitive material, and
the system further comprises development judging means for detecting an image density form having been formed on the patch after development processing, and making a judgment in accordance with the results of the detection and as to whether the development processing has been or has not been performed correctly.

Furthermore, the image forming system in accordance with the present invention may be modified such that:
the photosensitive material is provided with a patch, on which an image having a predetermined image density is capable of being formed, the patch being located at an end area of the photosensitive material, and
the system further comprises development judging means for measuring the image density of the image having been formed on the patch after development processing, and making a judgment in accordance with the results of the measurement and as to whether the development processing has been or has not been performed correctly.

Also, the image forming system in accordance with the present invention may be modified such that:
the photosensitive material is provided with a patch, on which a predetermined pattern image is capable of being formed, the patch being located at an end area of the photosensitive material, and
the system further comprises development judging means for detecting an image density form having been formed on the patch after development processing, and making a judgment in accordance with the results of the detection and as to whether the development processing has been or has not been performed correctly.

For example, in cases where the photographic film is a single film strip, on which a plurality of images have been recorded, the term "end area" as used herein means at least either one of the leading end area and the tail end area of the film strip.

Also, the image forming system in accordance with the present invention may be modified such that:
the photosensitive material is provided with a magnetic recording layer, on which information is recorded magnetically, and
the system further comprises magnetic recording information reading means for reading the information, which has been recorded on the magnetic recording layer, before development processing is performed in the development processing section.

By way of example, the magnetic recording information recorded on the magnetic recording layer may represent the information concerning the photographing operation with the camera, such as the date of the photographing operation, the kind of the camera, and the photographing conditions. The magnetic recording information recorded on the magnetic recording layer may also represent the kind of the photosensitive material, the kind of the photographic film, and the like. In cases where the kind of the photosensitive material is recorded as the magnetic recording information on the magnetic recording layer, if the photosensitive material is not the photosensitive material to be subjected to the heat development performed with the image forming system in accordance with the present invention, the image readout with the image read-out means may be prevented from being conducted. Also, the heat development processing itself may be prevented from being conducted.

Further, the image forming system in accordance with the present invention may be modified such that the system further comprises at least one unit of printing means for outputting a print in accordance with the digital image signal.

By way of example, the printing means may be means for printing through scanning exposure, such as exposure to a laser beam, means for printing through surface exposure, such as a CRT printer, or an ink-jet type of printer.

Further, the image forming system in accordance with the present invention may be modified such that:
the information, which has been recorded on the magnetic recording layer, is at least one kind of information, which is among the information representing read-out conditions of the image read-out means, the information representing image processing conditions of the image processing means, and the information representing printing conditions of the printing means, and
the system executes at least one kind of operation, which is among the image readout performed by the image read-out means under the read-out conditions having been read by the magnetic recording information reading means, the image processing performed by the image processing means under the image processing conditions having been read by the magnetic recording information reading means, and the print outputting performed by the printing means under the printing conditions having been read by the magnetic recording information reading means.

With the image forming method and system in accordance with the present invention, the photosensitive material containing the photo sensitive silver halide and the organic silver salt and capable of forming the image, which corresponds to the latent image having been recorded on the photosensitive material through the image-wise exposure operation, when the photosensitive material is heated, is utilized. The photosensitive material, on which the latent image has been recorded, is heated, and the image, which corresponds to the latent image having been recorded on the photosensitive material, is thereby formed on the photosensitive material. Therefore, mechanisms of the image forming system are capable of being kept simple and small in size. Also, the time required for the image formation is capable of being kept markedly shorter than with conventional image forming systems.

Also, with the image forming method and system in accordance with the present invention, wherein the image readout for reading out the image from the heat-developed photosensitive material, on which the image has been formed with the heating, is performed by the image read-out means, and the digital image signal is formed with the predetermined image processing, the digital image signal is capable of being utilized in various ways for obtaining a photographic image. For example, the digital image signal is capable of being utilized for outputting a print by use of a digital printer. Also, the digital image signal is capable of being fed as data into a personal computer, or the like.

Further, with the image forming method and system in accordance with the present invention, wherein the heating of the photosensitive material is performed at a temperature ranging from 100°C to 200°C and for a period ranging from 5 seconds to 60 seconds, the heat development processing is capable of being performed appropriately.

Furthermore, the image forming method and system in accordance with the present invention may be modified such that:
the photosensitive material is the heat-developable photosensitive color photographic material comprising:
   the support, and
   at least three kinds of photosensitive layers, which are overlaid on the support, each of the photosensitive layers containing at least the photosensitive silver halide grains, the organic silver salt grains, the binder, the color developing agent, and the dye-donating coupler, each of the three kinds of photosensitive layers being sensitive to different wavelength regions, and capable of forming dyes of different hues from an oxidation product of the color developing agent and the dye-donating couplers, and
the color image of at least three colors is formed on the heat-developed photosensitive color photographic material. Also, the photosensitive silver halide may contain the tabular photosensitive silver halide grains, which have an aspect ratio falling within the range between 4 and 100, in a proportion of at least 50% by volume. Further, the organic silver salt may be the silver salt of the compound containing an imino group. In such cases, a color image having image quality as good as the image quality of the conventional silver halide photographs is capable of being obtained.

Also, the image forming system in accordance with the present invention may be modified such that the development processing section is provided with the pre-development temperature and moisture content adjusting means for adjusting the temperature and the moisture content of the photosensitive material at values falling within the predetermined ranges immediately before the photosensitive material is heated by the heating means. In such cases, curl of the photosensitive material is capable of being eliminated immediately before the photosensitive material is heated by the heating means, and the flatness of the photosensitive material is thereby capable of being kept at a predetermined level before the heat development processing is performed. Therefore, nonuniformity in developed image density, or the like, is capable of being suppressed, and the development processing is capable of being accelerated.

Further, the image forming system in accordance with the present invention may be modified such that the development processing section is provided with the post-development temperature and moisture content adjusting means for adjusting the temperature and the moisture content of the heat-developed photosensitive material at values falling within the predetermined ranges immediately after the photosensitive material is heated by the heating means. In such cases, curl of the heat-developed photosensitive material is capable of being eliminated, and the heat-developed photosensitive material is capable of being cooled immediately after the photosensitive material is heated by the heating means. In this manner, the flatness of the photosensitive material after being subjected to the development processing is capable of being enhanced. Therefore, an image having good image quality is capable of being obtained from the image readout performed by the image read-out means.

Furthermore, the image forming system in accordance with the present invention may be modified such that the system further comprises the pre-readout temperature and moisture content adjusting means for adjusting the temperature and the moisture content of the heat-developed photosensitive material at values falling within the predetermined ranges immediately before the image readout from the heat-developed photosensitive material is performed by the image read-out means and/or while the image readout from the heat-developed photosensitive material is being performed by the image read-out means. In such cases, curl of the heat-developed photosensitive material due to heat coming from the light source of the image read-out means is capable of being eliminated, and fluctuation in image density is capable of being suppressed.

Also, the image forming system in accordance with the present invention may be modified such that the system further comprises the compensation processing means for compensating for the contribution of the print-out effect, which occurs in accordance with the undeveloped photosensitive silver halide and the developed silver remaining on the heat-developed photosensitive material, to the image signal in cases where the image re-readout is performed by the image read-out means. In such cases, the image quality of the obtained image is capable of being enhanced.

Further, the image forming system in accordance with the present invention may be modified such that:
the photosensitive material is provided with the reference region, to which the predetermined exposure quantity is given,
the read-out conditions of the image read-out means and the image processing conditions of the image processing means are determined in accordance with the image signal components, which correspond to the reference region and are obtained when the information in the reference region is read out by the image read-out means,
in cases where the image re-readout is performed by the image read-out means, the image re-readout is performed by the image read-out means under the read-out conditions having thus been determined, the image signal being thereby obtained, and
the image processing is performed on the obtained image signal and by the image processing means under the image processing conditions having thus been determined.
In such cases, the compensation for the contribution of the print-out effect, which occurs in accordance with the undeveloped photosensitive silver halide and the developed silver, is capable of being performed with a simple mechanism.

Furthermore, the image forming system in accordance with the present invention may be modified such that:
the system further comprises the light quantity storage means for storing the information, which represents the cumulative light quantity of the reading light irradiated to the heat-developed photosensitive material at the time of the image readout,
reference is made to the print-out characteristics with respect to the light intensities of reading light, which print-out characteristics have been set previously,
the read-out conditions of the image read-out means and the image processing conditions of the image processing means are determined in accordance with the light quantity, which has been stored in the light quantity storage means, and the print-out characteristics,
in cases where the image re-readout is performed by the image read-out means, the image re-readout is performed by the image read-out means under the read-out conditions having thus been determined, the image signal being thereby obtained, and
the image processing is performed on the obtained image signal and by the image processing means under the image processing conditions having thus been determined.
In such cases, the compensation for the contribution of the print-out effect, which occurs in accordance with the undeveloped photosensitive silver halide and the developed silver, is capable of being performed with a simple mechanism.

Also, the image forming system in accordance with the present invention may be modified such that:
the system further comprises the read-out condition setting means capable of selecting the spatial resolving power and the image density resolving power, with which the image is to be read out, respectively from the plurality of the spatial resolving powers and the plurality of the image density resolving powers, and setting the selected spatial resolving power and the selected image density resolving power for the image readout,
the image read-out means performs the image readout with the spatial resolving power and the image density resolving power, which have been set by the read-out condition setting means,
the system still further comprises the image processing condition setting means capable of selecting the image processing conditions, under which the image processing is to be performed on the image signal having been obtained from the image readout performed by the image read-out means with the spatial resolving power and the image density resolving power having been set by the read-out condition setting means, from the plurality of the image processing conditions, and setting the selected image processing conditions for the image processing, and
the image processing means performs the image processing on the image signal and under the image processing conditions, which have been set by the image processing condition setting means.
In such cases, an image capable of satisfying a demand of the user is capable of being obtained.

Further, the image forming system in accordance with the present invention may be modified such that:
the image read-out means performs the image readout with the standard spatial resolving power and the standard image density resolving power, which have been set previously by the read-out condition setting means,
the image processing means performs the standard image processing, which has been set previously by the image processing condition setting means, on the image signal, which has been obtained from the image readout performed with the standard spatial resolving power and the standard image density resolving power, in order to form the digital image signal, which represents the standard image,
the image read-out means performs the image readout with the high spatial resolving power and the high image density resolving power, which have been set by the read-out condition setting means, and
the image processing means performs the simple image processing, which is simpler than the standard image processing having been set previously by the image processing condition setting means, on the image signal, which has been obtained from the image readout performed with the high spatial resolving power and the high image density resolving power, in order to form the digital image signal, which represents the original image,
whereby at least two kinds of the digital image signals, which represent the standard image and the original image, are formed.

In such cases, an image capable of satisfying a demand of the user is capable of being obtained in accordance with the original image.

Furthermore, the image forming system in accordance with the present invention may be modified such that:
the image read-out means performs the image readout with the high spatial resolving power and the high image density resolving power, which have been set by the read-out condition setting means,
the image processing means performs the simple image processing, which is simpler than standard image processing having been set previously by the image processing condition setting means, on the image signal, which has been obtained from the image readout performed with the high spatial resolving power and the high image density resolving power, in order to form the digital image signal, which represents an original image, and
the image processing means performs the re-sizing and the image density resolving power transform on the digital image signal, which represents the original image, and in accordance with the standard spatial resolving power and the standard image density resolving power, which have been set previously, in order to form the digital image signal, which represents a standard image.

In such cases, an image capable of satisfying a demand of the user is capable of being obtained in accordance with the original image.

Also, the image forming system in accordance with the present invention may be modified such that the system further comprises:
the identification code appending means for appending the heat-developed photosensitive material identification code for identifying the heat-developed photosensitive material and the image identification code for identifying each of the plurality of the images, which have been formed on the heat-developed photosensitive material, to each of the digital image signals representing the plurality of the images, each of the digital image signals having been obtained from the predetermined image processing performed on one of the image signals, which represent the plurality of the images and have been obtained with the image readout performed by the image read-out means, and
the storage means for storing the digital image signals, which represent the plurality of the images, the heat-developed photosensitive material identification code, and the image identification codes, such that it may be clear which heat-developed photosensitive material identification code and which image identification code correspond to which digital image signal.

In such cases, the images are capable of being managed easily. Also, image retrieval is capable of being performed easily in accordance with the heat-developed photosensitive material identification code and the image identification code.

Further, the image forming system in accordance with the present invention may be modified such that:
the system further comprises the image signal retrieving means for retrieving each of the digital image signals, which represent the plurality of the images, in accordance with the heat-developed photosensitive material identification code and the image identification code, and in accordance with the input conditions specified from the client terminal device, which is connected with the storage means via the communication line, and
the image processing means again performs the image processing on the digital image signal, which has been retrieved by the image signal retrieving means, and in accordance with the input conditions.

In such cases, a customer, or the like, is capable of accessing from a remote site to the storage means in order to retrieve a desired image. Also, the customer, or the like, is capable of easily obtaining an image, which has been again subjected to the desired image processing.

Furthermore, the image forming system in accordance with the present invention may be modified such that:
the photosensitive material is provided with the patch, on which an image having a predetermined image density is capable of being formed, the patch being located at the area surrounding each of the plurality of the images formed on the photosensitive material, or at the end area of the photosensitive material, and
the system further comprises the development judging means for measuring the image density of the image having been formed on the patch after the development processing, and making a judgment in accordance with the results of the measurement and as to whether the development processing has been or has not been performed correctly.

In such cases, after the development processing has been performed, a judgment is capable of being made automatically and clearly as to whether the reason for an error in obtaining a desired image is a failure in photographing operation or a failure in development processing.

Also, the image forming system in accordance with the present invention may be modified such that:
the photosensitive material is provided with the patch, on which the predetermined pattern image is capable of being formed, the patch being located at the area surrounding each of the plurality of the images formed on the photosensitive material, or at the end area of the photosensitive material, and
the system further comprises the development judging means for detecting the image density form having been formed on the patch after the development processing, and making a judgment in accordance with the results of the detection and as to whether the development processing has been or has not been performed correctly.

In such cases, after the development processing has been performed, a judgment is capable of being made automatically and clearly as to whether the reason for an error in obtaining a desired image is a failure in photographing operation or a failure in development processing.

Further, the image forming system in accordance with the present invention may be modified such that:
the photosensitive material is provided with the magnetic recording layer, on which the information is recorded magnetically, and
the system further comprises the magnetic recording information reading means for reading the information concerning the photographic film, which information has been recorded on the magnetic recording layer, before the development processing is performed in the development processing section.

In such cases, when the image readout is performed by the image read-out means, the photographic film need not be conveyed reciprocally. (Ordinarily, the image read-out speed and the speed, with which the magnetic recording information is read from the magnetic recording layer, are different from each other, and therefore it is necessary for the photographic film to be conveyed reciprocally.) Therefore, the conveyance mechanism is capable of being kept simple. Also, the image readout performed by the image read-out means is capable of being begun immediately after the development processing has been performed, and therefore adverse effects, such as a change in image density due to a change in temperature, are capable of being suppressed.

Furthermore, the information representing the read-out conditions of the image read-out means, the information representing the image processing conditions of the image processing means, and the information representing the printing conditions of the printing means, are capable of being recorded on the magnetic recording layer. The image readout may be performed by the image read-out means under the read-out conditions having been read by the magnetic recording information reading means. Also, the image processing may be performed by the image processing means under the image processing conditions having been read by the magnetic recording information reading means. Further, the print outputting may be performed by the printing means under the printing conditions having been read by the magnetic recording information reading means. In such cases, the image readout, the image processing, and the print outputting in accordance with the photographing conditions of each photographic film strip are capable of being performed with a simple mechanism.

As described above, with the image forming method and system in accordance with the present invention, full color images having good image quality and good product quality are capable of being obtained on a broad scale with the simple procedures and the simple mechanisms. The image forming method and system in accordance with the present invention thus have large effects in practice.

### BRIEF DESCRIPTION OF THE DRAWINGS

Figure 1 is a flow chart showing how processing in the image forming method in accordance with the present invention is performed,
Figure 2 is a block diagram showing an embodiment of the image forming system in accordance with the present invention,
Figures 3A to 3K are schematic views showing examples of heating means,
Figure 4 is a schematic view showing an example of photographic film, which acts as a photosensitive material employed in the image forming system in accordance with the present invention and is provided with patches to be utilized for making a judgment as to whether development processing has been or has not been performed correctly,
Figure 5 is a schematic view showing a different example of photographic film, which acts as the photosensitive material employed in the image forming system in accordance with the present invention and is provided with patches to be utilized for making a judgment as to whether development processing has been or has not been performed correctly,
Figure 6 is a schematic view showing the embodiment of the image forming system in accordance with the present invention,
Figure 7 is a flow chart showing a control routine, which is executed by a development processing section in the embodiment of Figure 6,
Figure 8A is an explanatory view showing an example of a read-out section,
Figure 8B is a schematic view showing an example of a CCD image sensor,
Figure 9 is an explanatory view showing a different example of a read-out section,
Figure 10 is a schematic view showing a further different example of photographic film, which acts as the photosensitive material employed in the image forming system in accordance with the present invention and is provided with reference regions to be utilized for compensating for print-out effects at the time of an image re-readout,
Figure 11 is a block diagram showing an image processing section,
Figure 12 is a block diagram showing frame memory units of the image processing section,
Figure 13 is a block diagram showing first image processing means of the image processing section,
Figure 14 is a flow chart showing how an image signal is read out from photographic film and how a print is outputted in accordance with the image signal,
Figure 15 is a block diagram showing an ink-jet printer,

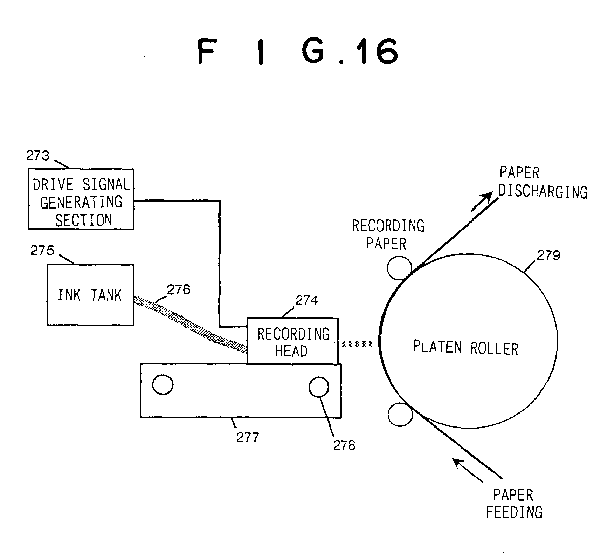

Figure 16 is an explanatory view showing the ink-jet printer,
Figure 17 is a schematic view showing an example of a digital printer, in which heat-development transfer is performed,
Figure 18 is a block diagram showing a control section of the digital printer of Figure 17,
Figure 19 is an explanatory view showing an exposure control section of the digital printer of Figure 17,
Figure 20 is a schematic view showing a solvent-imparting apparatus of the digital printer of Figure 17,
Figure 21 is a sectional view showing a jet tank employed in the solvent-imparting apparatus of Figure 20,
Figure 22 is a sectional view showing the jet tank of Figure 21 in the state in which a solvent is jetted from the jet tank, and
Figure 23 is a schematic view showing an example of a digital printer, in which wet development processing is performed.

### DESCRIPTION OF THE PREFERRED EMBODIMENTS

The present invention will hereinbelow be described in further detail with reference to the accompanying drawings.

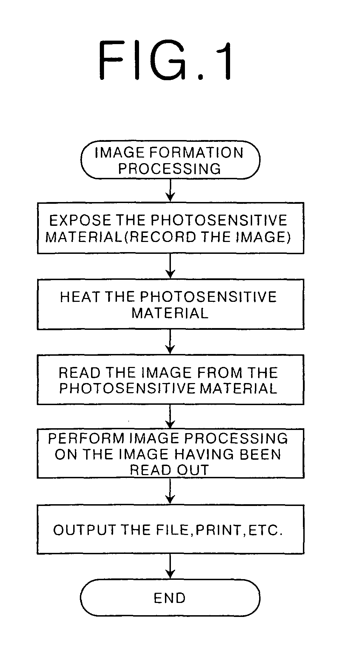

Figure 1 is a flow chart showing how processing in the image forming method in accordance with the present invention is performed. In the image forming method in accordance with the present invention, a photosensitive material containing photosensitive silver halide grains and an organic silver salt is exposed image-wise by use of photographing means, or the like, and a latent image is thereby recorded on the photosensitive material. The photosensitive material, on which the latent image has been recorded, is then heated, and the latent image is thereby developed. An image, which has been formed on the photosensitive material with the heating, is then read out with a scanner, and an image signal having been obtained from the image readout is converted into a digital image signal. Thereafter, the digital image signal is subjected to image processing and utilized for outputting a file or a print. In accordance with the flow of the processing with the image forming method described above, the photosensitive material, the image-wise exposure operation, the development processing, the formation of the digital image signal, and the outputting processing will hereinbelow be described in this order.

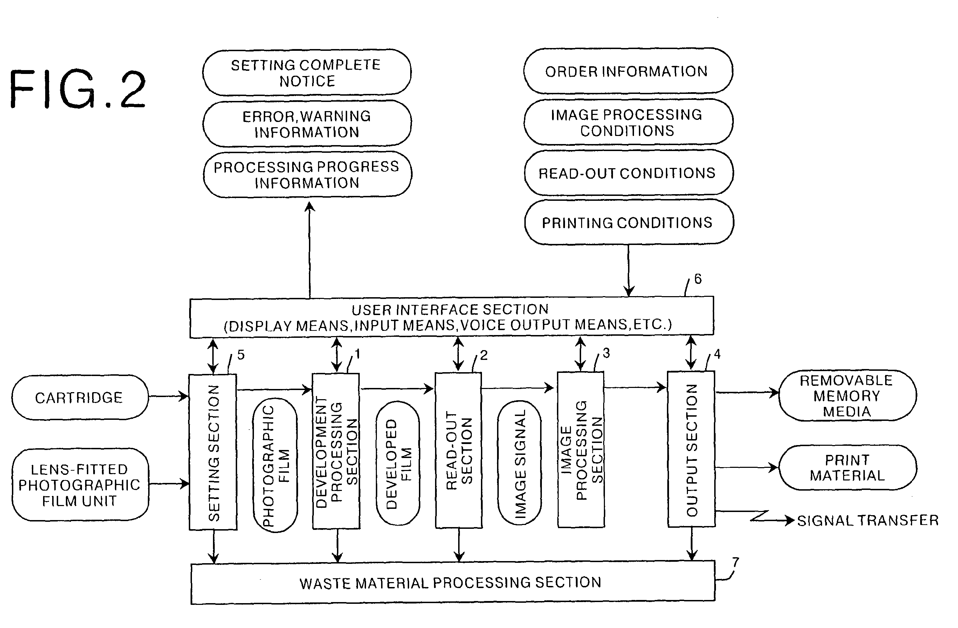

Figure 2 is a block diagram showing an embodiment of the image forming system in accordance with the present invention for performing the processing in accordance with the image forming method described above. As illustrated in Figure 2, the image forming system in accordance with the present invention comprises a development processing section 1, a read-out section 2, an image processing section 3, and an output section 4. Also, the image forming system in accordance with the present invention should preferably be provided with a setting section 5 for drawing photographic film out of a container, or the like, such that the photographic film is capable of being subjected to the development processing. Further, the image forming system in accordance with the present invention should preferably be provided with a user interface section 6 for transmitting various pieces of information to the user and accepting order information specified by the user. Furthermore, the image forming system in accordance with the present invention should preferably be provided with a waste material processing section 7 for collecting and processing used materials, which have been discharged from processing steps. The preferable sections will also be described later.

### (1) Photosensitive material

Examples of materials preferable for the photosensitive material employed in the image forming method and system in accordance with the present invention will be described hereinbelow. The materials described below are mere examples, and the image forming method and system in accordance with the present invention are not limited to the use of the materials described below.

The heat-developable photosensitive material employed in the image forming method and system in accordance with the present invention comprises a support, and at least three kinds of photosensitive layers, which are overlaid on the support. Each of the photosensitive layers contains at least photosensitive silver halide grains, organic silver salt grains, a binder, a color developing agent, and a dye-donating coupler. Also, the photosensitive layers are sensitive to different wavelength regions. Further, the photosensitive layers form dyes of different hues from oxidation products of the color developing agents, which are contained respectively in the photosensitive layers, and the dye-donating couplers, which are contained respectively in the photosensitive layers. The photosensitive material should preferably contain a developing agent, which is capable of undergoing a reaction with the dye-donating coupler and forming a dye.

### Emulsion and emulsion additives

The silver halide contained in the photosensitive material employed in the image forming method and system in accordance with the present invention may be one of various silver halides, such as silver iodobromide, silver bromide, silver chlorobromide, silver iodochloride, silver chloride, and silver iodochlorobromide. The size of the silver halide grains should preferably fall within the range of 0.1µm to 2µm, expressed in terms of the diameter of a sphere having an identical volume, and should more preferably fall within the range of 0.2µm to 1.5µm, expressed in terms of the diameter of a sphere having an identical volume. Besides the use as the photosensitive silver halide grains, the silver halide grains described above may also be utilized as non-photosensitive silver halide grains, which have not been subjected to chemical sensitization, or the like.

The silver halide grains may have a shape composed of a regular crystal form, such as a cubic shape, an octahedral shape, or a tetradecahedral shape. Silver halide grains having a tabular shape, such as a hexagonal shape or a rectangular shape, may also be utilized. The silver halide grains should preferably be tabular grains, which have an aspect ratio (i.e., the value obtained by dividing a projected grain diameter by a grain thickness) of at least 2. The aspect ratio of the tabular grains should more preferably be at least 8. The aspect ratio of the tabular grains should most preferably be at least 20. The emulsion should preferably contain the tabular grains described above in a proportion of at least 50% of the projected area of all grains. The emulsion should more preferably contain the tabular grains described above in a proportion of at least 80% of the projected area of all grains. The emulsion should most preferably contain the tabular grains described above in a proportion of at least 90% of the projected area of all grains.

The thickness of the tabular grains described above should preferably be at most 0.3µ m, should more preferably be at most 0.2µ m, and should most preferably be at most 0.1µ m.

It is also possible to employ silver halide grains having a grain thickness smaller than 0.07µ m and a higher aspect ratio, which are described in, for example, U.S. Patent Nos. 5,494,789, 5,503,970, 5,503,971, and 5,536,632. It is further possible to employ high chloride silver halide tabular grains having a (111) plane as a principal plane, which are described in, for example, U.S. Patent Nos. 4,400,463, 4,713,323, and 5,217,858. It is still further possible to employ high chloride silver halide tabular grains having a (100) plane as a principal plane, which are described in, for example, U.S. Patent Nos. 5,264,337, 5,292,632, and 5,310,635.

Examples in which the above-enumerated silver halide grains are utilized are described in, for example, Japanese Unexamined Patent Publication Nos. 9(1997)-274295, 9(1997)-319047, 10(1998)-115888, and 10(1998)-221827. The silver halide grains employed in the image forming method and system in accordance with the present invention should preferably be monodisperse grains having uniform grain size distribution. The monodisperse characteristics may be represented by a coefficient of variation, which is calculated by dividing a standard deviation of the grain diameter distribution by a mean grain diameter. The silver halide grains employed in the image forming method and system in accordance with the present invention should preferably have the monodisperse characteristics such that the coefficient of variation is at most 25%, and should more preferably have the monodisperse characteristics such that the coefficient of variation is at most 20%. Also, the silver halide grains should preferably have uniform halogen composition.

The silver halide grains employed in the image forming method and system in accordance with the present invention may be constituted such that the halogen composition within each grain is uniform. Alternatively, a region of a different halogen composition may be introduced intentionally into each grain. In particular, in order for a high sensitivity to be obtained, each of the silver halide grains should preferably have a laminated structure composed of a core and a shell having different halogen compositions. It is also preferable that, after the region of a different halogen composition has been introduced into the grain, the grain is allowed to grow even further, and a transition line is thus intentionally introduced into the grain. It is further preferable that a guest crystal of a different halogen composition is connected through an epitaxial junction to a vertex or an edge of a host grain having been formed.

Also, the silver halide grains employed in the image forming method and system in accordance with the present invention should preferably be constituted such that the region within each grain is doped with polyvalent transition metal ions or polyvalent anions as impurities. Particularly, in the former case, a halogeno-complex, a cyano-complex, an organic ligand complex, or the like, which has an iron family element as the center metal, is capable of being utilized preferably.

The silver halide grains employed in the image forming method and system in accordance with the present invention may be prepared basically in accordance with known procedures described in, for example, "Chemie et Phisique Photographique" by P. Glafkides, Paul Montel, 1967; "Photographic Emulsion Chemistry" by G. F. Duffin, Focal Press, 1966; and "Making and Coating of Photographic Emulsion" by V. L. Zelikman et al., Focal Press, 1964. Specifically, the silver halide grains are capable of being prepared in various pH ranges with an acid process, a neutral process, an ammonia process, and the like. Also, As a technique for feeding a water-soluble silver salt and a water-soluble halogen salt solution acting as reaction mixtures, a one-side mixing technique, a simultaneous mixing process, and the like, may be employed either alone or in combination . Further, a controlled double jet process, in which the addition of the reaction mixtures is controlled such that a pAg value may be kept at a target value during the reaction, may be utilized preferably. A technique for keeping a pH value at a predetermined value during the reaction may also be employed. As for the formation of the grains, a technique may be employed, wherein the temperature, the pH value, or the pAg value of the system is altered, and the solubility of the silver halide is thereby controlled. It is also possible to utilize a thioether, thiourea, a rhodanate, or the like, as a solvent. The techniques described above are described in, for example, Japanese Patent Publication No. 47(1972)-11386 and Japanese Unexamined Patent Publication No. 53(1978)-144319.

Ordinarily, the preparation of the silver halide grains employed in the image forming method and system in accordance with the present invention may be conducted by feeding a solution of a water-soluble silver salt, such as silver nitrate, and a solution of a water-soluble halogen salt, such as an alkali halide, into an aqueous solution of a water-soluble binder, such as gelatin, under controlled conditions. After the silver halide grains have been formed, excess water-soluble salts should preferably be removed. The removal of the excess water-soluble salts may be performed with, for example, a noodle washing process, in which the gelatin solution containing the silver halide grains is gelatinized, the gelatinized material is slit into a string-like shape, and the string-like material is washed with cold water for removing the water-soluble salts. Alternatively, the removal of the excess water-soluble salts may be performed with a sedimentation process, in which the gelatin is agglomerated by the addition of an inorganic salt composed of polyvalent anions (e.g., sodium sulfate), an anionic surface-active agent, an anionic polymer (e.g., a polystyrene sulfonic acid sodium salt), a gelatin derivative (e.g., an aliphatic acylated gelatin, an aromatic acylated gelatin, or an aromatic carbamoylated gelatin), or the like, and the excess salts are thereby removed. In cases where the sedimentation process is employed, the excess salts are capable of being removed quickly.

Ordinarily, the emulsion employed in the image forming method and system in accordance with the present invention should preferably be subjected to chemical sensitization and spectral sensitization.

The chemical sensitization may be performed with a chalcogen sensitization technique utilizing a sulfur compound, a selenium compound, or a tellurium compound; a noble metal sensitization technique utilizing gold, platinum, iridium, or the like; or the so-called reduction sensitization technique, in which a compound having an appropriate level of reducing properties is utilized during the formation of the grains, a reducing silver nucleus is thus introduced, and a high sensitivity is thereby obtained. The above-enumerated techniques for the chemical sensitization may be utilized alone, or two or more of the techniques may be utilized in combination.

The spectral sensitization may be conducted by use of the so-called spectral sensitizing dyes, which adsorb to the silver halide grains and sensitize the silver halide grains with respect to the absorption wavelength regions of the spectral sensitizing dyes. Examples of the spectral sensitizing dyes include a cyanine dye, melocyanine dye, a composite cyanine dye, a composite melocyanine dye, a holopolar dye, a hemicyanine dye, a styryl dye, and a hemioxonol dye. The above-enumerated spectral sensitizing dyes may be utilized alone, or two or more of the spectral sensitizing dyes may be utilized in combination. The spectral sensitizing dyes should preferably be utilized together with a supersensitizing agent.

The photosensitive silver halide may be used in a proportion ranging from 0.05g/m² to 15g/m², expressed in terms of the amount of silver. The photosensitive silver halide should preferably be used in a proportion ranging from 0.1g/m² to 8g/m², expressed in terms of the amount of silver.

Such that photographic fog may be prevented from occurring and the stability during storage may be enhanced, the silver halide emulsion employed in the image forming method and system in accordance with the present invention should preferably contain various stabilizers. Examples of the stabilizers include nitrogen-containing heterocyclic compounds, such as azaindenes, triazoles, tetrazoles, and purines; and mercapto compounds, such as mercaptotetrazoles, mercaptotriazoles, mercaptoimidazoles, and mercaptothiadiazoles. In particular, triazoles or mercapto azoles, which have an alkyl group having at least five carbon atoms or an aromatic ring as a substituent in the compounds, exhibit marked effects of preventing fog during heat development, enhancing the development characteristics of the exposed area in certain cases, and giving high discrimination. As the photographic additives for the silver halide emulsion, the additives described in Research Disclosure Nos. 17643 (December 1978), 18716 (November 1979), 307105 (November 1989), and 38957 (September 1996) are capable of being used preferably.

The addition of the anti-foggant or the stabilizer to the silver halide emulsion may be performed at any stage of the preparation of the emulsion. For example, the addition of the anti-foggant or the stabilizer to the silver halide emulsion may be performed at the stage during the preparation of the coating composition after the chemical sensitization has been finished, at the stage at which the chemical sensitization has been finished, at the stage during the chemical sensitization, at the stage prior to the chemical sensitization, at the stage prior to the desalting after the grain formation has been finished, at the stage during the grain formation, or at the stage prior to the grain formation. The addition of the anti-foggant or the stabilizer to the silver halide emulsion may be performed at one of the above-enumerated stages or at two or more of the above-enumerated stages.

The proportion of the anti-foggant or the stabilizer added may vary in accordance with the halogen composition in the silver halide emulsion and the purpose of use of the silver halide emulsion. The proportion of the anti-foggant or the stabilizer added ordinarily falls within the range of 10⁻⁶ to 10⁻¹ mol per mol of the silver halide, and should preferably fall within the range of 10⁻⁵ to 10⁻² mol per mol of the silver halide.

The photographic additives, which may be utilized for the photosensitive material in the image forming method and system in accordance with the present invention, are described in, for example, Research Disclosure Nos. 17643 (December 1978), 18716 (November 1979), and 307105 (November 1989). (Research Disclosure will hereinbelow be referred to as RD.) Relevant portions of RD are shown in the table below.

| Kind of additive | RD 17643 | RD 18716 | RD 307105 |
|---|---|---|---|
| 1. Chemical sensitizer | p.23 | p.648,right column | p.866 |
| 2. Sensitivity rising agent | | p.648,right column | |
| 3. Special sensitizer, super-sensitizing agent | pp.23-24 | p.648,right column to p.649, right column | pp.866-868 |
| 4. Brightening agent | p.24 | p.648,right column | p.868 |
| 5. Anti-foggant, stabilizer | pp.24-26 | p.649,right column | pp.868-870 |
| 6. Light absorbent, filter dye, UV absorbent | pp.25-26 | p.649,right column to p.650, left column | p.873 |
| 7. Dye image stabilizer | p.25 | p.650,left column | p.872 |
| 8. Hardener | p.26 | p.651,left column | pp.874-875 |
| 9. Binder | p.26 | p.651,left column | pp.873-874 |
| 10.Plasticizer, lubricant | p.27 | p.650,right column | p.876 |
| 11.Coating aid, surfactant | pp.26-27 | p.650,right column | pp.875-876 |
| 12. Anti-static agent | p.27 | p.650,right column | pp.876-877 |
| 13. Matting agent | | | pp.878-879 |

### Organic silver salt

The reducible silver salt, which is utilized in the image forming method and system in accordance with the present invention, will be described hereinbelow. The reducible silver salt, which is capable of being utilized in the image forming method and system in accordance with the present invention, is the silver salt, which is comparatively stable with respect to light, and which supplies the silver ion when being heated to a temperature of at least 80°C in the presence of an exposed photocatalyst (such as the latent image of the photosensitive silver halide) and a reducing agent. As such silver salts, complexes of organic or inorganic silver salts, which complexes have a complex stability constant such that the gross stability constant of the ligand with respect to the silver ion falls within the range of 4.0 to 10.0, are preferable.

Preferable organic silver salts include silver salts of organic compounds having a carboxyl group. Examples of the preferable organic silver salts include silver salts of aliphatic carboxylic acids and silver salts of aromatic carboxylic acids. Examples of preferable silver salts of aliphatic carboxylic acids include silver behenate, silver stearate, silver oleate, silver laurate, silver caprate, silver myristate, silver palmitate, silver maleate, silver fumarate, silver tartrate, silver furoate, silver linoleate, silver butyrate, silver camphorate, and a mixture of two or more of the above-enumerated silver salts. Silver salts capable of being substituted by a halogen atom or a hydroxyl group may also be utilized. Examples of preferable silver salts of aromatic carboxylic acids and other carboxyl group-containing compounds include silver benzoate, substituted benzoic acid silver salts (e.g., a 3,5-dihydroxy benzoic acid silver salt, an o-methyl benzoic acid silver salt, m-methyl benzoic acid silver salt, p-methyl benzoic acid silver salt, a 2,4-dichloro benzoic acid silver salt, an acetamido benzoic acid silver salt, and a p-phenyl benzoic acid silver salt), silver gallate, silver tannate, silver phthalate, silver terephthalate, silver salicylate, a phenyl acetic acid silver salt, a pyromellitic acid silver salt, a silver salt of 3-carboxymethyl-4-methyl-4-thiazoline-2-thion or a silver salt described in U.S. Patent No. 3,785,830, and a silver salt of a thioether group-containing aliphatic carboxylic acid described in U.S. Patent No. 3,330,663.

Examples of preferable silver salts also include silver salts of mercapto- or thion-substituted compounds having a heterocyclic nucleus containing five or six ring atoms, in which at least one of the ring atoms is nitrogen, and the other ring atoms contain carbon atoms and at most two hetero-atoms selected from the group consisting of oxygen, sulfur, and nitrogen. Typical examples of preferable heterocyclic nucleuses triazole, oxazole, thiazole, thiazoline, thiazole, imidazoline, imidazole, diazole, pyridine, and triazine. Examples of preferable heterocyclic compounds include a silver salt of 3-mercapto-4-phenyl-1,2,4-triazole, a silver salt of 2-mercapto benzimidazole, a silver salt of 2-mercapto-5-amino thiadiazole, a silver salt of 2- (2-ethyl-glycolamido) benzothiazole, a silver salt of 5-carboxyl-1-methyl-2-phenyl-4-thio pyridine, a silver salt of mercapto triazine, a silver salt of 2-mercap to benzoxazole, a silver salt of a 1-mercapto-5-alkyl substituted tetrazole, a silver salt of 1-mercapto-5-phenyl tetrazole described in Japanese Unexamined Patent Publication No. 1(1989)-100177, a silver salt described in U.S. Patent No. 4,123,274, a silver salt of a 1,2,4-mercapto thiazole derivative such as a silver salt of 3-amino-5-benzylthio-1,2,4-triazole, a silver salt of a thion compound, such as a silver salt of 3-(2-carboxyethyl)-4-methyl-4-thiazoline-2-thion described in U.S. Patent No. 3,201,678, and other compounds. Examples of silver salts of mercapto- or thion-substituted compounds having no heterocyclic nucleus include a silver salt of thioglycolic acid, such as a silver salt of an S-alkylthio glycolic acid (in which the alkyl group contains 12 to 22 carbon atoms), a silver salt of a dithio carboxylic acid, such as a silver salt of dithio acetic acid, and a silver salt of a thioamide.

In the image forming method and system in accordance with the present invention, it is particularly preferable to use a silver salt of a compound containing an imino group. Examples of preferable silver salts of compounds containing an imino group include a silver salt of benzothiazole, a derivative of a silver salt of benzothiazole, a silver salt of benzotriazole, such as a silver salt of methyl benzotriazole, a silver salt of a halogen-substituted benzotriazole, such as a silver salt of 5-chlorobenzotriazole, a silver salt of 1,2,4-triazole, a silver salt of 1H-tetrazole described in U.S. Patent No. 4,220,709, a silver salt of imidazole, a silver salt of an imidazole derivative, a silver salt of a 3-amino-1,2,4-triazole described in Japanese Unexamined Patent Publication No. 53(1978)-116144, a silver salt of a substituted or unsubstituted benzotriazole, and a silver salt of a benzotriazole described in U.S. Patent No. 4,500,626, columns 52 to 53. Silver acetylide described in U.S. Patent No. 4,775,613 is also useful.

As the organic silver salt, two or more of organic silver salts may be used in combination. The organic silver salt described above may be used in a proportion falling within the range of 0.01 to 10 mols per mol of the photosensitive silver halide, and should preferably be used in a proportion falling within the range of 0.01 to 1 mol per mol of the photosensitive silver halide.

The total coating weight of the photosensitive silver halide emulsion and the organic silver salt may fall within the range of 0.1g/m² to 20g/m², expressed in terms of the amount of silver, and should preferably fall within the range of 1g/m² to 10g/m², expressed in terms of the amount of silver. The silver supplying substances may constitute approximately 5% by mass to approximately 70% by mass of the image forming layer.

The organic silver salt employed in the image forming method and system in accordance with the present invention may be prepared by allowing a solution or a suspension of the organic compound described above or an alkali metal salt (e.g., a Na salt, a K salt, or a Li salt) of the organic compound described above to react with silver nitrate in enclosing means for mixing liquids. As the technique for the preparation, a technique described in Japanese Unexamined Patent Publication No. 1(1989)-100177 may be utilized. Specifically, techniques described in Japanese Patent Application No. 11(1999)-203413, and Japanese Patent Application No. 11(1999)-104187, paragraph Nos. 0019 to 0021, may be utilized.

It is also possible to utilize a technique, in which a solution of the organic compound and a solution of silver nitrate are added simultaneously into a solution of a dispersing agent.

In the image forming method and system in accordance with the present invention, during the preparation of the organic silver salt, a water-soluble dispersing agent may be added to the aqueous solution of silver nitrate, the solution of the organic compound or the alkali metal salt of the organic compound, or the reaction mixture. Examples of the kind of the dispersing agent and the proportion of the dispersing agent added are described in, for example, Japanese Patent Application No. 11(1999)-115457, paragraph No. 0052.

As the technique for forming the silver salt of the organic compound, a technique described in Japanese Unexamined Patent Publication No. 1(1989)-100177, wherein the formation is performed by controlling the pH value, should preferably be utilized.

The organic silver salt employed in the image forming method and system in accordance with the present invention should preferably be the organic silver salt having been subjected to the desalting. No limitation is imposed upon the desalting technique, and one of various known techniques may be utilized. The desalting should preferably be performed with a known filtration technique, such as centrifugal filtration, suction filtration, ultra-filtration, or floc formation with an agglomeration technique and washing with water. As for the ultra-filtration technique, a technique described in Japanese Patent Application No. 11(1999)-115457 may be utilized.

In the image forming method and system in accordance with the present invention, such that a dispersion of solid grains of the organic silver salt having a small grain size and free from agglomeration may be obtained, a dispersion technique should preferably be utilized, wherein an aqueous dispersion, which contains the organic silver salt acting as the image forming medium and is substantially free from a photosensitive silver salt, is converted into a high-speed stream and is thereafter subjected to pressure drop. As the dispersion technique, a technique described in Japanese Patent Application No. 11(1999)-104187, paragraph Nos. 0027 to 0038, may be utilized.

No limitation is imposed upon the shape and the grain size of the organic silver salt employed in the image forming method and system in accordance with the present invention. However, as for the mean grain size, the dispersion of the solid fine grains having a mean grain size falling within the range of 0.001 µ m to 5.0µ m are preferable. The mean grain size should more preferably fall within the range of 0.005µ m to 1.0µ m.

The grain size distribution of the dispersion of the solid fine grains of the organic silver salt employed in the image forming method and system in accordance with the present invention should preferably be a monodisperse distribution. Specifically, the percentage of the value, which is calculated by dividing a standard deviation of a volume load mean diameter by the volume load mean diameter, (i.e., the coefficient of variation) should preferably be at most 80%, should more preferably be at most 50%, and should most preferably be at most 30%.

The dispersion of the solid fine grains of the organic silver salt employed in the image forming method and system in accordance with the present invention comprises at least the organic silver salt and water. No limitation is imposed upon the ratio of the organic silver salt to water. However, the proportion of the organic silver salt with respect to the entire dispersion should preferably fall within the range of 5% by mass to 50% by mass, and should more preferably fall within the range of 10% by mass to 30% by mass. It is preferable to use the dispersing agent described above. However, the proportion of the dispersing agent should preferably be as small as possible such that the grain size may be minimized. The proportion of the dispersing agent should preferably fall within the range of 0.5% by mass to 30% by mass with respect to the organic silver salt, and should more preferably fall within the range of 1% by mass to 15% by mass with respect to the organic silver salt.

In the image forming method and system in accordance with the present invention, a metal ion selected from the group consisting of Ca, Mg, and Zn may be added to the non-photosensitive organic silver salt.

The photosensitive silver halide and/or the reducible silver salt employed in the image forming method and system in accordance with the present invention may be protected even further by a known anti-foggant against additional fog formation and may be stabilized by a known stabilizer or a known stabilizer precursor against a sensitivity decrease during storage. Examples of appropriate anti-foggants, stabilizers, and stabilizer precursors, which may be used alone or in combination, include thiazonium salts described in U.S. Patent Nos. 2,131,038 and 2,694,716, azaindenes described in U.S. Patent Nos. 2,886,437 and 2,444,605, a mercury salt described in U.S. Patent No. 2,728,663, urazol described in U.S. Patent No. 3,287,135, sulfocatechol described in U.S. Patent No. 3,235,652, oxime, nitron, and nitroindazole described in British Patent No. 623,448, a polyvalent metal salt described in U.S. Patent No. 2,839,405, a thiuronium salt described in U.S. Patent No. 3,220,839, a palladium salt, a platinum salt, and a gold salt described in U.S. Patent Nos. 2,566,263 and 2,597,915, halogen-substituted organic compounds described in U.S. Patent Nos. 4,108,665 and 4,442,202, triazines described in U.S. Patent Nos. 4,128,557, 4,137,079, 4,138,365, and 4,459,350, a phosphorus compound described in U.S. Patent No. 4,411,985, and organic halides described in Japanese Unexamined Patent Publication Nos. 50(1975)-119624, 54(1979)-58022, 56(1981)-70543, 56(1981)-99335, 61(1986)-129642, 62(1987)-129845, 6 (1994) -208191, 7 (1995) -5621, and 8 (1996)-15809, and U.S. Patent Nos. 5,340,712, 5,369,000, and 5,464,737.

### Color developing agent

The heat-developable photosensitive material employed in the image forming method and system in accordance with the present invention contains the color developing agent in the same plane as the plane of the photosensitive silver halide and the reducible silver salt on the support.

Examples of the color developing agents include p-phenylenediamine and p-aminophenols. Examples of preferable color developing agents include sulfonamidophenols described in Japanese Unexamined Patent Publication Nos. 8(1996)-110608, 8(1996)-122994, 9(1997)-15806, and 9(1997)-146248, sulfonylhydrazines described in European Patent Application No. 545,491A, and Japanese Unexamined Patent Publication Nos. 8(1996)-166664 and 8(1996)-227131, a carbamoylhydrazine described in Japanese Unexamined Patent Publication No. 8(1996)-286340, sulfonylhydrazones described in Japanese Unexamined Patent Publication Nos. 8(1996)-202002, 10(1998)-186564, and 10(1998)-239793, a carbamoylhydrazone described in Japanese Unexamined Patent Publication No. 8(1996)-234390, a sulfamic acid described in Japanese Patent Publication No. 63(1988)-36487, a sulfohydrazone described in Japanese Patent Publication No. 4(1992)-20177, a 4-sulfonamidopyrazolone described in Japanese Patent Publication No. 5(1993)-48901, p-hydroxyphenylsulfamic acid described in Japanese Patent Publication No. 4(1992)-69776, a sulfamic acid, which has an alkoxy group on a benzene ring, described in Japanese Unexamined Patent Publication No. 62(1987)-227141, a hydrophobic salt, which is formed from a color developing agent having an amino group and an organic acid, described in Japanese Unexamined Patent Publication No. 3(1991)-15052, a hydrazone described in Japanese Patent Publication No. 2(1990)-15885, a ureido aniline described in Japanese Unexamined Patent Publication No. 59(1984)-111148, a sulfamoylhydrazone described in U.S. Patent No. 4,430,420, an aromatic primary amine developing agent derivative, which has a sulfonylaminocarbonyl group or an acylaminocarbonyl group, described in Japanese Patent Publication No. 3(1991)-74817, a compound, which releases an aromatic primary amine developing agent through an inverse Michael reaction, described in Japanese Unexamined Patent Publication No. 62(1987)-131253, an aromatic primary amine developing agent derivative, which has a fluorine-substituted acyl group, described in Japanese Patent Publication No. 5(1993)-33781, an aromatic primary amine developing agent derivative, which has an alkoxycarbonyl group, described in Japanese Patent Publication No. 5(1993)-33782, an oxalic acid amide type of an aromatic primary amine developing agent derivative described in Japanese Unexamined Patent Publication No. 63(1988)-8645, and a Schiff base type of an aromatic primary amine developing agent derivative described in Japanese Unexamined Patent Publication No. 63(1988)-123043. Of the above-enumerated color developing agents, the sulfonamidophenols described in Japanese Unexamined Patent PublicationNos. 8 (1996)-110608, 8(1996) -122994, 8 (1996) -146578, 9(1997)-15806, and 9(1997)-146248, the carbamoylhydrazine described in Japanese Unexamined Patent Publication No. 8(1996)-286340, and the aromatic primary amine developing agent derivatives described in Japanese Patent Publication No. 3(1991)-74817 and Japanese Unexamined Patent Publication No. 62(1987)-131253 are particularly preferable.

In the image forming method and system in accordance with the present invention, the proportion of the developing agent added may vary over a wide range. However, the quantity of the developing agent should preferably fall within the range of 0.01 to 100 times as large as the molar quantity of the coupler compound, and should more preferably fall within the range of 0.1 to 10 times as large as the molar quantity of the coupler compound.

The developing agent may be added to the coating composition in any of various forms, such as a solution, powder, a dispersion of solid fine grains, an emulsified form, and an oil-protected dispersion. The operation for dispersing the solid fine grains may be performed with one of various known means, such as a ball mill, an oscillating ball mill, a sand grinder mill, a colloid mill, a jet mill, and a roller mill. During the operation for dispersing the solid fine grains, a dispersing agent, such as a surface-active agent, a water-soluble polymer, or an oligomer, may be utilized.

### Coupler

The heat-developable photosensitive material employed in the image forming method and system in accordance with the present invention contains the coupler compound in the same plane as the plane of the photosensitive silver halide and the reducible silver salt on the support. The coupler compound employed in the image forming method and system in accordance with the present invention is the compound, which is referred to as the known coupler in the photographic field. A two-equivalent or four-equivalent coupler is used as the coupler compound. Examples of the photographic couplers include couplers having the function described in "Conventional Color Photographic Organic Compounds" by Nobuo Furudate, transactions of Japanese Society of Organic Synthetic Chemistry, Vol. 41, p. 439, 1983; and couplers described in detail in Research Disclosure No. 37038 (February 1995), pp. 80-85 and pp. 87-89.

Specifically, examples of yellow image forming couplers include a pivaloyl acetamide type, a benzoyl acetamide type, a malonic acid diester type, a malonic acid diamide type, dibenzoyl methane type, a benzothiazolyl acetamide type, a malonic acid ester monoamide type, a benzoxazolyl acetamide type, a benzimidazolyl acetamide type, a benzothiazolyl acetamide type, a cycloalkyl carbonyl acetamide type, an indolin-2-yl acetamide type, a quinazolin-4-on-2-yl acetamide type described in U.S. Patent No. 5,021,332. a benzo-1,2,4-thiadiazine-1,1-dioxid-3-yl acetamide type described in U.S. Patent No. 5,021,330, a coupler described in European Patent No. 421,221A, a coupler described in U.S. Patent No. 5,455,149, a coupler described in European Patent Publication No. 0,622,673, and 3-indoloyl acetamide type couplers described in European Patent Publication Nos. 0,953,871, 0,953,872, and 0,953,873.

Examples of magenta image forming couplers include a 5-pyrazolone type, a 1H-pyrazolo [1,5-a] benzimidazole type, a 1H-pyrazolo [5,1-c] [1,2,4] triazole type, a 1H-pyrazolo [1,5-b] [1,2,4] triazole type, a 1H-imidazo [1,2-b] pyrazole type, a cyanoacetophenone type, an active propene type described in PCT International Publication No. WO 93/01,523, an enamine type described in PCT International Publication No. WO 93/07,534, a 1H-imidazo [1,2-b] [1,2,4] triazole type coupler, and a coupler described in U.S. Patent No. 4,871,652.

Examples of cyan image forming couplers include a phenol type, a naphthol type, a 2,5-diphenyl imidazole type described in European Patent Publication No. 0,249,453, a 1H-pyrrolo [1,2-b] [1,2,4] triazole type, a 1H-pyrrolo [2,1-c] [1,2,4] triazole type, pyrrole types described in Japanese Unexamined Patent Publication Nos. 4(1992) -188137 and 4 (1992) -190347, a 3-hydroxy pyridine type described in Japanese Unexamined Patent Publication No. 1(1989)-315736, a pyrrolo pyrazole type described in U.S. Patent No. 5,164,289, a pyrrolo imidazole type described in Japanese Unexamined Patent Publication No. 4(1992)-174429, a pyrazolo pyrimidine type described in U.S. Patent No. 4,950,585, a pyrrolo triazine type coupler described in Japanese Unexamined Patent Publication No.4 (1992)-204730, a coupler described in U.S. Patent No. 4,746,602, a coupler described in U.S. Patent No. 5,104,783, a coupler described in U.S. Patent No. 5,162,196, and a coupler described in European Patent No. 0,556,700.

The coupler compound, which is employed in the image forming method and system in accordance with the present invention, is capable of being synthesized easily in accordance with the procedures, which are known in the photographic field and are described in the above-enumerated patent specifications concerning the couplers.

The coupler compound may be utilized by being dissolved in water or an appropriate organic solvent, e.g., an alcohol (such as methanol, ethanol, propanol, or fluorinated alcohol), a ketone (such as acetone or methyl ethyl ketone), dimethyl formamide, dimethyl sulfoxide, or methyl cellosolve.

The hydrophobic additives, such as the coupler and the color developing agent, may be introduced into the layer of the photosensitive material in accordance with a known procedure described in, for example, U.S. Patent No. 2,322,027. In such cases, a high-boiling temperature organic solvent described in, for example, U.S. Patent No. 4,555,470, 4,536,466, 4,536,467, 4,587,206, 4,555,476, or 4,599,296, or Japanese Patent Publication No. 3(1991)-62256 may be utilized. When necessary, the high-boiling temperature organic solvent may be used in combination with a low-boiling temperature organic solvent having a boiling temperature falling within the range of 50°C to 160°C. Two or more dye-donating couplers may be utilized in combination. Also, as for the high-boiling temperature organic solvent, or the like, two or more solvents may be utilized in combination.

The proportion of the high-boiling temperature organic solvent may be at most 10g per gram of the hydrophobic additives, should preferably be at most 5g per gram of the hydrophobic additives, and should more preferably be at most 1g per gram of the hydrophobic additives. Also, the proportion of the high-boiling temperature organic solvent may be at most 1cc per gram of the binder, should preferably be at most 0.5cc per gram of the binder, and should more preferably be at most 0.3cc per gram of the binder.

Also, a dispersing technique utilizing a polymer described in, for example, Japanese Patent Publication No. 51(1976)-39853 or Japanese Unexamined Patent Publication No. 51(1976)-59943, or a technique for the addition in the form of a fine grain dispersion described in, for example, Japanese Unexamined Patent Publication No. 62(1987)-30242, may be utilized.

In the cases of a compound substantially insoluble in water, besides the techniques described above, a technique for the addition in the form of a fine grain dispersion in a binder may be utilized.

In cases where the hydrophobic compound is to be dispersed in a hydrophilic colloid, various surface-active agents may be utilized. For example, surface-active agents described in Japanese Unexamined Patent Publication No. 59(1984)-157636, pp. 37-38, and surface-active agents mentioned above as the surfactants described in Research Disclosure may be utilized. Phosphoric acid ester types of surface-active agents described in, for example, Japanese Unexamined Patent Publication Nos. 7(1995)-56267 and 7(1995)-228589, and West Germany Patent Publication No. 1,932,299A may also be utilized.

Further, the coupler compound may be utilized in the form of a dispersion of powder of the coupler compound in water. In such cases, the dispersion may be prepared in accordance with known solid dispersion techniques and by use of a media dispersing machine, such as a ball mill, a colloid mill, or a sand grinder mill, a "mantongorine," a micro-fluidizer, or a homogenizer, such as an ultrasonic homogenizer.

The coupler compound may be added to any layer, which is in the same plane as the plane of the photosensitive silver halide and the reducible silver salt on the support. However, the coupler compound should preferably be added to the layer containing the silver halide or an adjacent layer.

The proportion of the coupler compound should preferably fall within the range of 0.2 to 200 mmol per mol of silver, should more preferably fall within the range of 0.3 to 100 mmol per mol of silver, and should most preferably fall within the range of 0.5 to 30 mmol per mol of silver. One kind of the coupler compound may be used alone, or two or more coupler compounds may be used in combination.

In the image forming method and system in accordance with the present invention, a functional coupler described below may be used. As a coupler acting such that the color forming dye has an appropriate level of diffusion characteristics, a coupler described in, for example, U.S. Patent No. 4,336,237, British Patent No. 2,125,570, European Patent No. 96,873B, or German Patent No. 3,234,533 is preferable.

Examples of couplers for compensation for unnecessary absorption of the color forming dye include a yellow colored cyan coupler described in European Patent No. 456,257A1, a yellow colored magenta coupler described in European Patent No. 456.257A1, a magenta colored cyan coupler described in U.S. Patent No. 4,833,069, a coupler described in U.S. Patent No. 4,837,136 (2), and a color-less masking coupler represented by Formula (A) in Claim 1 of PCT International Publication No. WO 92/11,575 (particularly, compounds exemplified on pages 36 to 45).

Examples of compounds (including couplers) capable of undergoing reactions with oxidation products of the developing agents and releasing photographically useful compound residues include the compounds described below.

Development inhibitor-releasing compounds: compounds represented by Formulas (I) to (IV) in European Patent No. 378,236A1, p.11, a compound represented by Formula (I) in European Patent No. 436,938A2, p. 7, a compound represented by Formula (1) in European Patent No. 568,037A, and compounds represented by Formulas (I), (II), and (III) in European Patent No. 440,195A2, pp. 5-6.

Bleach accelerator-releasing compounds: compounds represented by Formulas (I) and (I') in European Patent No. 310,125A2, p. 5, and a compound represented by Formula (I) in Claim 1 of Japanese Unexamined Patent Publication No. 6(1994)-59411.

Ligand-releasingcompound: a compound represented by LIG-X in Claim 1 of U.S. Patent No. 4,555,478.

Leuco dye-releasing compounds: compounds 1 to 6 described in U.S. Patent No. 4,749,641, columns 3-8.

Fluorescent dye-releasing compound: a compound represented by COUP-DYE in Claim 1 of U.S. Patent No. 4,774,181.

Development accelerator- or fogging agent-releasing compounds: compounds represented by Formulas (1), (2), and (3) in U.S. Patent No. 4,656,123, column 3, and ExZK-2 described in European Patent No. 450,637A2, p. 75, lines 36-38.

Compounds capable of releasing groups, which act as dyes after being separated: a compound represented by Formula (I) in Claim 1 of U.S. Patent No. 4,857,447, a compound represented by Formula (1) in Japanese Unexamined Patent Publication No. 5(1993)-307248, compounds represented by Formulas (I), (II), and (III) in European Patent No. 440,195A2, pp. 5-6, a compound-ligand releasing compound represented by Formula (I) in Claim 1 of Japanese Unexamined Patent Publication No. 6(1994)-59411, and a compound represented by LIG-X in Claim 1 of U.S. Patent No. 4,555,478.

The quantity of the functional coupler may fall within the range of 0.05 to 10 times as large as the molar quantity of the coupler contributing to the color formation described above, and should preferably fall within the range of 0.1 to 5 times as large as the molar quantity of the coupler contributing to the color formation described above.

### Base precursor

The photosensitive material employed in the image forming method and system in accordance with the present invention may contain a nucleophilic agent or a nucleophilic agent precursor such that the reactions, such as the coupling reaction between the oxidation product of the developing agent and the coupler, and the separating reaction of a block group from the dye precursor formed through coupling, may be accelerated. From the view point of the raw stock storage characteristics of the photosensitive material, the nucleophilic agent precursor should preferably be used.

Various nucleophilic agent precursors have been known. A precursor capable of forming (or releasing) a base with heating is advantageous in that it releases the nucleophilic agent during the heat development. A typical example of the base precursor capable of forming a base with heating is a thermal decomposition type (a decarboxylation type) of base precursor, which comprises a salt of a carboxylic acid and a base. When the decarboxylation type of the base precursor is heated, the carboxyl group of the carboxylic acid underdoes the decarboxylation reaction, and the base is released. As the carboxylic acid, sulfonyl acetic acid or propiolic acid, which easily undergoes decarboxylation, is used. Sulfonyl acetic acid and propiolic acid should preferably have a group having aromatic properties accelerating the decarboxylation (such as an aryl group or an unsaturated heterocyclic group) as a substituent. A base precursor of the sulfonyl acetic acid salt is described in, for example, Japanese Unexamined Patent Publication No. 59(1984)-168441. A base precursor of the propiolic acid salt is described in, for example, Japanese Unexamined Patent Publication No. 59(1984)-180537. The base side constituent of the decarboxylation type of the base precursor should preferably be an organic base, and should more preferably be amidine, guanidine, an amidine derivative, or a guanidine derivative. The organic base should preferably be a diacid base, a triacid base, or a tetraacid base, should more preferably be the diacid base, and should most preferably be the diacid base of an amidine derivative or a guanidine derivative.

A precursor of the diacid base, the triacid base, or the tetraacid base of the amidine derivative is described in, for example, Japanese Patent Publication No. 7(1995)-59545. A precursor of the diacid base, the triacid base, or the tetraacid base of the guanidine derivative is described in, for example, Japanese Patent Publication No. 8(1996)-10321. The diacid base of the amidine derivative or the guanidine derivative comprises (A) two amidine moieties or two guanidine moieties, (B) a substituent at the amidine moiety or the guanidine moiety, and (C) a bivalent linking group, which links the two amidine moieties or the two guanidine moieties. Examples of the substituents described in (B) include an alkyl group (including a cycloalkyl group), an alkenyl group, an alkynyl group, an aralkyl group, and a heterocyclic ring residue. Two or more substituents may combine with one another to form a nitrogen-containing heterocyclic ring. The linking group described in (C) should preferably be an alkylene group or a phenylene group. Examples of preferable precursors of the diacid bases of the amidine derivatives or the guanidine derivatives are BP-1 to BP-41 described in Japanese Unexamined Patent Publication No. 11(1999)-231457, pp. 19-26. Salts of p-(phenylsulfonyl)-phenylsulfonyl acetic acid, such as BP-9, BP-32, BP-35, BP-40, and BP-41, are particularly preferable.

The quantity of the base precursor should preferably fall within the range of 0.1 to 10 times as large as the molar quantity of the developing agent, and should more preferably fall within the range of 0.3 to 3 times as large as the molar quantity of the developing agent. The base precursor should preferably be dispersed in the form of solid fine grains by use of a ball mill, a sand grinder mill, or the like.

### Thermal solvent

In the image forming method and system in accordance with the present invention, a thermal solvent should preferably be utilized. The term "thermal solvent" as used herein means the organic substance, which is a solid at the ambient temperature, and which exhibits a mixed melting temperature together with a different constituent at the heat treatment temperature used or at a temperature lower than the heat treatment temperature and acts such that, during the heat development, the organic substance becomes liquefied and accelerates the heat development and heat transfer of the dye. As the thermal solvent, a compound capable of being acting as the solvent for the developing agent, a compound having a high dielectric constant and capable of accelerating the physical development of silver, and a compound having compatibility with the binder and having the effects of swelling the binder are useful.

Examples of the thermal solvents, which may be used in the image forming method and system in accordance with the present invention, include compounds described in U.S. Patent Nos. 3,347,675, 3,667,959, 3,438,776, and 3,666,477, Research Disclosure No. 17,643, and Japanese Unexamined Patent Publication Nos. 51(1976)-19525, 53(1978)-24829, 53(1978)-60223, 58(1983)-118640, 58(1983)-198038, 59(1984)-229556, 59(1984)-68730, 59(1984)-84236, 60(1985)-191251, 60(1985)-232547, 60(1985)-14241, 61(1986)-52643, 62(1987)-78554, 62(1987)-42153, 62(1987)-44737, 63(1988)-53548, 63(1988)-161446, 1(1989)-224751, 2(1990)-863, 2(1990)-120739, 2(1990)-123354, and 4(1992)-289856. Specifically, examples of preferable thermal solvents include urea, a urea derivative (e.g., dimethylurea or phenylurea), an amide derivative (e.g., acetamide, stearylamide, p-toluamide, or p-propanoyloxyethoxy-benzamide), a sulfonamide derivative (e.g., p-toluenesulfonamide), and a polyhydric alcohol (e.g., 1,6-hexanediol, pentaerythritol, D-sorbitol, or polyethylene glycol).

### Binder

In the heat-developable photosensitive material employed in the image forming method and system in accordance with the present invention, a binder is used in the photosensitive layer, a colored layer, and the non-photosensitive layers, such as a protective layer and an intermediate layer. The binder may be selected arbitrarily from known natural or synthetic resins, e.g., gelatin, polyvinyl acetals, polyvinyl chlorides, polyvinyl acetates, cellulose acetate, polyolefins, polyesters, polystyrenes, polyacrylonitriles, polycarbonates, and SBR latex having been purified with ultra-filtration (UF). Examples of the binders also include copolymers and terpolymers. When necessary, two or more of the polymers may be used in combination. The polymer is used in an amount sufficient for retaining the constituents therein. Specifically, the polymer is used in an amount falling within a range efficient for functioning as the binder. The efficient range of the amount of the binder may be determined appropriately by experts in the art.

As the binder for the photosensitive material, a hydrophilic binder is preferable. Examples of the hydrophilic binders are described in Research Disclosure described above, and Japanese Unexamined Patent Publication No. 64(1989)-13546, pp. 71-75. Specifically, examples of the binders include transparent or semitransparent hydrophilic binders, e.g., a protein derivative, such as gelatin or a gelatin derivative; a natural compound, e.g. a polysaccharide, such as a cellulose derivative, starch, gum arabic, dextran, or pullulan; and a synthetic high-molecular weight compound, such as a polyvinyl alcohol, a modified polyvinyl alcohol, a polyvinyl pyrrolidone, or a polyacrylamide. Among the above-enumerated binders, gelatin and a combination of gelatin with a different water-soluble binder (e.g., a polyvinyl alcohol, a modified polyvinyl alcohol, a polyacrylamide, or a cellulose derivative) are preferable. The coating weight of the binder may fall within the range of 1g/m² to 25g/m², should preferably fall within the range of 3g/m² to 20g/m², and should more preferably fall within the range of 5g/m² to 15g/m². The proportion of gelatin with respect to the binder may fall within the range of 50% to 100%, and should preferably fall within the range of 70% to 100%.

### Layer constitution

Ordinarily, the photosensitive material comprises at least three kinds of photosensitive layers having different color sensitivities. Each of the photosensitive layers contains at least one silver halide emulsion layer. In a typical example, each of the photosensitive layers comprises a plurality of silver halide emulsion layers having a substantially identical color sensitivity and different photographic sensitivities. In such cases, silver halide grains having a large grain projected diameter should preferably have a shape such that the aspect ratio, which is calculated by dividing the grain projected diameter by the grain thickness, is high. Each of the photosensitive layers is a unit photosensitive layer having color sensitivity with respect to blue light, green light, or red light. In a multi-layer silver halide photosensitive color photographic material, ordinarily, the unit photosensitive layers are located in the order of a red-sensitive layer, a green-sensitive layer, and a blue-sensitive layer from the support side. However, in accordance with the purposes, the order of the layer location may be reversed. Also, a different photosensitive layer may be interposed within an identical color sensitive layer. The total layer thickness of the photosensitive layers ordinarily falls within the range of 2µ m to 40µ m, and should preferably fall within the range of 5µ m to 25µ m.

The plurality of the silver halide emulsion layers constituting each unit photosensitive layer should preferably be located such that the photographic sensitivity becomes successively low toward the support. Specifically, as described in, for example, German Patent No. 1,121,470 or British Patent No. 923,045, a high-sensitivity emulsion layer and a low-sensitivity emulsion layer may be located such that the photographic sensitivity becomes successively low toward the support. Alternatively, a low-sensitivity emulsion layer may be located on the side remote from the support, and a high-sensitivity emulsion layer may be located on the side close to the support, as described in, for example, Japanese Unexamined Patent Publication Nos. 57(1982)-112751, 62(1987)-200350, 62(1987)-206541, and 62(1987)-206543.

As a specific example, the photosensitive layers may be located in the order of a low-sensitivity blue-sensitive layer (BL), a high-sensitivity blue-sensitive layer (BH), a high-sensitivity green-sensitive layer (GH), a low-sensitivity green-sensitive layer (GL), a high-sensitivity red-sensitive layer (RH), and a low-sensitivity red-sensitive layer (RL) from the side remotest from the support. Alternatively, the photosensitive layers may be located in the order of BH, BL, GL, GH, RH, and RL from the side remotest from the support. As another alternative, the photosensitive layers may be located in the order of BH, BL, GH, GL, RL, and RH from the side remotest from the support.

As a further alternative, as described in, for example, Japanese Patent Publication No. 55(1980)-34932, the photosensitive layers may be located in the order of a blue-sensitive layer, GH, RH, GL, and RL from the side remotest from the support. As a still further alternative, as described in, for example, Japanese Unexamined Patent Publication Nos. 56(1981)-25738 and 62(1987)-63936, the photosensitive layers may be located in the order of a blue-sensitive layer, GL, RL, GH, and RH from the side remotest from the support.

Also, as described in, for example, Japanese Patent Publication No. 49(1974)-15495, three layers having different photographic sensitivities may be located such that the photographic sensitivity becomes successively low toward the support, specifically such that a silver halide emulsion layer having the highest photographic sensitivity is located as a top layer, a silver halide emulsion layer having a photographic sensitivity lower than that of the top layer is located as an intermediate layer, and a silver halide emulsion layer having a photographic sensitivity lower than that of the intermediate layer is located as a bottom layer. In cases where the photosensitive material is thus constituted of the three layers having different photographic sensitivities, as described in, for example, Japanese Unexamined Patent Publication No. 59(1984)-202464, emulsion layers may be located within an identical color sensitive layer in the order of a medium-sensitivity emulsion layer, a high-sensitivity emulsion layer, and a low-sensitivity emulsion layer from the side remote from the support.

Alternatively, the emulsion layers may be located in the order of a high-sensitivity emulsion layer, a low-sensitivity emulsion layer, and a medium-sensitivity emulsion layer. As another alternative, the emulsion layers may be located in the order of a low-sensitivity emulsion layer, a medium-sensitivity emulsion layer, and a high-sensitivity emulsion layer. In cases where the emulsion layers are constituted of four or more layers, the layer location may be altered in the manner described above. In order for color reproducibility to be enhanced, an interlayer effect donor layer (CL), which has a spectral sensitivity distribution different from the spectral sensitivity distributions of principal photosensitive layers, such as BL, GL, and RL, should preferably be located at a position adjacent to or close to the principal photosensitive layers. Such techniques are described in, for example, U.S. Patent Nos. 4,663,271, 4,705,744, and 4,707,436, and Japanese Unexamined Patent Publication Nos. 62(1987)-160448 and 63(1988)-89850.

In the image forming method and system in accordance with the present invention, the silver halide, the dye-donating coupler, and the color developing agent (or its precursor) may be contained in an identical layer. However, the silver halide, the dye-donating coupler, and the color developing agent (or its precursor) may be contained in different layers, such that the reaction is capable of occurring.

The relationship between the spectral sensitivity and the coupler hue of each layer may be set arbitrarily. Ordinarily, a cyan coupler is used in the red- sensitive layer, a magenta coupler is used in the green-sensitive layer, and a yellow coupler is used in the blue-sensitive layer.

### Decolorizable dye

In the image forming method and system in accordance with the present invention, as colored layers in which dyes capable of being decolorized with the processing are used, a yellow color filter layer, a magenta color filter layer, and an anti-halation layer may be used. For example, in cases where the photosensitive layers are located in the order of the red-sensitive layer, the green-sensitive layer, and the blue-sensitive layer from the side closest to the support, the yellow color filter layer may be located between the blue-sensitive layer and the green-sensitive layer, the magenta color filter layer may be located between the green-sensitive layer and the red-sensitive layer, and a cyan color layer, a blue color layer, or a black color layer (the anti-halation layer) may be located between the red-sensitive layer and the support. Each of the colored layers may be in direct contact with the emulsion layer, or may be in contact with the emulsion layer via an intermediate layer constituted of gelatin, or the like. The dye may be used in a proportion such that the transmission density of each layer with respect to blue light, green light, or red light may fall within the range of 0.03 to 3.0, and should preferably fall within the range of 0.1 to 1.0. Specifically, the dye may be used in a proportion ranging from 0.005 to 2.0 mmol/m², depending upon ε and the molecular weight of the dye, and should preferably be used in a proportion ranging from 0.05 to 1.0 mmol/m².

The dyes in the yellow color filter layer and the anti-halation layer are decolorized or removed at the time of the development. Specifically, the amount of each dye remaining after the processing decreases to an amount less than 1/3 of the amount immediately prior to the coating, and should preferably decrease to an amount less than 1/10 of the amount immediately prior to the coating.

In the photosensitive material employed in the image forming method and system in accordance with the present invention, two or more dyes may be mixed and used in one colored layer. For example, a combination of a magenta dye and a cyan dye, a combination of a yellow dye and a cyan dye, or a combination of a yellow dye, a magenta dye, and a cyan dye may be used in the anti-halation layer.

Specifically, it is possible to use a dye described in European Patent Appln. Serial No. 549,489A, and dyes of ExF2 to 6 described in Japanese Unexamined Patent Publication No. 7(1995)-152129. It is also possible to use a solid dispersed dye described in, for example, Japanese Patent Application No. 6(1994)-259805.

It is also possible to subject a dye to mordanting with a mordant and a binder. In such cases, as the mordant and the dye, those known in the photographic field may be used. Examples of the mordants include those described in U.S. Patent No. 4,500,626, columns 58 to 59, Japanese Unexamined Patent Publication No. 61(1986)-88256, pp. 32-41, and Japanese Unexamined Patent Publication Nos. 62(1987)-244043 and 62(1987)-244036.

A leuco dye capable of undergoing decolorization, or the like, may also be used. For example, in Japanese Unexamined Patent Publication No. 1(1989)-150132, a silver halide photosensitive material containing a leuco dye having been subjected previously to color development with a developer of an organic acid metal salt is disclosed. The complex of the leuco dye and the developer is decolorized with heat or through a reaction of an alkali agent.

As the leuco dyes, known leuco dyes may be utilized. Examples of the leuco dyes are described in, for example, "Dyes and Chemicals" by Moriga and Yoshida, 9, p. 84, Kaseihin Kogyo Kyokai; "New-Edition Dye Manual," Maruzen, p. 242, 1970; "Reports on the Progress of Appl. Chem.," 56, p. 199, 1971; "Dyes and Chemicals," 19, p. 230, Kaseihin Kogyo Kyokai, 1974; "Coloring Agents," 62, p. 288, 1989; and "Dyeing Industry," 32, 208.

As the developer, an acid clay type of developer, a phenol-formaldehyde resin, and a metal salt of an organic acid are preferable. Examples of useful metal salts of organic acids include a metal salt of salicylic acid, a metal salt of a phenol-salicylic acid-formaldehyde resin, a rhodanate, and a metal salt of a xanthate. As the metal, zinc is particularly preferable. As for oil-soluble salicylic acid zinc salts, those described in, for example, U.S. Patent Nos. 3,864,146 and 4,046,941, and Japanese Patent Publication No. 52(1977) -1327 may be used.

Also, in the image forming method and system in accordance with the present invention, various additives described later may be used.

It is also possible to use a dye, which is capable of being decolorized during the processing in the presence of a decolorizer. Examples of such dyes include cyclic ketomethylene compounds described in Japanese Unexamined Patent Publication Nos. 11(1999)-207027 and 2000-89414, a cyanine dye described in European Patent No. 911,693A1, a polymethine dye described in U.S. Patent No. 5,324,627, and a merocyanine dye described in Japanese Unexamined Patent Publication No. 2000-112058.

The decolorizable dye should preferably be added in the form of a microcrystal grain dispersion into the photosensitive material. Alternatively, the decolorizable dye may be used in the form of a dispersion of oil droplets, which have been obtained from dissolution in an oil and/or an oil-soluble polymer, in a hydrophilic binder. As a technique for preparing the dispersion in the hydrophilic binder, an emulsion dispersion technique is preferable, and a technique described in, for example, U.S. Patent No. 2,322,027 may be used. In such cases, a high-boiling temperature oil described in, for example, U.S. Patent No. 4,555,470, 4,536,466, 4,587,206, 4,555,476, or 4,599,296, or Japanese Patent Publication No. 3(1991)-62256 may be used. When necessary, the high-boiling temperature oil may be used together with a low-boiling temperature organic solvent having a boiling temperature falling within the range of 50°C to 160°C. Also, two or more high-boiling temperature oils may be used in combination. Further, an oil-soluble polymer may be used in lieu of the oil or together with the oil. Such an example is described in, for example, PCT International Publication No. WO 88/00723. The proportion of the high-boiling temperature oil and/or the polymer may fall within the range of 0.01g to 10g per gram of the dye used, and should preferably fall within the range of 0.1g to 5g per gram of the dye used.

Each of the dyes described above is decolorized during the processing in the presence of the decolorizer. Examples of the decolorizers include an alcohol or a phenol, an amine or an aniline, a sulfinic acid or its salt, sulfurous acid or its salt, thiosulfuric acid or its salt, a carboxylic acid or its salt, a hydrazine, a guanidine, an amino guanidine, an amidine, a thiol, a cyclic or chain active methylene compound, a cyclic or chain active methine compound, and anion species occurring from the above-enumerated compounds.

Examples of preferable decolorizers include hydroxylamine, a sulfinic acid, sulfurous acid, a guanidine, an amino guanidine, a heterocyclic thiol, a cyclic or chain active methylene compound, and a cyclic or chain active methine compound. Of the above-enumerated decolorizers, the guanidine and the amino guanidine are particularly preferable. The base precursor described above is also preferable.

In such cases, the concentration of the dye after being decolorized may be at most 1/3 of the original concentration, and should preferably be at most 1/5 of the original concentration. The quantity of the decolorizer may fall within the range of 0.1 to 200 times as large as the molar quantity of the dye, and should preferably fall within the range of 0.5 to 100 times as large as the molar quantity of the dye.

In the image forming method and system in accordance with the present invention, a reversibly decolorizable dye may also be used. The reversibly decolorizable dye has the characteristics such that the dye is in the colored state at a temperature lower than a decolorization starting temperature (T) and is at least partially decolorized at a temperature equal to at least T, and such that the change in color is reversible. With the technique utilizing the reversibly decolorizable dye, the temperature during the readout is set at a temperature equal to at least the decolorization temperature (T°C), and the signal-to-noise ratio during the readout is prevented from becoming low due to the concentration of the dye. The reversibly decolorizable dye may be prepared from a combination of a leuco dye, a phenolic developer, and a higher alcohol.

### Support, backing layer, processing form

As the support of the photosensitive material employed in the image forming method and system in accordance with the present invention, a transparent support capable of enduring the processing temperature is used. Ordinarily, photographic supports constituted of paper, a synthetic high-molecular weight material (film), or the like, described in, for example, "Fundamentals of Photographic Engineering-Silver Salt Photography Edition," Society of Photographic Science of Japan, Corona Co., Ltd., 1979, pp. 223-240, may be used. Examples of the materials for the supports include a polyethylene terephthalate, a polyethylene naphthalate, a polycarbonate, a polyvinyl chloride, a polystyrene, a polypropylene, and a polyimide.

Among the above-enumerated materials for the supports, a polyester containing a polyethylene naphthalate as a principal constituent is preferable. In the polyester containing the polyethylene naphthalate as the principal constituent, the content of a naphthalene dicarboxylic acid in the total dicarboxylic acid residues should preferably be at least 50 mol%, should more preferably be at least 60 mol%, and should most preferably be at least 70 mol%. The polyester described above may be a copolymer or a polymer blend.

In cases where the polyester described above is a copolymer, the copolymer may be the one obtained from copolymerization of a naphthalene dicarboxylic acid unit and an ethylene glycol unit, as well as a unit, such as a terephthalic acid unit, a bisphenol A unit, or a cyclohexane dimethanol unit. From the view point of the mechanical strength and the cost, the copolymer obtained by using the terephthalic acid unit in the copolymerization is most preferable.

In cases where the polyester described above is a polymer blend, from the view point of the compatibility, the counterpart constituent of the polymer blend may be a polyester, such as a polyethylene terephthalate (PET), a polyacrylate (PAr), a polycarbonate (PC), or a polycyclohexane dimethanol terephthalate (PCT). From the view point of the mechanical strength and the cost, the polymer blend with the PET is preferable.

In cases where a high heat resistance and good anti-curling characteristics are required of the support, one of supports described in, for example, Japanese Unexamined Patent Publication Nos. 6(1994)-41281, 6(1994)-43581, 6(1994)-51426, 6(1994)-51437, and 6(1994)-51442, Japanese Patent Application Nos. 4(1992)-251845, 4(1992)-231825, 4(1992)-253545, 4(1992)-258828, 4(1992)-240122, 4(1992)-221538, 5(1993)-21625, 5(1993)-15926, 4(1992)-331928, 5(1993)-199704, 6(1994)-13455, and 6(1994)-14666 should preferably be used as the support of the photosensitive material.

A support constituted of a styrene type of polymer principally having a syndiotactic structure is also preferable.

The thickness of the support should preferably fall within the range of 5µ m to 200µ m, and should more preferably fall within the range of 40µ m to 120µ m.

For the adhesion to the photosensitive material constituting layers, the support should preferably be subjected to surface treatment. Examples of the surface treatments include surface activating treatments, such as chemical treatment, mechanical treatment, corona discharge treatment, flame treatment, ultraviolet treatment, high-frequency treatment, glow discharge treatment, active plasma treatment, laser treatment, mixed acid treatment, and ozone oxidization treatment. Of the above-enumerated treatments, ultraviolet treatment, flame treatment, corona discharge treatment, and glow discharge treatment are preferable.

A subbing layer for the support will be described hereinbelow. The subbing layer may be constituted of a single layer or two or more layers. Examples of binders for the subbing layer include copolymers obtained by use of a monomer, which is selected from the group consisting of vinyl chloride, vinylidene chloride, butadiene, methacrylic acid, acrylic acid, itaconic acid, maleic anhydride, and the like, as a starting material. Examples of the binders for the subbing layer also include a polyethylene-imine, an epoxy resin, grafted gelatin, nitrocellulose, gelatin, a polyvinyl alcohol, and modified polymers of these compounds. Examples of compounds for swelling the support include resorcin and chlorophenol. Examples of gelatin hardening agents for the subbing layer include a chrome salt (such as chrome alum), an aldehyde (such as formaldehyde or glutaric aldehyde), an isocyanate, an active halogen compound (such as 2,4-dichloro-6-hydroxy-s-triazine), an epichlorohydrin resin, and an active vinyl sulfone compound. The subbing layer may also contain a matting agent, such as SiO₂, TiO₂, inorganic fine grains, or fine grains of a polymethyl methacrylate (0.01µm to 10µm).

From the view point of the ordinary properties of the photosensitive material, the dye used for the film dyeing should preferably be a gray dye. Also, the dye used for the film dyeing should preferably has a high heat resistance with respect to the film forming temperature range and a high compatibility with the polyester. Specifically, the dye used for the film dyeing may be prepared by mixing the dyes, which are commercially available as the dyes for polyesters, such as Diaresin (supplied by Mitsubishi Chemical Industries Ltd.) and Kayaset (supplied by Nippon Kayaku Co., Ltd.). In particular, from the view point of stability against heat, an anthraquinone dye may be mentioned. For example, a dye described in Japanese Unexamined Patent Publication No. 8(1996)-122970 is preferable.

Further, as the support, a support provided with a magnetic recording layer should preferably be utilized for recording photographing information, and the like. Examples of such supports are described in Japanese Unexamined Patent Publication Nos. 4(1992)-124645, 5(1993)-40321, 6(1994)-35092, and 6(1994)-317875.

The magnetic recording layer is formed by applying an aqueous or organic solvent type of coating composition, which has been prepared by dispersing magnetic particles in a binder, onto the support.

The magnetic particles may be the particles of ferromagnetic iron oxide (such as γ -Fe₂O₃), Co-adhered γ -Fe₂O₃, Co-adhered magnetite, Co-containing magnetite, ferromagnetic chrome dioxide, a ferromagnetic metal, a ferromagnetic alloy, a hexagonal crystal system of Ba ferrite, Sr ferrite, Pb ferrite, or Ca ferrite. The Co-adhered ferromagnetic iron oxide, such as Co-adhered γ -Fe₂O₃, is preferable. The magnetic particles may be of any shape, such as an acicular shape, a rice grain-like shape, a spherical shape, a cubic shape, or a tabular shape. The specific surface area Sbet of the magnetic particles, as measured with the BET method, should preferably be at least 20m²/g, and should more preferably be at least 30m²/g. The saturation magnetization (σ S) of the ferromagnetic material should preferably fall within the range of 3.0× 10⁴A/m to 3.0× 10⁵A/m, and should more preferably fall within the range of 4.0× 10⁴A/m to 2.5× 10⁵A/m. The ferromagnetic particles may be subjected to surface treatment with silica and/or alumina, or with an organic substance. Also, the surfaces of the magnetic particles may be treated with a silane coupling agent or a titanium coupling agent, as described in, for example, Japanese Unexamined Patent Publication No. 6(1994)-161032. Magnetic particles having the surfaces covered with an inorganic or organic substance, as described in, for example, Japanese Unexamined Patent Publication Nos. 4(1992)-259911 and 5(1993)-81652, may also be used.

In order for roll set curl to be avoided, the polyester support maybe subjected to heat treatment at a temperature falling within the range of 40°C to a value less than Tg, and preferably within the range of Tg-20°C to a value less than Tg. The heat treatment of the polyester support may be performed at a predetermined temperature falling within the temperature range described above, or may be performed while the support is being cooled. The heat treatment may be performed for a period falling within the range of 0.1 hour to 1,500 hours, and should preferably be performed for a period falling within the range of 0.5 hour to 200 hours. The support may be subjected to the heat treatment in the form of a roll or while the support taking on the form of a web is being conveyed. Also, the support may be subjected to a surface form improving process, in which electrically conductive inorganic fine grains, such as SnO₂ or Sb₂O₅, are coated onto the surface in order to impart unevenness to the surface. Further, an end of the support may be provided with a knurl, and the height of only the end may be raised slightly, such that the shape of a cutaway portion of a winding core may not be reflected upon the support. The heat treatment may be performed at any of stages, such as the stage after the support formation, the stage after the surface treatment, the stage after the application of a back coating layer (containing an anti-static agent, a lubricant, or the like), and the stage after the application of the subbing layer. The heat treatment should preferably be performed at the stage after the application of the anti-static agent.

The polyester may also contain an ultraviolet light absorber. Further, in order for light piping to be prevented, the polyester may contain the dyes or pigments, which are commercially available as the dyes or pigments for polyesters, such as Diaresin (supplied by Mitsubishi Chemical Industries Ltd.) and Kayaset (supplied by Nippon Kayaku Co., Ltd.).

As the photographic support employed in the image forming method and system in accordance with the present invention, the support described in detail in, for example, Kokaigiho. 94-6023 is particularly preferable.

The heat-developable photosensitive material employed in the image forming method and system in accordance with the present invention may be provided with the photosensitive layer, which contains the silver halide emulsion, on one side of the support, and may be provided with a backing layer, which is a non-photosensitive layer containing a hydrophilic binder, on the other side of the support. Specifically, a gelatin layer, or a binder layer, which is principally constituted of a gelatin layer, should preferably be formed on the side opposite to the photosensitive layer, as described in, for example, Japanese Unexamined Patent Publication No. 5(1993)-333471. Also, a layer provided with a polymer layer may be overlaid on the gelatin layer, as described in, for example, Japanese Unexamined Patent Publication No. 5(1993)-232625.

### (2) Image-wise exposure operation

Means for exposing the photosensitive material described above will be described hereinbelow. As in the cases of the conventional photographic film, the photosensitive material described above may be processed into the form of the photographic film through slitting and perforating processes. Therefore, with the photosensitive material described above, in the same manner as that with 135 film, or the like, the image-wise exposure operation for the photographing may be performed by use of a single-lens reflex camera, such as Nikon F4, or a lens-fitted photographic film unit described in, for example, Japanese Patent Publication No. 2(1990)-32615 or Japanese Utility Model Publication No. 3(1991)-39784.

In such cases, the photographic film may be accommodated in a film magazine (or a cartridge) and loaded in this form into the camera or the lens-fitted photographic film unit. Alternatively, in the cases of the lens-fitted photographic film unit, the photographic film may be accommodated directly in the lens-fittedphotographic film unit, as described in, for example, Dutch Patent No. 6,708,489.

The principal material constituting the magazine utilized in the image forming method and system in accordance with the present invention may be a metal or a synthetic plastic material. Also, the magazine may be constituted such that a spool is rotated, and the film is thereby fed out. Alternatively, the magazine may be constituted such that a leading end of the film is accommodated within the magazine main body, a spool shaft is rotated in the film feed-out direction, and the leading end of the film is thereby fed out through a port region of the magazine toward the exterior. The magazine s constituted in the manner described above are described in, for example, U.S. Patent Nos. 4,834,306 and 5,226,613.

Examples of preferable plastic materials for the magazine include a polystyrene, a polyethylene, a polypropylene, and a polyphenyl ether. The magazine may contain various anti-static agents. Examples of preferable anti-static agents include carbon black, metal oxide particles, and a nonionic-, anionic-, cationic-, or betaine-type surface-active agent or polymer. The magazine s containing the anti-static agents are described in, for example, Japanese Unexamined Patent Publication Nos. 1(1989)-3125371 and 1(1989)-312538. In particular, the electrical resistance at 25°C, 25% RH should preferably be at most 1,012Ω. Ordinarily, the plastic magazine is produced by use of a plastic material containing carbon black, a pigment, or the like, for imparting light blocking properties. The size of the magazine may be the current 135 size. In order for the camera size to be reduced, the diameter of the 25mm cartridge of the current 135 size may be reduced to a value of at most 22mm. The volume of the case housing of the magazine may be at most 30cm³, and should preferably be at most 25cm³. The weight of the plastic material used for the magazine and the magazine case housing should preferably fall within the range of 5g to 15g.

The photographic film employed in the image forming method and system in accordance with the present invention may be accommodated such that the raw stock film and the developed photographic film are accommodated in an identical new magazine , or such that the raw stock film and the developed photographic film are accommodated in different magazine s.

The photosensitive color photographic material employed in the image forming method and system in accordance with the present invention is capable of being used appropriately as the negative film for an advanced photo system (hereinbelow referred to as the AP system). For example, the film may be processed into the AP system format and accommodated in a special-purpose cartridge as in the cases of NEXIA Series, i.e. NEXIA-F, NEXIA-A200, NEXIA-H400, and NEXIA Zoom Master 800 (ISO 100, ISO 200, ISO 400, and ISO 800, respectively), supplied by Fuji Photo Film Co., Ltd. The cartridge film for the AP system is used by being loaded into the camera for the AP system, such as EPION Series, supplied by Fuji Photo Film Co., Ltd.

Also, the photosensitive color photographic material employed in the image forming method and system in accordance with the present invention is appropriate for the lens-fitted photographic film units, which may be represented by FUJICOLOR Utsurundesu Super Slim, supplied by Fuji Photo Film Co., Ltd. Examples of the lens-fitted photographic film units are described in, for example, Japanese Patent Publication No. 2(1990)-32615 and Japanese Utility Model Publication No. 3(1991)-39784.

The lens-fitted photographic film unit includes a unit body consisting of a plastic case formed, for example, by extrusion molding and equipped with a taking lens and a shutter. At the time of manufacturing the unit body, an unexposed color or monochrome photographic photosensitive material in sheet or roll form is loaded into the unit body in light-tight condition either directly or as housed in a container. After the photographic film has been exposed by the user, the whole unit is sent to a photofinishing laboratory for development. The photofinishing laboratory removes the photographic film from the unit, develops it and prepares photographic prints.

As described in Japanese Utility Model Publication Nos. 3(1991)-6910, and 5(1993)-31647, Japanese Unexamined Patent Publication No. 7(1995)-225454 and Japanese Utility Model Publication No. 6(1994)-43798, for example, a taking lens, finder and other optical components required for taking photographs and a shutter release button, film-winding knob and other components required for photograph-taking operations are exposed to the exterior and the unit is used as covered with cardboard or plastic which is printed with use instructions and a decorative design.

As described in Japanese Utility Model Publication No. 4(1992)-1546 and Japanese Patent Publication No. 7(1995)-1380, the lens-fitted photographic film unit covered with cardboard or plastic is marketed as further enclosed in a package made of a moisture-proof material or a moisture-absorption resistant material with absorptivity of not more than 0.1 % as measured by ASTM test method D-570. Such materials include aluminum foil laminate and sheet, and transparent or opaque plastic coated with aluminum foil or vapor-deposited with a metal. In view of the storability of the photographic film housed in the lens-fitted photographic film unit, the lens-fitted photographic film unit in the moisture-proof package should preferably be adjusted to a relative humidity at 25 °C of 40 to 70 %, more preferably 50 to 65 %. Further, as disclosed in Japanese Utility Model Publication Nos. 6(1994)-6346 and 6(1994)-8589 and U.S. Pat. No. 5,239,324, lens-fitted photographic film units covered with cardboard or plastic are available which are further imparted with underwater use and waterproof capability by housing them in a transparent waterproof case that enables shutter and film-advance operations to be performed from the outside.

As described in Japanese Patent Publication No. 7(1995)-56363, Japanese Unexamined Patent Publication No. 63(1988)-199351, Japanese Utility Model Publication Nos. 3(1991)-22746, 3(1991)-39784, 5(1993)-38353, 7(1995)-33237 and 7(1995)-50746, a plastic lens consisting of one or two spherical or aspherical lenses is used. To correct for the spherical aberration of the lens, the film-receiving surface at the rear cover in the exposure section is preferably formed as a surface bowed to be concave relative to the taking lens in the direction of film travel. As disclosed in Japanese Utility Model Publication Nos. 2(1990)-41621, 3(1991)-6910 and 3(1991)-39784, the finder can be a passage-type finder consisting of only finder windows defined in the case or, as disclosed in Japanese Patent Publication No. 7(1995)-10345, for example, can be constituted as an inverted-Galilean or Alberta finder by installing an eyepiece and object lens in the passage. Moreover, as disclosed in Japanese Unexamined Patent Publication Nos. 7(1995)-64177, 6(1994)-250282 and 7(1995)-128732, the finder can be given surface-to-surface switching capability and the exposure frame can be made switchable in response to enable either ordinary size or panorama size pictures to be taken. It is also possible in response to switching of the finder to record optically or magnetically on the film whether the exposure was made in standard, panorama or H-size. Lens-fitted photographic film units in which the focal length of the taking lens is variable and the finder field can be specified so as to enable closeup photography and telephotography are also available.

Either sheet or roll film can be used in the lens-fitted photographic film unit. Further, as disclosed in Dutch Patent No. 6,708,489 cited earlier, the film can be directly accommodated in the lens-fitted photographic film unit or, as indicated in Japanese Patent Publication No. 2(1990)-32615, can be loaded therein after being placed in a container.

When roll-type photographic film is used in the lens-fitted photographic film unit, the roll film is preferably loaded into the lens-fitted photographic film unit after being accommodated in a container. As the container for this it is advantageous to use a 135 film magazine conforming to the ISO standard, as described, for example, in Japanese Unexamined Patent Publication Nos. 54(1979)-111822 and 63(1988)-194255, U.S. Pat. Nos. 4,832,275, 4,834,306, 5,226,613, Japanese Unexamined Patent Publication Nos. 2(1990)-124564, 3(1991)-155544, 2(1990)-264248, Japanese Utility Model Publication No. 5(1993)-40508, Japanese Patent Publication Nos. 2(1990)-32615 and 7(1995)-117707, a magazine of smaller diameter than the ISO standard but loadable with ISO standard photographic film, or a uniaxial cartridge or magazine having a spool to which one end of the film is fastened such as the an APS (Advanced Photo System) cartridge disclosed in Japanese Unexamined Patent Publication Nos. 8 (1996)-211509, 8(1996)-262645 and 8(1996)-262639. A biaxial cartridge for 110-standard film as described in Japanese Utility Model Publication Nos. 4(1992)-14748 and 3(1991)-22746 can also be used. It is also possible to use a film with backing paper if necessary.

When a uniaxial cartridge or magazine having a spool to which one end of the film is fastened is used, the cartridge or magazine can be accommodated in the housing on one side of the lens-fitted photographic film unit and the film be factory prewound at the time of manufacturing the film by drawing most of the film out of the cartridge or magazine and storing the drawn-out film as wound into a roll in the housing. In this case, an exposed portion of the film drawn out upon the exposure of each frame is wound back into the cartridge or magazine by rotating the cartridge or magazine with an external winding member. Otherwise, in reverse to the foregoing, a spool separate from the cartridge or magazine having one end of the film fastened thereto can be loaded into the housing on one side of the lens - fitted photographic film unit and the cartridge or magazine be loaded into the other housing with most of the film accommodated therein. In this case, an exposed portion of the film drawn out of the cartridge or magazine upon the exposure of each frame is wound on the spool separate from the cartridge or magazine.

In the factory-prewound film system, the photographic film drawn out of the cartridge or magazine can be housed in the other housing as wound on a spool separate from the cartridge or magazine or, as described in Japanese Patent Publication No. 2(1990)-32615, it can be housed in the other housing in a hollow state. Moreover, as disclosed in Japanese Patent Publication No. 7(1995)-56564, the factory prewinding can be conducted by drawing the photographic film out of the cartridge or magazine and winding it into a roll in a darkroom, loading the cartridge or magazine and the film roll into the lens-fitted photographic film unit and closing the rear cover of the lens-fitted photographic film unit to shut out light or, as disclosed in the aforesaid Japanese Patent Publication No. 2(1990)-32615, it can be conducted by loading a cartridge or magazine housing most of the film into one housing, loading a spool separate from the cartridge or magazine having one end of the film fastened thereto into the other housing, closing the rear cover to shut out light, and winding the photographic film onto the separate spool by rotating the spool from the exterior of the lens-fitted photographic film unit.

As disclosed in Japanese Utility Model Publication Nos. 4(1992)-1546 and 7(1995)-20667, the lens-fitted photographic film unit is preferably provided with a self-cocking mechanism which charges the shutter mechanism for kicking the shutter blade by the operation of a follower sprocket engaged with the film perforations when the film is wound at each exposure, whereafter it prevents further film winding. When the shutter release button is pressed, the charged shutter mechanism is released from the charged position and kicks the shutter blade to conduct an exposure. Another film winding operation is then possible.

As disclosed in Japanese Utility Model Publication Nos. 2(1990)-34688 and 6(1994)-41227, Japanese Unexamined Patent Publication No. 7(1995)-122389 and Japanese Patent Publication No. 6(1994)-12371, the lens-fitted photographic film unit can also further be incorporated with a flash circuit board having an external switch for charging the flash circuit. In this case, a configuration can be adopted in which the activation of a synchro switch in response to the exposure operation of the shutter blade causes the flash to fire synchronously with the exposure.

On the other hand, as described in Japanese Utility Model Publication No. 4 (1992) -1546, the lens-fitted photographic film unit can be equipped with a counter for displaying the number of exposures or the remaining number of exposures and the counter can be further equipped with a mechanism which responds to the winding operation following the exposure of the last frame by prohibiting disablement of shutter charging and frame-by-frame winding. With this arrangement, the winding operation can be repeated after exposure of the last frame until the film has been advanced to its final wound-up position.

As explained in the foregoing, a camera or a lens-fitted photographic film unit can be used as the exposure means for the photosensitive material. In view of this, it would be confusing to house the photosensitive material of this invention in a container completely identical to the conventional 135 film magazine or APS cartridge. Specifically, such packaging would make it difficult to distinguish film types for use in the system and might lead to cartridges containing non-system film being mistakenly loaded into the invention system. Therefore, while an exposure means which is functionally identical to a conventional one can be used, it should preferably have a distinguishing feature. In the case of a lens-fitted photographic film unit, for example, the cardboard or plastic covering should be given a different shape than the conventional one and/or the cardboard or film should be marked with an identifier indicating the film type.

Even if the body of the lens-fitted photographic film unit is provided with a distinguishing feature in the forgoing manner, however, correct discrimination of the film type may still not be possible if the user changes the film in the lens-fitted photographic film unit. In order to ensure correct discrimination at all times, therefore, the lens-fitted photographic film unit should preferably be directly loaded with the photographic film made of the aforesaid photosensitive material, as disclosed in Dutch Patent No. 6,708,489 cited earlier, so that the user cannot easily change the film.

Known methods of exposing the photosensitive material include not only the photographic method but also such other methods such as exposure by scanning with a laser beam or the like. Since an object of this invention is to provide a development system which, owing to the simplicity of the development method, can be installed in a convenience store or the like, the explanation in this specification is directed to the development of photographic film exposed with a camera or the like. However, the technical concept of the invention is not limited in this respect and also encompasses exposure other than photographic exposure.

Besides the exposure operation conducted with the photographing of the object image by use of the camera, or the like, a patch for development confirmation may be exposed during the production of the photographic film comprising the photosensitive material employed in the image forming method and system in accordance with the present invention. The patch is constituted such that an image having a predetermined image density appears on the patch after the development. By the confirmation with the image formed on the patch, the user is capable of judging whether the development processing has been or has not been performed correctly. The patch may be located at a region surrounding each of the images recorded on the photographic film. Alternatively, the patch may be located at a leading end area or a tail end area of the photographic film. The patch may have a character shape, a figure shape, or the like. Also, the image forming system in accordance with the present invention may be provided with development judging means for measuring the image density on the patch or detecting the character shape or the figure shape of the patch and judging whether the development processing has been or has not been performed correctly.

### (3) Development

The photosensitive material development method and system will now be explained.

### (3-1) Removal of photographic film from container

As explained in the foregoing, the development is conducted by heating the photographic film. Therefore, when a photographic film exposed by photography using one of the aforesaid photographic means is to be developed, it first has to be subjected to an operation for removing it from the film container.

For this it is preferable to provide a setting section for setting the film cartridge or lens-fitted photographic film unit containing used (exposed) film in the system. To prevent the user from setting another type of film housing by mistake, the setting section is preferably designed to accept only containers containing developable film.

Specifically, the photographic film made of the photosensitive material is provided as housed in a lens-fitted photographic film unit or cartridge of a specific and special shape and the setting section is given a recessed shape which, for example, accepts only a lens-fitted photographic film unit having the special shape.

Otherwise, the lens-fitted photographic film unit or cartridge is marked with an identifier indicating the film type. The identifier can be in the form of characters, symbols, a bar code or the like. The identifier is optically read when the film container set in the setting section. If the container is missing an identifier or if the identifier indicates a different type of film, a warning can be sounded or an error message be displayed on a system monitor or the like. The identifier can be read by any of various widely used methods such as a POS system, bar-code reader or OCR.

When a film container has been properly set in the setting section, it is automatically taken into the system interior. The taking of the film container into the system is necessary because the film container must be shielded from light at the time the film is drawn out of it. It is enabled, for example, by providing a light-blocking shutter which is closed to prevent light from reaching the container from the outside when setting of the film container is completed.

As the method for removing the exposed photographic film from the container taken into the system there can be used that described, for example, in Japanese Patent Publication No. 6(1994)-16158 and Japanese Utility Model Publication No. 7(1995)-15545. In the disclosed method, film is removed from a lens-fitted photographic film unit by opening a cover provided for this purpose on the bottom of the lens-fitted photographic film unit case. Otherwise, as disclosed in Dutch Patent No. 6,708,489, the film can be removed by opening or breaking the rear cover. Alternatively, as described in U.S. Pat. No. 5,202,713, a portion of the lens-fitted photographic film unit case can be formed with a normally light-sealed opening and the film can be removed by gripping one of its ends and pulling it out through this opening. Any of the various other methods conventionally used for 135 film or in the APS system can also be adopted.

While other types of film can be rejected by the foregoing methods of configuring the container setting section to have a special shape or reading an identifier affixed to the container, it is also possible discriminate the film type after the film has been drawn out.

For example, since the light transmittance of photographic film differs depending on the photosensitive material used therein, the type of film can be discriminated by measuring its light transmittance after it has been drawn out. The discrimination can also be conducted based on some other physical property of the film, such as its reflectance, spectral characteristic or surface roughness.

Otherwise, if a portion of the film can be magnetically recorded with various information as in the case of APS photographic film, for example, the discrimination can be conducted by reading this information. In this case, as in the earlier mentioned case where discrimination is conducted based on identifying information on the container, is it preferable, after setting of the container has been completed, to use a predetermined user interface to inform the user of the fact that the set film is of a type that cannot be developed.

As for the drawing of the photographic film out of the container, the entire photographic film need not necessarily be drawn out ultimately, and only a certain region of the photographic film may be drawn out. The region of the photographic film to be drawn out may be specified in one of various ways. For example, in cases where magnetic information is capable of being recorded on the photographic film, information representing a certain image recording region of the photographic film may be recorded as the magnetic information, the magnetic information may be read, and only the certain image recording region of the photographic film may be drawn out. Also, only the region having been drawn out may be subjected to the development processing, and the photographic film may then be returned to the state in which the photographic film is capable of being again used for the photographing operation.

### (3-2) Development processing

The photographic film drawn out of the container by one of the foregoing methods is next developed. This is conducted, for example, by installing conveying rollers or conveyance drums along a predetermined conveyance path, and conveying the photographic film drawn out of the container along this path.

The heating in the development step can be effected, for example, by contact with a heated block or plate, by contact with a hot plate, a hot presser, a hot roller, a hot drum, a halogen lamp heater, an infrared or a far infrared lamp heater, or by passage through a high temperature atmosphere.

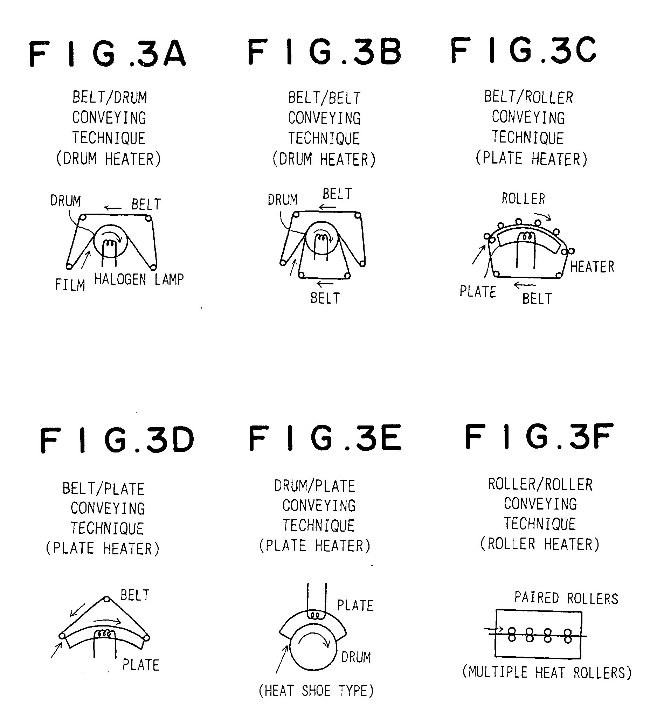

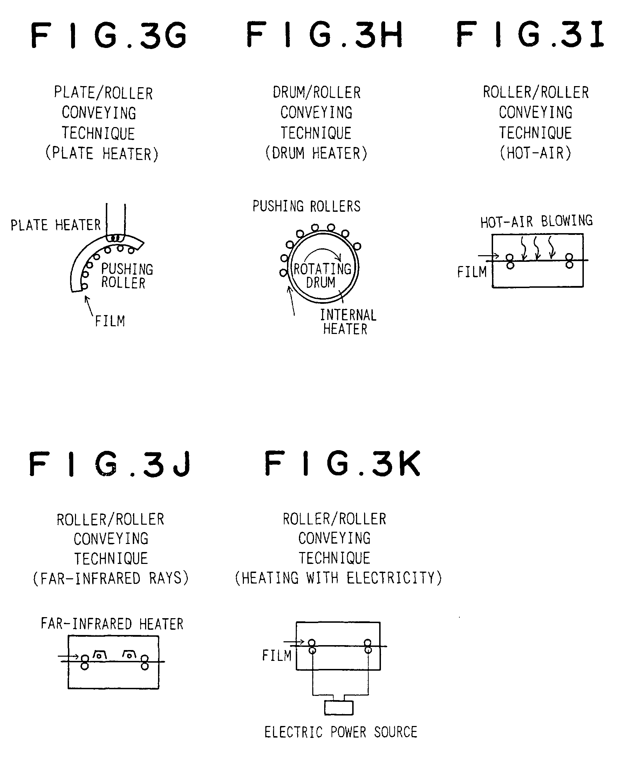

Figures 3A to 3K show various heating techniques. Figures 3A and 3B show belt/drum conveying techniques with drum heaters. With the belt/drum conveying technique with the drum heater shown in Figure 3B, the photographic film is conveyed by two belts. Figure 3C shows a belt/roller conveying technique, in which the film is conveyed by a belt and rollers and is heated by a plate heater. Figure 3D shows a belt/plate conveying technique, in which the film is conveyed by a belt and is heated by a plate heater. Figure 3E shows a drum/plate conveying technique, in which the film is conveyed by a drum and is heated by a plate heater. Figures 3F, 3I, 3J, and 3K show roller/roller conveying techniques, in which the film is conveyed by paired rollers. In Figure 3F, the film is heated by the paired rollers. In Figure 3I, the film is heated by hot-air blowing. In Figure 3J, the film is heated by a far-infrared heater. In Figure 3K, the film is heated by the application of electricity. Figure 3G shows a plate/roller conveying technique, in which the film is conveyed by a plurality of pushing rollers and is heated by a plate heater. Figure 3H shows a drum/roller conveying technique, in which the film is conveyed by a plurality of pushing rollers and a rotating drum, and is heated by the rotating drum.

As the heat source, an ordinary electric heater, an ordinary lamp heater, a liquid heater, a dielectric heater, a microwave heater, or the like, may be used.

As a heat developing machine, a heat developing machine, in which the heat-developable photosensitive material is brought into contact with a heat source, such as a heating roller or a heating drum, is preferable. Examples of the heat developing machines of such types include the heat developing machines described in Japanese Patent Publication No. 5(1993)-56499, Japanese Patent No. 684453, Japanese Unexamined Patent Publication Nos. 9(1997)-292695 and 9(1997)-297385, and PCT International Publication No. WO 95/30,934. Examples of non-contact types of heat developing machines include the heat developing machines described in Japanese Unexamined Patent Publication No. 7 (1995) -13294, PCT International Publication Nos. WO 97/28489, WO 97/28488, and WO 97/28487.

The development temperature may fall within the range of 100°C to 350°C, and should preferably fall within the range of 130°C to 200°C. The development period may fall within the range of 1 to 60 seconds, and should preferably fall within the range of 3 to 30 seconds.

The photosensitive material employed in the image forming method and system in accordance with the present invention may be provided with an electrically conductive heating element layer as the heating means for the heat development. As the heating element, a heating element described in, for example, Japanese Unexamined Patent Publication No. 61(1986)-145544 may be used.

As for the heating form, ordinarily, the film-like photosensitive material having been subjected to the photographing operation is separated from the magazine or the cartridge and is subjected to the heat development processing in the bare state. Alternatively, a technique as disclosed in, for example, Japanese Unexamined Patent Publication No. 2000-171961 may be used. With the disclosed technique, the heat development is performed while the film is being drawn out of a thrust cartridge. Also, after the development has been performed to the final stage, the developed film may be returned into the thrust cartridge.

As another alternative, in the state in which the film is wound in the magazine or the cartridge, the film and the packaging container may be subjected together to the heating from the exterior.

Also, the entire film need not necessarily be subjected to the heating and development. Only a certain region of the film may be drawn out and subjected to the heat development. Further, after the development, the film may be set to the state in which the film is capable of being utilized for the photographing operation.

With the image forming method and system in accordance with the present invention, wherein the development processing is performed with the heating, there is the risk that curl will occur with the photosensitive material. Therefore, such that inappropriate heat development effects, such as nonuniformity in developed image density due to curl, may be prevented from occurring, the image forming system in accordance with the present invention should preferably be provided with pre-development temperature and moisture content adjusting means for adjusting the temperature and the moisture content of the photosensitive material at values falling within predetermined ranges immediately before the heat development is performed. Also, the image forming system in accordance with the present invention should preferably be provided with post-development temperature and moisture content adjusting means for adjusting the temperature and the moisture content of the photosensitive material at values falling within predetermined ranges immediately after the heat development has been performed. In cases where the image forming system in accordance with the present invention is provided with the pre-development temperature and moisture content adjusting means, the film flatness is capable of being set at a predetermined level, and the film is capable of being brought into close contact with the drum. Therefore, nonuniformity in developed image density is capable of being suppressed, and the development is capable of being accelerated. In cases where the image forming system in accordance with the present invention is provided with the post-development temperature and moisture content adjusting means, the film flatness is capable of being enhanced, and the image quality of the image read out in the read-out section is capable of being enhanced. The pre-development temperature and moisture content adjusting means should preferably operate such that the temperature falls within the range of 25°C to 80°C, and the relative humidity around the film falls within the range of 60% RH to 95% RH. The post-development temperature and moisture content adjusting means should preferably operate such that the temperature falls within the range of 5°C to 40°C, and the relative humidity around the film falls within the range of 60% RH to 90% RH.

In the image forming method and system in accordance with the present invention, the temperature to which the photosensitive material is heated may be detected with a temperature sensor, and the subsequent image processing may be performed in accordance with the detected development temperature. In such cases, a fluctuation in image density due to a fluctuation in temperature is capable of being compensated for by the image processing, and an image having good image quality is capable of being obtained. Also, in cases where the image frame position information, which has been recorded on the photographic film at the time of the photographing operation, is detected with an image frame position sensor, the image processing in accordance with the fluctuation in temperature is capable of being performed with respect to the image of each frame, and therefore the image quality of the obtained image is capable of being enhanced even further.

In the image forming method and system in accordance with the present invention, developed silver occurring due to the development and undeveloped silver halide need not necessarily be removed. However, such that the burden to the image readout may be reduced and the image storability may be improved, processing for removing the developed silver and the undeveloped silver halide or processing for reducing the optical burden may be performed, and thereafter the image may be read out. The term "processing for reducing optical burden" as used herein means the processing for suppressing light scattering due to the silver halide grains by, for example, complexing or solubilizing the silver halide. The processing for removing the developed silver and the undeveloped silver halide or the processing for reducing the optical burden may be performed simultaneously with the development or after the development.

In order for the developed silver to be removed from the photosensitive material, or in order for the silver halide to be complexed or solubilized, the photosensitive material may be dipped in a liquid containing a silver oxidizing agent, a re-halogenating agent, or a silver halide solvent. Alternatively, such a liquid may be sprayed to the photosensitive material. As another alternative, such a liquid may be coated to the photosensitive material. As a further alternative, a processing material containing the agent described above may be superposed upon the photosensitive material, and the combination of the processing material and the photosensitive material may be heated. In this manner, the developed silver may be removed, or the silver halide may be complexed or solubilized.

In the conventional solution processing machine, foreign matter such as dust adhering to the photographic film is removed into the processing solutions. As a result, it is not a cause of uneven development and such material adhering to one photographic film does not affect other photographic films processed thereafter. In the image forming method and system according to this invention, however, unlike in the conventional method and system, the photographic film is not immersed in a processing solution during the development step and foreign matter adhering to the photographic film is a direct cause of development unevenness. In addition, not only the dust and the like adhering to the photographic film but also that adhering to the container and other components may also affect the film processing. As in the case of conventional photosensitive materials, moreover, the photographic film may be scratched by foreign matter adhering to the film take-out section etc.

Adherence of dust and the like to the photographic film should therefore preferably be prevented by, for example, providing means for removing dust etc. from the setting section, film take-out section, film container and the like and adopting a dustproof structure for the conveyance path.

Various known means can be adopted as the dust removing means, including such mechanical techniques as air jetting, suction, use of an adhesive roller, brush or wiper, and vibration by ultrasonic waves or the like.

### (3-3) Waste material processing after development

Components of the cartridge or lens-fitted photographic film unit removed of photographic film in the aforesaid development step are preferably reused if found to be usable upon inspection. The system for this should preferably provide for collection of the cartridge or lens-fitted photographic film unit removed of film at the film take-out section and, in the case of the lens-fitted photographic film unit, for a predetermined series of procedures for disassembling the unit into, for example, the lens section, body etc. and sorting and collecting these independently. Adoption of such a system makes it possible to recover the collected plastic components at regular intervals, reuse the reusable ones, and recycle those that cannot be reused by melting and pelletizing them.

The system can also be arranged to load new photographic film into reusable film containers after removal of the exposed photographic film therefrom.

### (4) Formation of digital image signal

### (4-1) Image readout from photographic film

In the image forming method and system in accordance with the present invention, it is necessary for the image, which has been formed on the heat-developed photosensitive material, to be read out and converted into a digital image signal. For the image readout, a known image input device may be used. The image input device is described in detail in, for example, "Fundamentals of Digital Image Input" by Takao Ando, et al., Corona Co., Ltd., pp 58-98, 1998.

It is necessary for the image input device to be capable of efficiently acquiring a large amount of image information. The image input devices may be roughly classified by the manner of array of fine point sensors into a linear sensor and an area sensor. The linear sensor comprises plurality of point sensors arrayed along a line. Such that the image having been formed in a surface form may be detected, it is necessary for the photosensitive material or the linear sensor to be moved for scanning the image. Therefore, with the linear sensor, a comparatively long time is required to read out the image, but the sensor is capable of being produced at a low cost. With the area sensor, basically, the image is capable of being read out without the photosensitive material or the sensor being moved for the scanning. Therefore, with the area sensor, the image is capable of being read out quickly. However, it is necessary for a comparatively large area sensor to be used, and therefore the cost cannot be kept low. The linear sensor or the area sensor may be selected in accordance with the purposes and is capable of being used appropriately.

The sensors may be classified by the sensor kind into an electronic tube type, such as an image pickup tube type or an imaging tube type, and a solid-state image sensor type, such as a CCD type or a MOS type. The solid-state image sensor type, particularly the CCD type, is advantageous for low cost and easiness of processing.

As the apparatus provided with the image input device, a commercially available digital still camera, a drum scanner, a flat bed scanner, a film scanner, or the like, may be used. In order for an image having good image quality to be read out easily, the film scanner should preferably be used.

Examples of typical film scanners, which are available commercially, include Nikon Film Scanner LS-1000 using a linear CCD, Agfa Duo Scan Hid, and Imakon Flextite Photo. Also, Kodak RFS3570 using an area CCD may be used.

Further, an image input apparatus using an area CCD, which apparatus is loaded on Digital Print System Frontier, supplied by Fuji Photo Film Co., Ltd., may be used preferably. Furthermore, an image input apparatus of Frontier F350, which is described in "Fujifilm Research Report" by Yoshio Ozawa, et al., No. 45, pp. 35-41, is capable of achieving quick, high-quality image readout with a linear CCD sensor and is particularly suitable for the image readout from the photosensitive material employed in the image forming method and system in accordance with the present invention.

The read-out of the developed photographic film with a transmission type reader (film scanner) and the generation of digital image signal will now be explained.

The photographic film having been subjected to the aforesaid development step includes residual silver halide and developed silver. In the conventional image forming method, the residual silver halide and developed silver are removed from the photographic film by desilvering. Desilvering is not required in the image forming method and system of this invention. Although desilvering is necessary, for example, when the developed photographic film is to be used for preparing prints by projection exposure of printing material, no desilvering is as a rule conducted in the image forming method and system of this invention unless requested by the customer. This is for simplifying the development processing. When the invention image forming system is installed in a convenience store or the like, desilvering is conducted on request of the customer by an outside service provider who picks up the photographic film for this purpose.

The photographic film is read by use of a film scanner in the same way as conventional film. When the developed film is read without desilvering, however, the color saturation of the image signal read from the silver image is inferior to that when desilvering is conducted. While this can be coped with by regulating the intensity of the light source during read-out, for example, it is preferable to deal with it by subjecting the image signal obtained by the read-out to image processing to correct for the silver image portion. Since the amount of developed silver differs corresponding to the amount of formed dye during the development process, correction is preferably conducted with respect to the R, G and B signals individually after read-out.

Also, the image forming system in accordance with the present invention may be provided with read-out condition setting means capable of selecting a spatial resolving power (a definition) and an image density resolving power, with which the image is to be read out, respectively from a plurality of spatial resolving powers and a plurality of image density resolving powers, and setting the selected spatial resolving power and the selected image density resolving power for the image readout. Also, the image readout may be performed with a standard spatial resolving power and a standard image density resolving power, which have been set previously by the read-out condition setting means. Further, the image readout may be performed with a high spatial resolving power and a high image density resolving power, which have been set by the read-out condition setting means. In this manner, two kinds of the image signals may be obtained. Thereafter, standard image processing, which has been set previously, may be performed on the image signal, which has been obtained from the image readout performed with the standard spatial resolving power and the standard image density resolving power, and a digital image signal, which represents a standard image, may thereby be obtained. Also, simple image processing, which is simpler than the standard image processing, may be performed on the image signal, which has been obtained from the image readout performed with the high spatial resolving power and the high image density resolving power, and a digital image signal, which represents an original image, may thereby be obtained. In such cases, the user is capable of obtaining the standard image and obtaining an enlarged image (a high definition image), a gradation-transformedimage (low contrast finish or high contrast finish), or the like, in accordance with the original image.

Heretofore, in cases where the photographic film is provided with a magnetic recording layer, when the image readout is performed at the image read-out section, it has been necessary for the photographic film to be conveyed reciprocally. (This is because the image read-out speed and the speed, with which the magnetic recording information is read from the magnetic recording layer, are different from each other.) However, with the conventional technique, the conveyance mechanism cannot be kept simple. Also, in cases where the magnetic recording information is read from the magnetic recording layer before the image readout from the photographic film is performed, if the photosensitive material has the characteristics such that the image density changes quickly after the development, the image readout from the photographic film cannot be performed accurately. However, in the image forming method and system in accordance with the present invention, magnetic recording information reading means is capable of being located at the inlet of the development processing section, and the magnetic recording information is capable of being read from the magnetic recording layer before the development processing is performed. Also, the information representing the read-out conditions of the image read-out means, the information representing the image processing conditions of the image processing means, and the information representing the printing conditions of the printing means, are capable of being recorded on the magnetic recording layer. The image readout may be performed by the image read-out means under the read-out conditions having been read by the magnetic recording information reading means. Also, the image processing may be performed by the image processing means under the image processing conditions having been read by the magnetic recording information reading means. Further, the print outputting may be performed by the printing means under the printing conditions having been read by the magnetic recording information reading means.

Besides the information representing the read-out conditions, the information representing the image processing conditions, and the information representing the printing conditions, various other kinds of information may be recorded as the magnetic recording information on the magnetic recording layer. No limitation is imposed upon the kinds of the magnetic recording information. By way of example, the kinds of the magnetic recording information described below may be recorded on the magnetic recording layer, and usefulness of the image forming method and system in accordance with the present invention may thereby be enhanced.
(1) Camera photographing information (recorded by the user)
   ^{·} Date and time of photographing operation
   ^{·} Kind, serial No., and owner No. of camera used
   _{^{·}} Photographing size, image plane orientation
   ^{·} Lens F number, focal length
   ^{·} Photographing setting (shutter speed, aperture, ISO setting, F number setting)
   ^{·} Ambient lightness, light source information, use or non-use of flash
   ^{·} Photometric pattern
   ^{·} Cartridge loading information
   ^{·} Specification of image size enlargement scale factor for printing
   ^{·} Specification of aspect ratio for printing
   ^{·} Specification of size and surface kind for printing
   ^{·} Number of photographs taken, image frame information
(2) Photofinishing information (recorded by laboratory)
   ^{·} Number of prints
   ^{·} Printing conditions (image density, filter correction value)
   ^{·} Paper size for re-printing
   ^{·} Processing mechanism, processing machine ID code
   ^{·} Date and time of processing
   ^{·} Kind of printer, printer ID code
   ^{·} Film channel No. and paper channel No. of printer
   ^{·} Date and time of printing
   ^{·} Number of effective photographs taken, number of ineffective photographs taken
   ^{·} Dealer name, vender name, customer name, envelope No.
   ^{·} Trimming information
   ^{·} Cartridge ID code
   ^{·} paper magazine ID code

The information described above may be recorded at a margin area above or below the photographing image plane or may be recorded within the image plane. In the cases of a single film strip on which a plurality of images have been recorded, information common to the images may be recorded at a leading end area or the tail end area of the film.

Such that the photographic film may be prevented from undergoing curl and image density fluctuation due to the light source of the scanner at the time of image readout with the scanner, pre-readout temperature and moisture content adjusting means should preferably be provided at the entire read-out section or at the photographic film conveying section in the read-out section. In such cases, the pre-readout temperature and moisture content adjusting means should preferably operate such that the temperature falls within the range of 5°C to 40°C, and the relative humidity around the photographic film falls within the rang of 60% RH to 90% RH.

### (4-2) Read-out fail-safe countermeasures

Ordinarily, the photosensitive material employed in the image forming method and system in accordance with the present invention is subjected as quickly as possible to the image readout with the scanner, or the like. However, it may often occur that the photosensitive material is left to stand for a certain period of time due to a failure occurring with the scanner, or the like, before the photosensitive material is subjected to the image readout. Also, it may often occur that a failure occurs with the image read-out operation.

Therefore, countermeasures against the read-out failures should preferably be taken with respect to the photosensitive material and the image forming system.

For quick processing, the image forming system should preferably be constituted such that the time taken between the development processing and the image readout is short as possible. For example, in the cases of continuous processing of a web-like photosensitive material, the read-out section should preferably be located at the outlet of the heat development unit. However, since it is assumed that a period of several hours to several days will be required for restoration at the time of a read-out failure, it is preferable that the image having been recorded on the photosensitive material undergoes substantially no change at normal temperatures for three days. It is more preferable that the image having been recorded on the photosensitive material undergoes substantially no change at normal temperatures for seven days. The term "undergoing substantially no change" as used herein means that no difference is found visually when a print is outputted with a high image quality printer, such as Pictrography 3500, supplied by Fuji Photo Film Co., Ltd., in accordance with a digital image signal having been detected with a scanner.

In cases where the photographic film is to be stored for a long term, the photographic film having been subjected to the heat development should preferably be stored at a cold and dark place, such as a refrigerator or a freezer.

Also, the photographic film having been subjected to the heat development may be subjected to additional stabilizing processing. As the stabilizing processing, all of processes, such as desilvering, fixing, and pH adjustment, or certain processes among such processes may be performed as described in, for example, Japanese Unexamined Patent Publication No. 10(1998)-221829. The processes described above may be performed with dipping in liquid, spraying, or coating with viscous liquid. Alternatively, the processes described above may be performed with a technique, wherein the photographic film and a processing material, which comprises a substrate and a treating compound coated on the substrate, are superposed one upon the other.

Further, it may often occur that, after the image readout has been performed on the heat-developed image, the image is again subjected to image re-readout. Therefore, it is preferable that, in cases where the image is subjected to the image readout at least two times or, preferably, at least three times, the image quality of the image obtained from the image re-readout does not become substantially lower than the image quality of the image obtained from the first image readout.

A principal factor causing the image quality obtained from the image re-readout to become low is the print-out effect of the undeveloped silver halide and the developed silver, which print-out effect occurs due to the irradiation of the reading light.

As a technique for suppressing the print-out effect, a technique for adding a print-out preventing agent to the photosensitive material is preferable. Examples of the print-out preventing agents include halogen compounds described in Japanese Patent Publication Nos. 54(1979)-164 and 57(1982)-8454, and Japanese Unexamined Patent Publication Nos. 53(1978)-46020 and 48(1973)-45228, 1-phenyl-5-mercapto tetrazole compounds described in British Patent No. 1,005,144, and viologen compounds described in Japanese Unexamined Patent Publication No. 8(1996)-184936.

The print-out effect depends upon the scanner. Therefore, the light quantity irradiated from the light source should preferably be reduced, or the time required for the image readout should preferably be kept short, by enhancing the sensitivity of the image input device, e.g. the sensitivity of the CCD. In this manner, the print-out effect should preferably be suppressed.

The technique, wherein the additional stabilizing processing described above is performed prior to the image readout or immediately after the first image readout, is efficient for preventing the image quality of the image, which is obtained from the image re-readout, from becoming low.

As a technique for preventing the image quality of the image, which is obtained from the image re-readout, from becoming low due to the print-out effect, it is possible to employ a technique, wherein the print-out effect upon the image is detected previously, and image processing is performed for compensating for the print-out effect. For example, the photosensitive material may be provided with a reference region, to which a predetermined exposure quantity is given, and the read-out conditions for the image re-readout (e.g., the intensity of the reading light) and the image processing conditions may be determined in accordance with the image signal, which is obtained by reading out the reference region. Alternatively, information, which represents cumulative light quantity of the reading light irradiated to the photosensitive material at the time of the image readout conducted prior to the image re-readout, may be stored. Also, in cases where the image re-readout is to be performed, reference may be made to print-out characteristics with respect to light intensities of the reading light, which print-out characteristics have been set previously, and the read-out conditions and the image processing conditions may be determined in accordance with the light quantity, which has been stored, and the print-out characteristics. In cases where the compensation technique described above is to be employed, it is necessary for the image processing section to be constituted such that the image processing conditions are capable of being set in accordance with the compensation technique.

### (4-3) Recovery of resources after image readout

The silver halide and the developed silver remain on the photographic film having been subjected to the development processing. With the conventional image forming method, the silver halide and the developed silver on the photographic film are removed with the desilvering processing and the fixing processing. However, with the image forming method and system in accordance with the present invention, the desilvering processing need not be performed. However, from the view point of efficient utilization of the silver resources, it is not preferable that the photographic film, from which the image has been read out with the scanner, or the like, is left as it is. If the photographic film, from which the image has been read out with the scanner, or the like, is left as it is, large amounts of the silver resources will be kept idle in stock in all the world, and the silver resources will become drained in the future.

Therefore, basically, the photographic film having been subjected to the read-out processing should preferably be collected within the image forming system. Also, the development and read-out system should preferably be provided with a conveyance path and collecting means for the photographic film.

The collecting means may utilize one of various techniques, such as a technique for winding up the spliced tape-like film into a roll form, a technique for folding and stacking the photographic film, and a technique for cutting the photographic film into fine pieces with a shredder and storing the cut fine pieces.

As the technique for recovering silver from the collected photographic film, a burning and refining technique is simple. However, the burning and refining technique has the drawbacks in that loss of the resources, such as the support and other organic materials, occurs, and the burden of the burning occurs. A technique, wherein gelatin is dissolved by an enzyme out of X-ray film, and thereafter treatment with a liquid containing a coagulant is performed, is disclosed in, for example, 7(1995)-216466. The disclosed technique is also efficient for the color photographic film after being subjected to the heat development in the image forming method and system in accordance with the present invention. In order for silver to be recovered from the liquid, in which silver has been dispersed in a suspended state in water, the solids may be separated with a mechanical technique, such as natural sedimentation, centrifugal sedimentation, or filtration, and thereafter the partially dissolved silver halide may be recovered with a technique, such as electrolysis, metal substitution, or sulfurization.

In order for silver to be recovered from the photographic film, a technique for directly using the bleach-fixing solution, which is the processing solution for color negative film, color paper, and the like, may also be used. A technique for recovering silver from the bleach-fixing solution containing silver recovered from the photographic film is described in, for example, "Fundamentals of Photographic Engineering-Revised Edition," Society of Photographic Science of Japan, Corona Co., Ltd., p. 405, 1998.

Also, the support should preferably be recovered from the photographic film having been subjected to the read-out processing. For this purpose, the emulsion layer and the backing layer may be removed with the enzymatic decomposition technique for gelatin. Also, when necessary, washing with water, a surface-active agent, an organic solvent, or the like, may then be performed. Thereafter, heat melting and pelletizing may be performed, and the thus obtained pellets may be utilized again.

It is particularly preferable that the main organic materials, such as the coupler and the developing agent, are recovered from the photographic film having been subjected to the image read-out processing and are utilized again.

For such purposes, a molecular distillation technique described in, for example, U.S. Patent No. 4,234,392, a solvent extraction technique, a supercritical fluid extraction technique, a preparative liquid chromatography, or the like, may be used.

### (4-5) Image processing on image signal

In the image forming method and system in accordance with the present invention, after the image has been formed on the photosensitive material, a color image is formed on a different recording material in accordance with the image signal representing the image having been formed on the photosensitive material. Specifically, the image information is photoelectrically read out through density measurement of transmission light and converted into a digital image signal. The digital image signal is then subjected to the image processing, and the digital image signal obtained from the image processing is utilized for outputting a visible image on the different recording material. The different recording material may be a photosensitive material using a silver halide, a sublimation type of thermal recording material, a full color direct thermal recording material, an ink jet material, or the like.

When a digital image signal is generated for display, printing or the like, the digital image signal is ordinarily processed in various ways to improve image quality. This is also true in the image forming method and system of this invention. The processing for image quality improvement in the image forming method and system of this invention falls in two general categories: (a) image processing to prevent or correct for image degradation caused by the characteristics of the photosensitive material used in the image forming method and system of this invention and (b) customary image processing of the types commonly conducted in all fields such as for noise suppression, and the like.

The image processing for preventing or correcting for image degradation owing to the characteristics of the photosensitive material will be explained first. As explained in the foregoing, the photosensitive material used as the material of the photographic film in the method and system of this invention is heated for image formation. Since the formed image is affected by temperature change at this time, it is unstable for some time following the heat development.

As a result, the image quality of the image signal obtained by conducting read-out of the photographic film immediately after completion of the heat development is not necessarily good. The temperature condition therefore has to be taken into consideration for obtaining high image-quality image signals with little read-out error. One specific method usable for this is, for example, to provide temperature and moisture content adjusting means for maintaining the temperature and the moisture content of the photographic film constant after development and to conduct the read-out in the temperature- and moisture content-retained state. Another is to stop the conveyance of the developed photographic film and let it stand until it reaches room temperature (reaches a constant temperature) before conducting the read-out. Another is to measure the temperature of the photographic film immediately before read-out and conduct the read-outunderconditionssuitableforthetemperature. Another is to estimate the temperature of the photographic film at the time of read-out and, at the time of image-processing the acquired image signal, carrying out conversion processing based on the relationship between the color density and the temperature of the photosensitive material determined in advance. The film temperature need not be directly measured but can be estimated from the temperature of the ambient environment.

The image processing preferably carried out with respect to the image signal will now be explained. The same image processing need not necessarily be conducted with respect all photographic films or all of the image signals and the image processing is preferably varied depending on the image signal. To give a well-known example, there is known a method of image-processing snapshots and the like in which image recognition processing is conducted to extract portions corresponding to the human face in particular and these portions are processed to obtain especially high image quality.

In another known method, various exposure conditions are recorded on a magnetic information recording section of the film and image processing is conducted based on the exposure conditions read from this section. One exposure condition that should be taken into consideration at the time of the image processing is the type of light under which the exposure was made. Photos taken under fluorescent light are in particular need of correction since they generally do not result in high-quality images as they are. When the background at the time of exposure is substantially a single color (when the background is a gold-colored screen, the sky, a grass-covered field or the like), on the other hand, "color-failure" correction is necessary because an error arises in human subject color tone correction when ordinary image processing is conducted. The exposure conditions can be recorded on the film or be input separately by an user.

Since the photosensitive material usable in the image forming method and system according to the invention comes in a number of types, different image processing can be conducted for each type of photographic film.

The customary image processing includes color, gradation and density correction. Generally speaking, color correction is preferably conducted so as to reproduce the color of the subject photographed as faithfully as possible. However, faithful color representation many not always be the best color representation from the customer's viewpoint. For example, avoidance of pasty tones may be desired. Some users want flesh color to be rendered on the bright side. The invention system should therefore preferably be arranged to display the processed image on a monitor screen, allow the user to make color settings while observing the displayed image, and conducting the image processing again based on the input settings.

The image quality can also be improved by sharpness enhancement processing and dynamic range compression or decompression. Although sharpness enhancement processing is in principle conducted for recovering sharpness lost during scanning, similarly to in the case of the aforesaid color correction, it is preferable to provide a user interface for enabling input of a sharpness setting so as to be able to respond to the desire of the user.

Noise suppression processing is also necessary. While it is of course desirable to suppress electrical noise arising in the course of the signal processing, it is also preferable to suppress granular noise from the photosensitive material. Removal or suppression of granular noise can be conducted by the method described in Japanese Patent Application No. 7-337510, for example. In this method, the image signal is resolved into low-, medium- and high-frequency components, the high-frequency component is enhanced, the medium-frequency component is suppressed, and the frequency components are then merged to obtain an image with suppressed graininess and enhanced sharpness.

Also, as an image processing technique for suppressing the graininess or noise of the digitized image and enhancing the sharpness, a technique, wherein weighting and fragmenting processing, or the like, is performed on an edge and noise in accordance with a sharpness-enhanced image signal, a smoothed image signal, and an edge detection signal, as described in, for example, Japanese Unexamined Patent Publication No. 10(1998)-243238, may be used. Alternatively, a technique, wherein an edge component is detected in accordance with a sharpness-enhanced image signal and a smoothed image signal, and weighting and fragmenting processing, or the like, is then performed, as described in, for example, Japanese Unexamined Patent Publication No. 10(1998)-243239, may be used.

Further, in a digital color printing system, compensation may be made for a fluctuation in color reproducibility on a final print due to a difference in storage conditions, development conditions, and the like, among the photographing materials. For such purposes, a technique may be used, wherein the photographing material is provided with patches of at least four stages or at least four colors, and the patches are exposed. Also, after the development, the image densities on the patches are measured, and a look-up table and a color transform matrix necessary for the compensation are formed. Further, color compensation is performed for the image by use of a look-up table transform and matrix operation processing. The technique described above is described in, for example, Japanese Unexamined Patent Publication No. 10(1998)-255037.

As a technique for transforming the color reproduction range of the image signal, a technique described in, for example, Japanese Unexamined Patent Publication No. 10(1998)-229502 may be used. With the technique, with respect to an image signal represented by a chrominance signal such that, when values of respective components are trued up, the chrominance signal yields a color visually perceived as a neutral color, the chrominance signal is decomposed into a chromatic color component and an achromatic color component, and the chromatic color component and the achromatic color component are processed respectively.

As an image processing technique for eliminating a decrease in image quality of the image photographed with the camera due to an aberration due to the camera lens, a decrease in brightness of the edge of the image field, or the like, a technique described in, for example, Japanese Unexamined Patent Publication No. 11(1999)-69277 may be used. With the technique, a grid-like compensation pattern for forming a compensation signal for a decrease in image quality is recorded previously on the film. After the photographing operation, the image and the compensation pattern are read out with the film scanner, or the like. In this manner, a signal for compensation for the factor for a decrease in image quality due to the camera lens is formed. By use of the image quality decrease compensating signal, the digital image signal is compensated.

As for flesh color and sky blue color, if the sharpness is enhanced excessively, the graininess (noise) will be enhanced, and an uncomfortable impression will be given. Therefore, the extent of the sharpness enhancement with respect flesh color and sky blue color should preferably be suppressed. For such purposes, a technique for setting an unsharp masking (USM) coefficient as afunctionof (B-A) (R-A) in sharpness enhancement processing using USM, as described in, for example, Japanese Unexamined Patent Publication No. 11(1999)-103393 may be used.

Also, flesh color, dark green color, and sky blue color are referred to as important colors for color reproduction, and selective color reproduction processing is required for the important colors. As for lightness reproduction, it is recognized that flesh color should visually preferably be finished to be light, and sky blue should visually preferably be finished to be dark. As a technique for reproducing the important colors to a visually appropriate lightness, a technique as described in, for example, Japanese Unexamined Patent Publication No. 11(1999)-177835 may be used. With the technique, a chrominance signal corresponding to each pixel is transformed by use of a coefficient, which takes a small value when the corresponding hue is yellowish red, and which takes a large value when the corresponding hue is cyan blue, as in the cases of (R-G) and (R-B).

Further, as a technique for compressing a chrominance signal, a technique disclosed in, for example, Japanese Unexamined Patent Publication No. 11(1999)-113023 may be used. With the disclosed technique, a chrominance signal corresponding to each pixel is separated into a lightness component and a chromaticity component. Also, with respect to the chromaticity component, a hue template having the best conforming value pattern is selected from a plurality of hue templates having been prepared previously, and the hue information is thereby encoded.

Furthermore, at the time of the processing, such as saturation enhancement or sharpness enhancement, natural enhancement processing may be performed so as to prevent the problems from occurring in that a color blinding defect occurs, in that a catch lights area becomes white and its details become imperceptible, in that a high density area becomes black and its details become imperceptible, and in that a signal outside of a definition range occurs. For such purposes, an image processing method and apparatus as disclosed in, for example, Japanese Unexamined Patent Publication No. 11(1999)-177832 may be used. With the disclosed image processing method and apparatus, each color density signal component of a color image signal is transformed into an exposure density signal component by use of a characteristic curve, the exposure density signal component is subjected to image processing, including color enhancement, and the signal component having been obtained from the image processing is transformed into an image density signal component by use of a characteristic curve.

When the generated digital image signal is to be used for preparing a print, image size enlargement or reduction processing may be conducted to match the printing material. When the digital image signal is to be outputted as a file or transmitted via a network, the digital image signal is preferably subjected to processing for compression in conformance with the JPEG (Joint Photographic Experts Group) standard, for instance. In other words, each image signal is preferably subjected to the required image processing most appropriate in light of the purpose for which the digital image signal was generated. All types of customary image processing used in various fields can be employed.

Also, as described above, the image readout may be performed with the standard spatial resolving power and the standard image density resolving power, which have been set previously by the read-out condition setting means. Further, the image readout may be performed with the high spatial resolving power and the high image density resolving power, which have been set by the read-out condition setting means. In this manner, two kinds of the image signals may be obtained. Thereafter, the standard image processing, which has been set previously, may be performed on the image signal, which has been obtained from the image readout performed with the standard spatial resolving power and the standard image density resolving power, and the digital image signal, which represents the standard image, may thereby be obtained. Also, the simple image processing, which is simpler than the standard image processing, may be performed on the image signal, which has been obtained from the image readout performed with the high spatial resolving power and the high image density resolving power, and the digital image signal, which represents the original image, may thereby be obtained. In such cases, the user is capable of obtaining the standard image and obtaining an enlarged image (a high definition image), a gradation-transformed image (low contrast finish or high contrast finish), or the like, in accordance with the original image. As for the original image, the image processing may not be performed, only the image signal obtained from the image readout may be stored, and thereafter the image processing on the image signal representing the original image may be conducted in accordance with the demand of the user.

### (5) Output of digital image signal

The digital image signal obtained by the foregoing image processing can be used in two different modes: either as it is or as printed on a predetermined recording medium.

### (5-1) Output of digital image signal as file

The spread of personal computers in recent years has lead to more photographs being kept not as prints but as digital image signals which can be displayed on a monitor and processed with a computer. Moreover, as a new type of photographic service, it has also been proposed that digital image signals obtained by development and scanning be stored and used directly for preparing prints without need for scanning the film again when the customer orders additional prints.

In view of these circumstances, the image forming method and system of this invention is preferably arranged so that the digital image signal obtained by image processing the image signal read from the photographic film made of the aforesaid photosensitive material can be utilized directly as the digital image signal such as by output as a file to an MO or other removable memory media for supply to the customer or be stored on the hard disk of a server computer at a photo shop for use in responding to orders for additional prints. Also, in cases where the digital image signal is stored in the file server, both the digital image signal representing the original image described above and the digital image signal representing the standard image described above should preferably be stored in the file server.

In other words, the system is preferably equipped with various removable memory media drives so that the digital image signal processed by the aforesaid digital image processing means can be output as a file when requested by the customer. It can also be equipped with communication means for enabling the digital image signal to be transmitted to a computer outside the system. For example, the image forming system may be constituted such that the user computer is capable of accessing the file server via a public data network and outputting the file, or the user is capable of accessing the file server via a portable terminal. The image forming system should be constituted such that no limitation is imposed upon the data network, and various kinds of WAN and LAN are capable of being used.

As for the media drive, various kinds of media drives should preferably be provided such that various needs of the customers are capable of being satisfied.

### (5-2) Print outputting with digital image signal

Various types of digital printers can be used for outputting the digital image signal in printed form. The digital printer can be accommodated in the same case as the system for conducting the aforesaid development and image processing or be installed in a separate case and connected with the system by an appropriate signal transmission means. It is also possible connect multiple digital printers to a single development machine or to house different types of digital printers in a single case and switch among the printers as required. When the order information inputted by the customer designates the printing means, the printer is preferably selected in response to the input information.

One digital printer usable in the image forming method and system of this invention is the type which records an image by scanning a photosensitive material such as color paper with a laser beam modulated by the digital image signal and produces a color print by carrying out wet development and fixing processing on the photosensitive material.

This type of printer prints an image by passing the medium to be formed with the image through a processing solution for causing chemical reactions. Since equipment requiring use of a processing solution for chemical reactions is not so good for use in a system to be installed in a convenience store or the like, however, it is preferable to use a printer of a type that does not require the image-receiving material to be immersed in a processing solution. Available printers meeting this description include the jet printer and the thermal sublimation type transfer printer. Another type of printer preferable for use is that of the type which exposes a heat-developable photosensitive material to a laser beam in accordance with the digital image signal, superimposes the heat-developable photosensitive material and an image-receiving material, and transfers the image recorded by the laser beam exposure to the image-receiving material by heat-development transfer, thereby forming and image on the image-receiving material. Further, it is possible to use a direct thermosensitive (TA) type of printer, in which a print is outputted through thermal recording on a special-purpose direct thermosensitive type of full color recording material by use of a thermal head and in accordance with an image signal. The foregoing types of digital printers will be explained in the following.

Ink-jet digital printers preferable for use in this invention will now be explained.

Various methods have been proposed for producing full color images by the ink-jet method and numerous systems have been practically implemented. Full color image formation by the ink-jet system is generally conducted by jetting ink of a specific color from a recording head in the form of ink droplets or mist in accordance with an original image signal so as to adhere dots or dot clusters on recording paper and conducting this for each of multiple specific colors while two-dimensionally scanning the recording paper.

The following basic ink-jet systems are known.

One is the thermal (bubble jet) system. As described in Japanese Unexamined Patent Publication No. 8(1996)-104837, for example, this system enables an image to be recorded on recording paper by imparting thermal energy to a recording head in accordance with an image signal, thereby causing a part of the ink inside the recording head to vaporize and produce an impulse that jets ink droplets out of nozzles.

Another system uses the piezoelectric effect. As described in Japanese Unexamined Patent Publication No. 6 (1994)-256696 and elsewhere, this system enables an image to be recorded on recording paper by constituting a part of the recording head of piezoelectric elements and applying voltages to the piezoelectric elements in accordance with the image signal so as to reduce the volume of ink chambers by the flexing of the piezoelectric elements, thereby jetting ink droplets out of nozzles.

Another system uses ultrasonic waves. As described in Japanese Unexamined Patent Publication No. 5(1993)-238006 and elsewhere, this system enables an image to be recorded on recording paper by focusing ultrasonic waves on the ink surface in an ink chamber, thereby jetting ink droplets from the ink surface.

Another system uses charge control. As described in Japanese Unexamined Patent Publication No. 62(1987)-56149 and elsewhere, this system enables an image to be recorded on recording paper by continuously jetting charged ink droplets from nozzles by piezoelectric elements or the like and electrostatically deflecting the charged ink droplets in accordance with an image signal.

Another system uses an electrostatic method. As described in Japanese Unexamined Patent Publication No. 59(1984)-225984 and elsewhere, this system enables an image to be recorded on recording paper by using oil-based ink and applying a high voltage between a recording head and the recording paper so as to draw the ink out of nozzles and bring it in contact with the recording paper.

This invention can use any of these systems, although it is not restricted to the particulars of the cited examples.

The following types of ink are available for use in the different ink-jet systems mentioned above.

One is water-base ink. As described in Japanese Unexamined Patent Publication No. 3(1991)-258870, for example, this ink is obtained by dissolving water soluble dye in a solvent including water.

Another example is oil-base ink. As described in Japanese Unexamined Patent Publication No. 2(1990)-276871 and Japanese Unexamined Patent Publication No. 4 (1992)-248879, for example, this ink is obtained by dissolving dye in an organic solvent.

Another example is pigment ink. As described in Japanese Unexamined Patent Publication No. 4(1992)-214781, for example, this ink is obtained by dispersing pigment in a solvent including water.

Another example is microcapsule ink. As described in Japanese Unexamined Patent Publication No. 1(1989)-170672, for example, this ink contains dye formed into microcapsules.

Another example is hotmelt ink. As described in Japanese Unexamined Patent Publication No. 4(1992)-117468, for example, this ink is solid at normal room temperature and is melted at high temperature to be jetted by the ink-jet printer.

This invention can use any of these inks, although it is not restricted to the particulars of the cited examples.

Gradation expression is required to record a variable-density image using any of the ink-jet systems referred to above. Gradation recording systems known to be usable in the different ink-jet systems include the following.

One is a system employing dot diameter control. As described for example in Japanese Unexamined Patent Publication No. 63(1988)-134250, this system produces gradation by controlling the size of the ink dots adhered to the recording paper. Methods available for controlling dot diameter include those of controlling the width of a pulse signal applied to the recording head, that of varying jetted ink droplet diameter by a method using multiple types of recording heads differing in nozzle diameter, and the method described below of varying dot diameter by varying blotting through control of the number of ink overstrikes (Japanese Patent Publication Nos. 54 (1979)-21095 and 7(1995)-29446).

Another is a system employing ink overstrike. As described for example in Japanese Unexamined Patent Publication No. 3(1991)-231859, this system produces gradation by controlling the number of relatively low-density ink dots jetted at each point on the recording paper.

Another is a system that combines inks of different densities. As described for example in Japanese Patent Publication No. 2(1990)-14905, this system uses multiple recording heads which each jets ink of a specific color at different densities and controls gradation by selecting among the recording heads.

Another is a system that employs ink mist. As described for example in Japanese Unexamined Patent Publication No. 5(1993)-57893, this system jets ink from a head in the form of mist by use of, for example, ultrasonic wave vibration produced by piezoelectric elements and varies the density of clusters of fine dots on the recording paper by, for example, controlling the application period of the ultrasonic wave vibration.

Another is a system that employs the matrix method. As described for example in Japanese Unexamined Patent Publication No. 64(1989)-47553, this system produces each pixel on the recording paper as a matrix of m × n dots and varies the manner in which the matrix is filled in to control its average density. Various methods are available for filling the matrix in with dots, such as the error dispersion method, the Bayer systematic design method and the density pattern method.

Systems which suitably combine the foregoing gradation recording methods are also available, as described in Japanese Patent Publication No. 5(1993)-46744 and elsewhere. This invention can use any of the foregoing systems alone or in combinations, although it is not restricted to the particulars of the cited examples.

To obtain an image by two-dimensionally arranging the pixels recorded on recording paper by the foregoing ink-jet systems, the recording head has to be scanned two-dimensionally relative to the recording paper. Various methods are also available for this scanning, as set out below.

As described in Japanese Patent Publication No. 5(1993)-46744, for example, one method is to mechanically scan a recording head mounted on a carriage in the main scanning direction and feed the recording paper in the sub-scanning direction.

As described in Japanese Patent Publication No. 1(1989)-59111, for example, another method is to interchange the main scanning and the sub-scanning directions of the foregoing method, i.e., to use a screw or the like to move the recording head relative to a rotating drum on which the recording paper is attached.

As described in Japanese Unexamined Patent Publication No. 5(1993)-57893, for example, another method is to use a wide, multi-nozzle recording head to record in the main scanning direction without scanning and to feed the recording paper in the sub-scanning direction.

This invention can use any of these methods, although it is not restricted to the particulars of the cited examples.

The recording paper for use in the various ink-jet systems mentioned above will be described hereinbelow.

A support of each of the recording paper and the recording film may be constituted of chemical pulp, such as LBKP or NBKP; mechanical pulp, such as GP, PGW, RMP, TMP, CTMP, CMP, or CGP; or waste-paper pulp, such as DIP. When necessary, the support of each of the recording paper and the recording film may contain known additives, such as a pigment, a binder, a sizing agent, a fixing agent, a cationic agent, and a paper reinforcing agent. The support may be produced with various apparatuses, such as a wire paper machine and a cylinder paper machine. The support may also be constituted of synthetic paper or a plastic film sheet. The thickness of the support should preferably fall within the range of 10µm to 250µm, and the basis weight of the support should preferably fall within the range of 10g/m² to 250g/m². An ink receiving layer and a back coating layer may be formed directly on the support. Alternatively, after a size press or anchor coating layer has been formed with starch, a polyvinyl alcohol, or the like, the ink receiving layer and the back coating layer may be formed. The support may be subjected to flattening processing with a calendering apparatus, such as a machine calender, a TG calender, or a soft calender. In the image forming method and system in accordance with the present invention, the support of each of the recording paper and the recording film should preferably be constituted of paper or a plastic film, whose two surfaces are laminated with a polyolefin (such as a polyethylene, a polystyrene, a polyethylene terephthalate, a polybutene, or a copolymer of two or more of the above-enumerated compounds). The polyolefin should preferably contain a white pigment (such as titanium oxide or zinc oxide) or a tinting dye (such as cobalt blue, ultramarine blue, or neodymium oxide).

The ink receiving layer overlaid on the support of each of the recording paper and the recording film contains a pigment and an aqueous binder. As the pigment, a white pigment is preferable. Examples of the white pigments include an inorganic white pigment, such as calcium carbonate, kaolin, talc, clay, diatomaceous earth, synthetic amorphous silica, aluminum silicate, magnesium silicate, calcium silicate, aluminum hydroxide, alumina, lithopone, zeolite, barium sulfate, calcium sulfate, titanium dioxide, zinc sulfide, or zinc carbonate; and an organic pigment, such as a styrene type pigment, an acrylic type pigment, a urea resin, or a melamine resin. The white pigment contained in the ink receiving layer should preferably be a porous inorganic pigment, and should more preferably be a synthetic amorphous silica having a large pore area. The synthetic amorphous silica may be anhydrous silicic acid obtained with a dry production process or hydrous silicic acid obtained with a wet production process. The synthetic amorphous silica should preferably be hydrous silicic acid.

Examples of the aqueous binders, which may be contained in the ink receiving layer, include an water-soluble high-molecular weight compound, such as a polyvinyl alcohol, a silanol-modified polyvinyl alcohol, starch, cationized starch, casein, gelatin, carboxymethyl cellulose, hydroxyethyl cellulose, a polyvinyl pyrrolidone, a polyalkylene oxide, or a polyalkylene oxide derivative; and a water-dispersible high-molecular weight compound material, such as a styrene butadiene latex or an acrylic emulsion. The aqueous binder may be used alone, or two or more of the above-enumerated aqueous binders may be used in combination. In the image forming method and system in accordance with the present invention, among the above-enumerated aqueous binders, the polyvinyl alcohol and the silanol-modified polyvinyl alcohol are advantageous for good adhesion properties with respect to the pigment and a high peeling resistance of the ink receiving layer.

Besides the pigment and the aqueous binder, the ink receiving layer may also contain a mordant, a water-proofing agent, a light resistance improving agent, a surface-active agent, and other additives.

The mordant added to the ink receiving layer should preferably be passivated. Therefore, a polymer mordant is preferable.

The polymer mordants are described in, for example, Japanese Unexamined Patent Publication Nos. 48(1973)-28325, 54(1979)-74430, 54(1979)-124726, 55(1980)-22766, 55(1980)-142339, 60(1985)-23850, 60(1985)-23851, 60(1985)-23852, 60(1985)-23853, 60(1985)-57836, 60(1985)-60643, 60(1985)-118834, 60(1985)-122940, 60(1985)-122941, 60(1985)-122942, 60(1985)-235134, and 1(1989)-161236, and U.S. Patent Nos. 2,484,430, 2,548,564, 3,148,061, 3,309,690, 4,115,124, 4,124,386, 4,193,800, 4,273,853, 4,282,305, and 4,450,224. An image receiving material containing a polymer mordant described in, for example, Japanese Unexamined Patent Publication No. 1(1989)-161236, pp. 212-215 is particularly preferable. In cases where the polymer mordant described in Japanese Unexamined Patent Publication No. 1 (1989) -161236 is used, an image having good image quality is capable of being obtained, and the light resistance of the image is capable of being enhanced.

The water-proofing agent is efficient for the water-proofing of the image. As the water-proofing agent, a cationic resin is particularly preferable. Examples of the water-proofing agents include a polyamide polyamine epichlorohydrin, a polyethylene imine, a polyamine sulfone, a dimethyl diallyl ammonium chloride polymer, a cationic polyacryl amide, and colloidal silica. Among the above-enumerated cationic resins, the polyamide polyamine epichlorohydrin is particularly preferable. The content of the cationic resin should preferably fall within the range of 1% to 15% by weight with respect to the total solids of the ink receiving layer, and should more preferably fall within the range of 3% to 10% by weight with respect to the total solids of the ink receiving layer.

Examples of the light resistance improving agents include zinc sulfate, zinc oxide, a hindered amine type of anti-oxidant, and a benzotriazole type of ultraviolet light absorber, such as benzophenone. Among the above-enumerated compounds, zinc sulfate is particularly preferable.

Aside from the aforesaid recording sheets, there can also of course be used any of printing papers currently in wide use for printing and making hard copies, including copying machine paper, OHP sheet, paper for postcards etc., plastic sheet, cloths and so on.

As explained in the foregoing, the ink-jet printer is capable of using digital full color image signals read from the aforementioned photographic film to produce a high-quality full color image comparable to a silver halide photograph or printed image. Specifically, a high-quality full color image comparable to a silver halide photograph or printed image can be obtained by using ink suitable for the ink-jet printer, conducting optimum binary image processing by a combination of any of various gradation recording systems, and printing the processed image on whatever type of recording sheet is appropriate for the purpose concerned using a suitable scanning mechanism.

Thermal sublimation type transfer digital printers preferable for use in this invention will now be explained.

Various methods for obtaining full color images with the thermal sublimation type transfer system have been proposed. A number of these have been practically implemented. The method used to form a full color image by the thermal sublimation type transfer system generally is to transfer a dye to an image-receiving sheet by heating an ink sheet containing the heat diffusing dye in accordance with the digital image signal.

As disclosed in Japanese Unexamined Patent Publication No. 6(1994) -106861, for example, the heat diffusing dye is preferably one having a diene or dienophyl compound and the image-receiving sheet preferably contains a dienophyl compound or a diene compound.

Alternatively, the heat diffusing dye can be a chelatable dye such as disclosed in Japanese Unexamined Patent Publication No. 8(1996)-224966 and the image-receiving sheet can be one containing a metal ion- providing compound.

The heat diffusing dye can further be one containing a reactive amino group such as disclosed in Japanese Unexamined Patent Publication No. 8(1996)-276673. In this case, the image-receiving sheet preferably includes a polymer including an alkylacrylamidoglycolate alkylether group.

The support of the image-receiving sheet is preferably a polyethylene coated paper as disclosed in Japanese Unexamined Patent Publication No. 5(1993)-162473.

Otherwise the support of the image-receiving sheet can be one obtained by, as described in Japanese Unexamined Patent Publication No. 8(1996)-99472, laminating a minutely voided thermoplastic core layer and a thermoplastic surface layer substantially free of voids.

The invention image forming method and system can also preferably employ a digital printer which, as described earlier, exposes a heat-developable photosensitive material to a laser beam in accordance with the digital image signal , superimposes the heat-developable photosensitive material and an image-receiving material, and heat-development transfers the image recorded by laser beam exposure to the image-receiving material to form an image thereon. The Pictrography 3500 available from Fuji Photo Film Co., Ltd. is an example of a printer employing this system.

Although many of the aforesaid digital printers record an image by exposing a photosensitive material constituting the final support or some other photosensitive material, means of exposure is not limited to the aforesaid scanning with a laser beam and any means is usable insofar as it is capable of modulating the image signal in pixel units.

If an LED (light emitting diode) array is used as the light source, for example, modulation can be conducted by controlling the emission intensity of the individual LEDs. Otherwise a spatial modulation device can be used which controls the projection of recording light onto the photosensitive material by controlling the orientation of each of a large number of tiny mirrors arranged in a two-dimensional array so as to vary the direction of recording light reflection (called a "mirror array device"). Another usable method is that of controlling the projection of recording light onto the photosensitive material by controlling the transmittance or reflectance of each of a large number of liquid crystal cells arranged in a two-dimensional array so as to vary the direction of recording light transmission or reflection. Further, the aforesaid tiny mirrors can be arranged in a single line rather than an array, the photosensitive material be exposed along a line, and the recording light and the photosensitive material be moved relative to each other substantially perpendicularly to the exposure line so as to record a two-dimensional image.

Other usable ways of generating digital exposure light include that of generating directly modulated exposure light using a light-emitting type image display device and that of using a light-receiving type image display device which produces exposure light by spatially modulating light projected onto the photosensitive material. Usable light-emitting type image display devices include, for example, the CRT, the plasma display (PDP), the electroluminescent display (ELD), the vacuum fluorescent display (VFD) and the light emitting diode (LED). Usable light-receiving type image display devices include, for example, the electrochemical display (ECD), the electrophoretic image display (EPID), the suspended particle display (SPD), the twisting ball display (TBD) and the PLZT display.

The digital image signal can be used to record on unexposed photographic film instead of printing material to obtain a reproduced photographic film.

The direct thermosensitive (TA) type of printer, which may be used as the means for outputting a print, will be described hereinbelow.

With the direct thermosensitive (TA) type of printer, a print is outputted through thermal recording on the special-purpose direct thermosensitive type of full color recording material by use of an thermal head and in accordance with an image signal. The direct thermosensitive (TA) type of printer is described in, for example, "Fujifilm Research & Development," No. 40, pp. 8-12, 1995.

Also, the direct thermosensitive type of full color recording material used for the TA type of printer is described in, for example, "Fujifilm Research & Development," No. 40, pp. 13-21, 1995, Japanese Patent Publication No. 4(1992)-10879, and Japanese Unexamined Patent Publication Nos. 7(1995)-137441, 5(1993)-318908, 5(1993)-169802, 4(1992)-28585, 3(1991)-188688, and 3(1991)-1983.

Various other digital printers can also be applied for outputting the image signal read from the photographic film made of the aforesaid photosensitive material.

### (6) Order processing

In order to conduct the aforesaid file and print output, a user interface is required for receiving output processing order data from the customer. Specific input means preferably provided include display means such as a monitor for enabling the customer to confirm the desired photo frame and a keyboard or the like for inputting order data and responding to confirmation requests. It is also possible to adopt a touch panel of the type used in bank ATMs. In addition, a speaker and/or microphone can be installed for voice prompting input of order data and/or accepting voice input. Usable user interfaces include not only those employed in the field of photo services but also those used in any other field.

The actual order processing is preferably conducted, for instance, by displaying the sets of digital image signals read from the developed film side by side on the screen of a monitor and having the customer select the desired set or sets of digital image signals from among those displayed by, for example, clicking a mouse.

Conventionally, the photo service business has ordinarily been conducted by preparing prints or index prints of all photos at once at the time of development, whereafter the customers views the prints and orders additional prints of desired frames or requests trimming. In contrast, in the image forming method and system of this invention, the photo images are displayed on a monitor upon the completion of the development, read-out and image processing, and the customer orders services based on the displayed images.

In other words, prints or index prints are prepared immediately but the customer can order prints of only the desired frames in the desired number. As a result, unwanted prints need not be prepared, the conventional need to make repeated trips to the photo shop when multiple prints are required is eliminated, and the number of order mistakes tending to occur during transcription of numerals etc. stamped on the back of the prints to the order form at the time of order processing is reduced. The system is thus a friendly one both from the viewpoint of the user and the service provider.

The system is preferably capable of collecting payment for the output processing conducted based on the order information. For example, it is preferably arranged to indicate the total charge for the development and the prints on the monitor screen when the photographic film has been set and developed and the customer requests prints of desired frames on the screen. A configuration like that of a vending machine can be used for accepting cash payment.

### Examples

The present invention will further be illustrated by the following non-limitative examples.

### (1) Preparation and exposure of photographic film

Firstly, examples of how the photosensitive material used in the image forming method and system in accordance with the present invention is prepared and how the photographic film is prepared from the photosensitive material will be described hereinbelow.

### (1-1) Layer constitution of photosensitive material

Table 1 to Table 5 below show examples layer constitutions of the photosensitive materials.

**Table 1**

| | Sample No. 101 | | Sample No. 201 | |
|---|---|---|---|---|
| Layer constitution | Constituents | Amount added (mg/m²) | Constituents | Amount added (mg/m²) |
| Protective layer | Lime-treated gelatin | 914 | Lime-treated gelatin | 914 |
| | Matting agent(silica) | 50 | Matting agent(silica) | 50 |
| | Surface-active agent(g) | 30 | Surface-active agent(g) | 30 |
| | Surface-active agent (r) | 40 | Surface-active agent(r) | 40 |
| | Water-soluble polymer(s) | 15 | Water-soluble polymer(s) | 15 |
| | Hardener (t) | 110 | Hardener (t) | 110 |
| Intermediate layer | Lime-treated gelatin | 461 | Lime-treated gelatin | 461 |
| | Surface-active agent (r) | 5 | Surface-active agent (r) | 5 |
| | Formalin scavenger (u) | 300 | Formalin scavenger (u) | 300 |
| | Water-solublepolymer(s) | 15 | Water-soluble polymer(s) | 15 |
| Yellow color forming layer(high sensitivity layer) | Lime-treated gelatin | 1750 | Lime-treated gelatin | 1750 |
| | Emulsion (expressed in terms of coating weight of silver) | A-1b 550 | Emulsion (expressed in terms of coating weight of silver) | A-1b 550 |
| | 5-Butyl-benzotriazole silver salt | 165 | 5-Butyl-benzotriazole silver salt | 165 |
| | Yellow coupler (Y-1) | 179 | Yellow coupler (Y-2) | 179 |
| | Color developing agent | | Color developing agent | |
| | (DDEV-1) | 215 | (DDEV-2) | 215 |
| | Anti-foggant (d) | 6.2 | Anti-foggant (d) | 6.2 |
| | Surface-active agent(y) | 27 | Surface-active agent(y) | 27 |
| | | | High-boiling temperature organic solvent(g) | 197 |
| | Thermal solvent (TS-1) | 350 | Thermal solvent (TS-1) | 350 |
| Yellow color forming layer(medium sensitivity layer) | Lime-treated gelatin | 1470 | Lime-treated gelatin | 1470 |
| | Emulsion (expressed in terms of coating weight of silver) | A-2b 263 | Emulsion (expressed in terms of coating weight of silver) | A-2b 263 |
| | 5-Butyl-benzotriazole silver salt | 185 | 5-Butyl-benzotriazole silver salt | 185 |
| | Yellow coupler (Y-1) | 269 | Yellow coupler (Y-2) | 269 |
| | Color developing agent (DDEV-1) | 323 | Color developing agent (DDEV-2) | 323 |
| | Anti-foggant (d) | 5.9 | Anti-foggant (d) | 5.9 |
| | Surface-active agent(y) | 26 | Surface-active agent(y) | 26 |
| | | | High-boiling temperature organic solvent(g) | 296 |
| | Thermal solvent (TS-1) | 294 | Thermal solvent (TS-1) | 294 |
| Yellow color forming layer(low sensitivity layer) | Lime-treated gelatin | 1680 | Lime-treated gelatin | 1680 |
| | Emulsion (expressed in terms of coating weight of silver) | A-3b 240 | Emulsion (expressed in terms of coating weight of silver) | A-3b 240 |
| | 5-Butyl-benzotriazole silver salt | 206 | 5-Butyl-benzotriazole silver salt | 206 |
| | Yellow coupler (Y-1) | 448 | Yellow coupler (Y-2) | 448 |
| | Color developing agent (DDEV-1) | 539 | Color developing agent (DDEV-2) | 539 |
| | Anti-foggant (d) | 5.4 | Anti-foggant (d) | 5.4 |
| | Surface-active agent(y) | 30 | Surface-active agent(y) | 30 |
| | | | High-boiling temperature organic solvent(g) | 493 |
| | Thermal solvent (TS-1) | 336 | Thermal solvent (TS-1) | 336 |

**Table 2**

| | Sample No. 101 | | Sample No. 201 | |
|---|---|---|---|---|
| Layer constitution | Constituents | Amount added (mg/m²) | Constituents | Amount added (mg/m²) |
| Intermediate layer | Lime-treated gelatin | 560 | Lime-treated gelatin | 560 |
| | Surface-active agent (y) | 15 | Surface-active agent (y) | 15 |
| | Water-soluble polymer(s) | 15 | Water-soluble polymer(s) | 15 |
| Magenta color forming layer(high sensitivity layer) | Lime-treated gelatin | 781 | Lime-treated gelatin | 781 |
| | Emulsion (expressed in terms of coating weight of silver) | A-1g 488 | Emulsion (expressed in terms of coating weight of silver) | A-1g |
| | 5-Butyl-benzotriazole silver salt | 62 | 5-Butyl-benzotriazole silver salt | 62 |
| | Magenta coupler (M-1) | 47 | Magenta coupler (M-2) | 47 |
| | Color developing agent (DDEV-1) | 81 | Color developing agent (DDEV-2) | 81 |
| | Anti-foggant (d) | 5.5 | Anti-foggant (d) | 5.5 |
| | Surface-active agent (y) | 8 | Surface-active agent (y) | 8 |
| | | | High-boiling temperature organic solvent(g) | 64 |
| | Thermal solvent (TS-1) | 156 | Thermal solvent (TS-1) | 156 |
| Magenta color forming layer(medium sensitivity layer) | Lime-treated gelatin | 659 | Lime-treated gelatin | 659 |
| | Emulsion (expressed in terms of coating weight of silver) | A-2g 492 | Emulsion(expressed in terms of coating weight of silver) | A-2g 492 |
| | 5-Butyl-benzotriazole silver salt | 93 | 5-Butyl-benzotriazole silver salt | 93 |
| | Magenta coupler (M-1) | 94 | Magenta coupler (M-2) | 94 |
| | Color developing agent (DDEV-1) | 163 | Color developing agent (DDEV-2) | 163 |
| | Anti-foggant (d) | 11.1 | Anti-foggant (d) | 11.1 |
| | Surface-active agent (y) | 11 | Surface-active agent (y) | 11 |
| | | | High-boiling temperature organic solvent(g) | 128 |
| | Thermal solvent (TS-1) | 132 | Thermal solvent (TS-1) | 132 |

**Table 3**

| | Sample No. 101 | | Sample No. 201 | |
|---|---|---|---|---|
| Layer constitution | Constituents | Amount added (mg/m²) | Constituents | Amount added (mg/m²) |
| Magenta color forming layer(low sensitivity layer) | Lime-treated gelatin | 711 | Lime-treated gelatin | 711 |
| | Emulsion (expressed in terms of coating weight of silver) | A-3g 240 | Emulsion (expressed in terms of coating weight of silver) | A-3g 240 |
| | 5-Butyl-benzotriazole silver salt | 155 | 5-Butyl-benzotriazole silver salt | 155 |
| | Magenta coupler (M-1) | 234 | Magenta coupler (M-2) | 234 |
| | Color developing agent (DDEV-1) | 407 | Color developing agent (DDEV-2) | 407 |
| | Anti-foggant (d) | 5.4 | Anti-foggant (d) | 5.4 |
| | Surface-active agent (y) | 29 | Surface-active agent (y) | 29 |
| | | | High-boiling temperature organic solvent(g) | 320 |
| | Thermal solvent (TS-1) | 142 | Thermal solvent (TS-1) | 142 |
| Intermediate layer | Lime-treated gelatin | 850 | Lime-treated gelatin | 850 |
| | Surface-active agent (y) | 15 | Surface-active agent (y) | 15 |
| | Formalin scavenger (u) | 300 | Formalin scavenger (u) | 300 |
| | Water-soluble polymer(s) | 15 | Water-soluble polymer (s) | 15 |
| Cyan color forming layer(high sensitivity layer) | Lime-treated gelatin | 842 | Lime-treated gelatin | 842 |
| | Emulsion(expressed in terms of coating weight of silver) | A-1r 550 | Emulsion(expressed in terms of coating weight of silver) | A-1r 550 |
| | 5-Butyl-benzotriazole silver salt | 59 | 5-Butyl-benzotriazole silver salt | 59 |
| | Cyan coupler (C-1) | 19 | Cyan coupler (C-2) | 19 |
| | Color developing | 77 | Color developing | 77 |
| | agent (DDEV-1) | | agent (DDEV-3) | |
| | Anti-foggant (d) | 6.2 | Anti-foggant (d) | 6.2 |
| | Surface-active agent (y) | 5 | Surface-active agent (y) | 5 |
| | | | High-boiling temperature Organic solvent(g) | 48 |
| | Thermal solvent (TS-1) | 168 | Thermal solvent (TS-1) | 168 |

**Table 4**

| | Sample No. 101 | | Sample No. 201 | |
|---|---|---|---|---|
| Layer constitution | Constituents | Amount added (mg/m²) | Constituents | Amount added (mg/m²) |
| Cyan color forming layer(medium sensitivity layer) | Lime-treated gelatin | 475 | Lime-treated gelatin | 475 |
| | Emulsion(expressed in terms of coating weight of silver) | A-2r 600 | Emulsion(expressed in terms of coating weight of silver) | A-2r 600 |
| | 5-Butyl-benzotriazole silver salt | 132 | 5-Butyl-benzotriazole silver salt | 132 |
| | Cyan coupler (C-1) | 56 | Cyan coupler (C-2) | 56 |
| | Color developing agent (DDEV-1) | 231 | Color developing agent (DDEV-3) | 231 |
| | Anti-foggant (d) | 13.5 | Anti-foggant (d) | 13.5 |
| | Surface-active agent (y) | 10 | Surface-active agent (y) | 10 |
| | | | High-boiling temperature organic solvent(g) | 143 |
| | Thermal solvent (TS-1) | 95 | Thermal solvent (TS-1) | 95 |
| Cyan color forming layer(low sensitivity layer) | Lime-treated gelatin | 825 | Lime-treated gelatin | 825 |
| | Emulsion(expressed in terms of coating weight of silver) | A-3r 300 | Emulsion(expressed in terms of coating weight of silver) | A-3r 300 |
| | 5-Butyl-benzotriazole silver salt | 157 | 5-Butyl-benzotriazole silver salt | 157 |
| | Cyan coupler (C-1) | 99 | Cyan coupler (C-2) | 99 |
| | Color developing agent (DDEV-1) | 411 | Color developing agent (DDEV-3) | 411 |
| | Anti-foggant (d) | 6.8 | Anti-foggant (d) | 6.8 |
| | Surface-active agent (y) | 17 | Surface-active agent (y) | 17 |
| | | | High-boiling temperature organic solvent(g) | 255 |
| | Thermal solvent (TS-1) | 165 | Thermal solvent (TS-1) | 165 |

**Table 5**

| | Sample No. 101 | | Sample No. 201 | |
|---|---|---|---|---|
| Layer constitution | Constituents | Amount added (mg/m²) | Constituents | Amount added (mg/m²) |
| Anti-halation layer | Lime-treated gelatin | 3000 | Lime-treated gelatin | 3000 |
| | Surface-active agent (y) | 30 | Surface-active agent (y) | 30 |
| | Base precursor BP-35 | 2000 | Base precursor BP-35 | 2000 |
| | Cyanine dye compound | 260 | Cyanine dye compound | 260 |
| | Surface-active agent (r) | 120 | Surface-active agent (r) | 120 |
| | Water-soluble polymer (s) | 15 | Water-soluble polymer (s) | 15 |
| Transparent PEN base (96µm) | | | | |

### (1-2) Preparation of major constituents

How the major constituents shown in Table 1 to Table 5 above are prepared will be described hereinbelow.

### Preparation of high sensitivity silver halide emulsion

Firstly, 930ml of distilled water, which contained 0.37g of gelatin having an average molecular weight of 15,000, 0.37g of oxidation-treated gelatin, and 0.7g of potassium bromide, was introduced into a reaction vessel, and the temperature was raised to 38°C. Into the resulting solution, 30ml of an aqueous solution containing 0.34g of silver nitrate and 30ml of an aqueous solution containing 0.24g of potassium bromide were added with vigorous stirring over a period of 20 seconds. After the addition was finished, the temperature of the reaction mixture was kept at 40°C for one minute and was then raised to 75°C. After 27.0g of gelatin, in which the amino group had been modified with trimellitic acid, and 200ml of distilled water were added together, 100ml of an aqueous solution containing 23.36g of silver nitrate and 80ml of an aqueous solution containing 16.37g of potassium bromide were added over a period of 36 minutes, while the addition flow rate was being increased. Thereafter, 250ml of an aqueous solution containing 83.2g of silver nitrate and an aqueous solution containing potassium iodide and potassium bromide in a potassium iodide-to-potassium bromide molar ratio of 3:97 (concentration of potassium bromide: 26%) were added over a period of 60 minutes, while the addition flow rate was being increased, and such that the silver potential of the reaction mixture became -50mV with respect to a saturated calomel electrode. Further, 75ml of an aqueous solution containing 18.7g of silver nitrate and an aqueous 21.9% solution of potassium bromide were added over a period of 10 minutes, such that the silver potential of the reaction mixture became 0mV with respect to the saturated calomel electrode. After the addition was finished, the temperature was kept at 75°C for one minute. The temperature of the reaction mixture was then lowered to 40°C. Thereafter, 100ml of an aqueous solution containing 10.5g of a p-iodoacetamidobenzene sulfonic acid sodium salt (monohydrate) was added, and the pH value of the reaction mixture was adjusted at 9.0. Thereafter, 50ml of an aqueous solution containing 4.3g of sodium sulfite was added. After the addition was finished, the temperature of the reaction mixture was kept at 40°C for a period of 3 minutes and was then raised to 55°C. After the pH value of the reaction mixture was adjusted at 5.8, 0.8mg of a benzenethiosulfinic acid sodium salt, 0.04mg of potassium hexachloroiridate (IV), and 5.5g of potassium bromide were added, and the temperature was kept at 55°C for a period of 1 minute. Further, 180ml of an aqueous solution containing 44.3g of silver nitrate and 160ml of an aqueous solution, which contained 34.0g of potassium bromide and 8.9mg of potassium hexacyanoferrate (II), were added over a period of 30 minutes. The temperature was then lowered, and desalting was performed in accordance with the conventional procedure. After the desalting was finished, gelatin was added such that the proportion might become equal to 7% by weight, and the pH value was adjusted at 6.2.

The thus obtained emulsion was an emulsion comprising hexagonal tabular grains, which had a mean grain size, expressed in terms of the sphere-equivalent diameter, of 1.15µ m, a mean grain thickness of 0.12µ, and a mean aspect ratio of 24.0. The thus obtained emulsion was taken as an emulsion A-1.

Thereafter, an emulsion A-2 comprising hexagonal tabular grains, which had a mean grain size, expressed in terms of the sphere-equivalent diameter, of 0.75µ m, a mean grain thickness of 0.11µ, and a mean aspect ratio of 14.0, was prepared in the same manner as that in the emulsion A-1, except that the amounts of silver nitrate and potassium bromide added at the original stage of the grain formation were changed, and the number of the formed nucleuses was thereby changed. Also, an emulsion A-3 comprising hexagonal tabular grains, which had a mean grain size, expressed in terms of the sphere-equivalent diameter, of 0.52µm, a mean grain thickness of 0.09µ, and a mean aspect ratio of 11.3, was prepared in the same manner as that in the emulsion A-1, except that the amounts of silver nitrate and potassium bromide added at the original stage of the grain formation were changed, and the number of the formed nucleuses was thereby changed. However, the amounts of potassium hexachloroiridate(IV) and potassium hexacyanoferrate(II) were altered in inverse proportion to the grain volume. Also, the amount of the p-iodoacetamidobenzene sulfonic acid sodium salt (monohydrate) was altered in proportion to the grain perimeter.

Spectral sensitization and chemical sensitization were performed on the emulsion A-1 by adding an aqueous 1% solution of potassium iodide to the emulsion A-1 at 40°C, and thereafter adding 8.2× 10⁻⁴ mol of a spectral sensitizing dye shown below, a compound 1 shown below, potassium thiocyanate, chloroauric acid, sodium thiosulfate, and mono(pentafluorophenyl)diphenyl phosphine selenide to the emulsion A-1. After the chemical sensitization was finished, 1.2× 10⁻⁴ mol of a stabilizer S shown below was added. At this time, the amount of the chemical sensitizer was adjusted such that the extent of the chemical sensitization of the emulsion might become optimum.

### Sensitizing dye I for blue-sensitive emulsion

2.5× 10⁻⁴ mol/mol of silver with respect to emulsion A-1

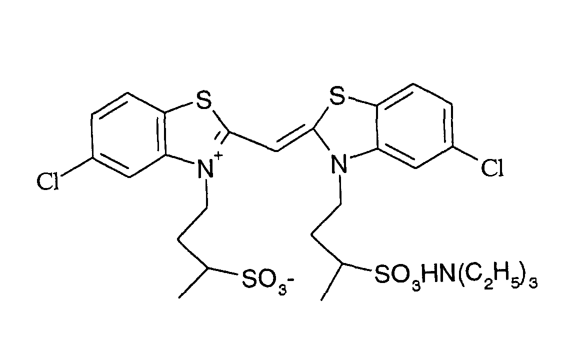

### Compound 1

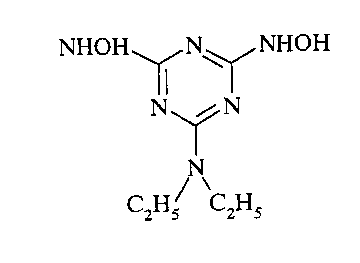

### Stabilizer S (mixture of compounds shown below)

2×10⁻⁴ mol/mol of silver 8×10⁻⁵ mol/mol of silver with respect to emulsion A-1

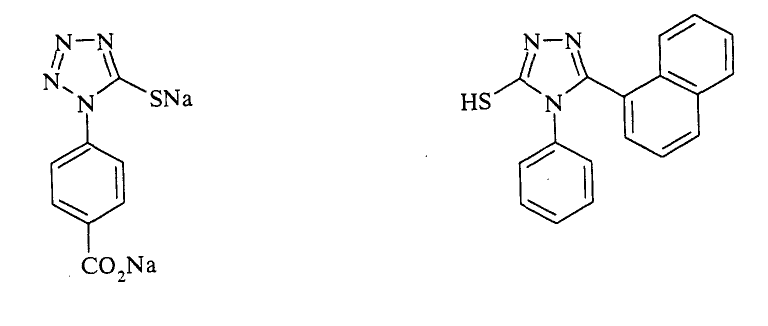

The thus prepared blue-sensitive emulsion was taken as an emulsion A-1. The spectral sensitization and the chemical sensitization were performed on the emulsion A-2 and the emulsion A-3 in the same manner as that described above, and an emulsion A-2b and an emulsion A-3B were thereby prepared. However, the amount of the spectral sensitizing dye added was altered in accordance with the surface area of the silver halide grains contained in each emulsion. Also, the amounts of the chemicals used for the chemical sensitization were adjusted such that the extent of the chemical sensitization of each emulsion might become optimum.

In the same manner as that described above, green-sensitive emulsions A-1g, A-2g, A-3g, and red-sensitive emulsions A-1r, A-2r, A-3r were prepared by altering the kind of the spectral sensitizing dye.

### Sensitizing dye I for green-sensitive emulsion

5.5× 10⁻⁴ mol/mol of silver with respect to emulsion A-1

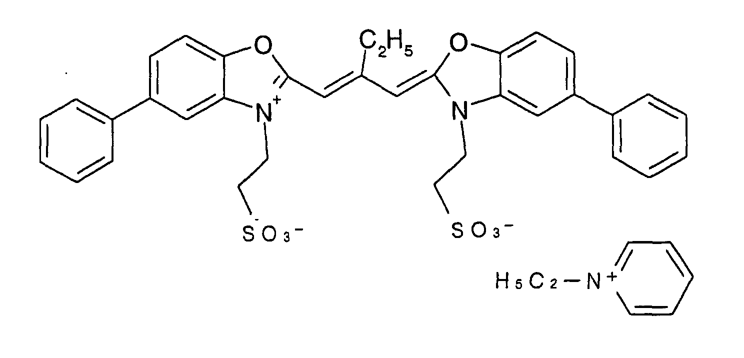

### Sensitizing dye II for green-sensitive emulsion

1.3× 10⁻⁴ mol/mol of silver with respect to emulsion A-1

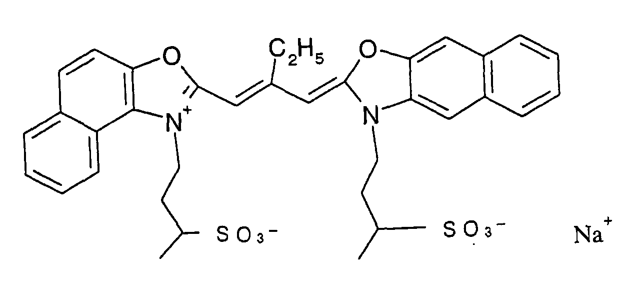

### Sensitizing dye III for green-sensitive emulsion

4.8× 10⁻⁵ mol/mol of silver with respect to emulsion A-1

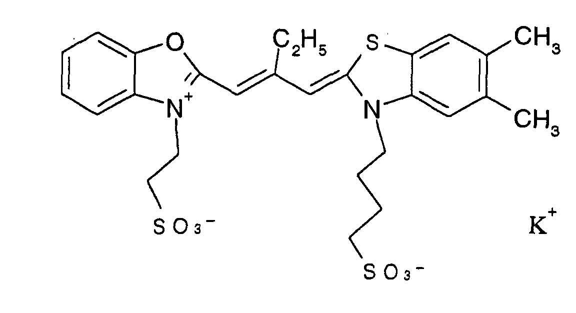

### Sensitizing dye I for red-sensitive emulsion

2.5× 10⁻⁴ mol/mol of silver with respect to emulsion A-1

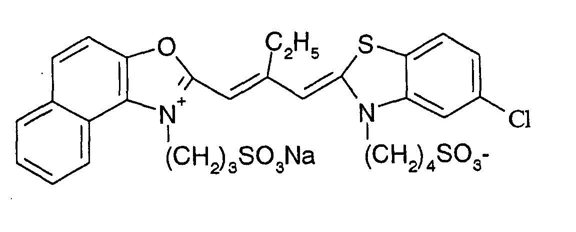

### Sensitizing dye II for red-sensitive emulsion

6.3× 10⁻⁵ mol/mol of silver with respect to emulsion A-1

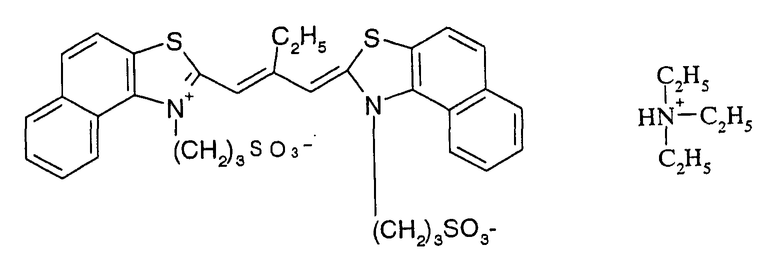

### Sensitizing dye III for red-sensitive emulsion

3.1× 10⁻⁴ mol/mol of silver with respect to emulsion A-1

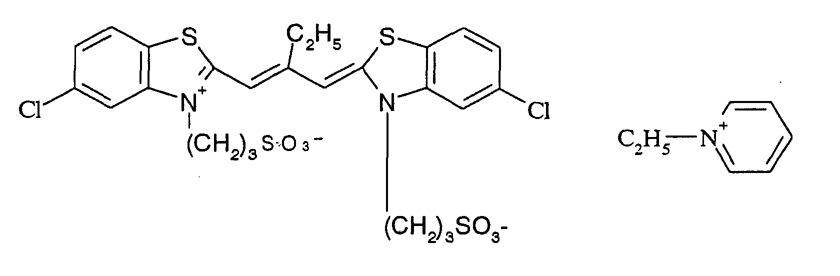

### Preparation of 5-butylbenzotriazole silver salt

After 1.0g of 5-butylbenzotriazole, 0.24g of sodium hydroxide, and 25g of phthalated gelatin were dissolved in 700ml of water, the resulting solution was kept at 60°C and stirred. Thereafter, a solution containing 5g of 5-butylbenzotriazole and 1.2g of sodium hydroxide in 150ml of water and a solution containing 5g of silver nitrate in 150ml of water were added simultaneously over a period of 4 minutes to the solution described above. After the stirring was performed over a period of 5 minutes, a solution containing 5g of 5-butylbenzotriazole and 1.2g of sodium hydroxide in 150ml of water and a solution containing 5g of silver nitrate in 150ml of water were added simultaneously over a period of 6 minutes to the solution described above. The emulsion was allowed to undergo sedimentation by the adjustment of the pH value of the emulsion, and an excess of salt was removed. Thereafter, the pH value was adjusted at 6.0, and 470g of a 5-butylbenzotriazole silver salt emulsion was thereby obtained.

### Preparation of solid fine grain dispersion (a) of base precursor

Firstly, 64g of a base precursor compound BP-35 and 10g of a surface-active agent (Demol N, supplied by Kao Corp.) were mixed with 220ml of distilled water. The resulting mixture was subjected to a bead-dispersing process with a sand mill (1/4 gallon sand grinder mill, supplied by Imex Co., Ltd.). In this manner, a solid fine grain dispersion (a) of the base precursor compound having a mean grain diameter of 0.2µ m was obtained.

### Base precursor compound BP-35

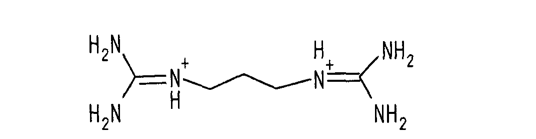

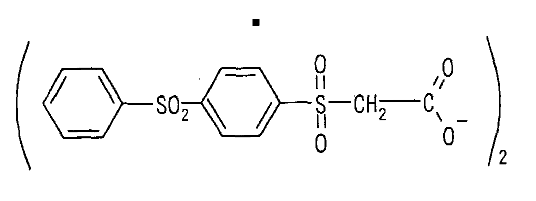

### Preparation of solid fine grain dispersion of dye

Firstly, 9.6g of a cyanine dye compound 13 and 5.8g of a p-dodecylbenzene sulfonic acid sodium salt were mixed with 305ml of distilled water. The resulting mixture was subjected to a bead-dispersing process with a sand mill (1/4 gallon sand grinder mill, supplied by Imex Co., Ltd.). In this manner, a solid fine grain dispersion of the dye having a mean grain diameter of 0.2µ m was obtained.

### Cyanine dye compound

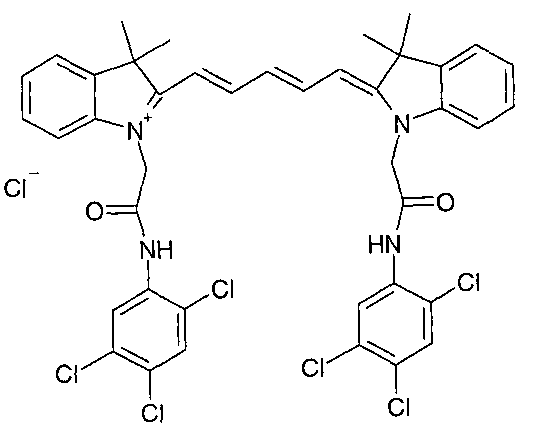

### Preparation of anti-halation layer coating composition

A coating composition for forming an anti-halation layer was prepared by mixing 17g of gelatin, 9.6g of a polyacryl amide, 70g of the solid fine grain dispersion (a) of the base precursor compound described above, 56g of the solid fine grain dispersion of the dye described above, 1.5g of polymethyl methacrylate fine grains (mean grain size: 6.5µ m), 0.03g of benzoisothiazolinon, 2.2g of a polyethylene sulfonic acid sodium salt, 0.2g of a blue dye compound 14, 3.9g of a yellow dye compound 15, and 844ml of water.

### Preparation of support

For the preparation of the photosensitive material, the preparation of a support and the application of a subbing layer, an anti-static layer (a first backing layer), a magnetic recording layer (a second backing layer), and a third backing layer were performed in the manner described below.

### (1) Preparation of support

The support employed in the examples was prepared in the manner described below. Specifically, 100 parts by weight of a polyethylene-2,6-naphthalenedicarboxylate (PEN) and 2 parts by weight of an ultraviolet light absorber (Tinuvin P.326, supplied by Ciba-Geigy Corporation) were mixed uniformly. The resulting mixture was melted at 300°C and extruded through a T-die. The extruded material was subjected to 3.3-fold longitudinal orientation and then to 4.0-fold lateral orientation. The oriented material was then subjected to heat setting at 250°C for 6 seconds, and a 90µ m-thick PEN film was thereby obtained. The PEN film contained appropriate amounts of a blue dye, a magenta dye, and a yellow dye (① - -1, ① -4, ① -6, ① -24, ① -26, ① -27, and ① ① -5 described in Kokaigiho. , Kogi No. 94-6023). Also, the PEN film was wound around a stainless steel core having a diameter of 30cm and imparted with a heat history at 110°C for 48 hours, such that the PEN film might become resistant to roll set curl.

### (2) Application of subbing layer

Glow discharge treatment was conducted on the two surfaces of the PEN support in the manner described below. Specifically, four rod-like electrodes having a diameter of 2cm and a length of 40cm were fixed at 10cm intervals to an insulating plate within a vacuum tank. At this time, the electrodes were set such that the film might move at a position spaced by 15cm from the electrodes. Also, a 50cm-diameter heating roll with a temperature controller was located at a position on the side upstream from and close to the electrode zone, such that the film might come into contact with 3/4 of the circumference of the heating roll. The biaxially oriented film having a thickness of 90µ m and a width of 30cm was moved and heated by the heating roll such that the temperature of the film surface between the heating roll and the electrode zone might become equal to 115°C. Thereafter, the film was conveyed at a speed of 15cm/second and subjected to the glow discharge treatment.

The pressure in the vacuum tank was set at 26.5Pa, and the H₂O partial pressure in the atmospheric gas was set at 75%. The discharge frequency was 30kHz, the output was 2,500W, and the degree of treatment was 0.5kV^{.} A^{.} minute/m². The vacuum glow discharge electrodes were utilized in accordance with the technique described in Japanese Unexamined Patent Publication No. 7(1995)-003056.

A subbing layer having the composition shown below was formed on one surface (the emulsion side surface) of the PEN substrate having been subjected to the glow discharge treatment, such that the dry film thickness might become equal to 0.02µ m. Drying was performed at 115°C for 3 minutes.

| | |
|---|---|
| Gelatin | 83 parts by weight |
| Water | 291 parts by weight |
| Salicylic acid | 18 parts by weight |
| Aerosil R972 (colloidal silica, supplied by Nippon Aerosil Corp.) | 1 part by weight |
| Methanol 6,900 parts by weight n-Propanol | 830 parts by weight |
| Polyamide-epichlorohydrin resin (described in Japanese Unexamined Patent Publication No. 51(1976)-3619) | 25 parts by weight |

### (3) Application of anti-static layer (first backing layer)

While an aqueous 1N sodium hydroxide solution was being added to a mixture of 40 parts by weight of SN-100 (electrically conductive fine grains, supplied by Ishihara Sangyo Kaisha, Ltd.) and 60 parts by weight of water, the resulting mixture was subjected to a coarse dispersing process with a stirrer. Thereafter, a dispersing process was performed with a horizontal type sand mill, and an electrically conductive fine grain dispersion (pH=7.0) containing secondary grains with a mean grain diameter of 0.06µ m was obtained.

A coating composition containing constituents shown below was applied onto the surface (the back side surface) of the surface-treated PEN support, such that the coating weight of the electrically conductive fine grains might become equal to 270mg/m². Drying was performed at 115°C for 3 minutes.

| | |
|---|---|
| SN-100 (electrically conductive fine grains, supplied by Ishihara Sangyo Kaisha, Ltd.) | 270 parts by weight |
| Gelatin | 23 parts by weight |
| Reodol TW-L120 (surface-active agent, supplied by Kao Corp.) | 6 parts by weight |
| Denacol EX-521 (hardener, supplied by Nagase Chemical Industries Ltd.) | 9 parts by weight |
| Water | 5,000 parts by weight |

### (4) Application of magnetic recording layer (second backing layer)

Surfaces of magnetic particles CSF-4085V2 (Co-adhered γ-Fe₂O₃, supplied by Toda Kogyo Corp.) were treated with X-12-641 (a silane coupling agent, supplied by Shin-Etsu Chemical Co., Ltd.) in a proportion of 16% by weight with respect to the magnetic particles.

A coating composition containing constituents shown below was applied onto the first backing layer, such that the coating weight of CSF-4085V2 having been treated with the silane coupling agent might become equal to 62mg/m². The process for dispersing the magnetic particles and the polishing particles was performed in accordance with the technique described in Japanese Unexamined Patent Publication No. 6(1994)-035092. Drying was performed at 115°C for 1 minute.

| | |
|---|---|
| Diacetyl cellulose (binder) | 1,140 parts by weight |
| X-12-641-treated CSF-4085V2 (magnetic particles) | 62 parts by weight |
| AKP-50 (alumina, polishing particles, supplied by Sumitomo Chemical Co., Ltd.) | 40 parts by weight |
| Myrionate MR-400 (hardener, supplied by Nippon Polyurethane K.K.) | 71 parts by weight |
| Cyclohexanone | 12,000 parts by weight |
| Methyl ethyl ketone | 12,000 parts by weight |

An increase in color density of DB of the magnetic recording layer with X-light (blue filter) was approximately 0.1. The saturation magnetization moment of the magnetic recording layer was 4.2emu/g, the coercive force was 7.3× 10⁴A/m, and the squareness ratio was 65%.

### (5) Application of third backing layer

The third backing layer was applied onto the magnetic recording layer side of the photosensitive material.

Wax (1-2) having the structure shown below was emulsified and dispersed in water with a high-pressure homogenizer, and an aqueous wax dispersion having a concentration of 10% by weight and a weight-average diameter of 0.25µ m was thereby obtained.
Wax (1-2): n-C₁₇H₃₅COOC₄₀H₈₁-n

A coating composition containing constituents shown below was applied onto the magnetic recording layer (the second backing layer), such that the coating weight of the wax might become equal to 27mg/m². Drying was performed at 115°C for 1 minute.

| | |
|---|---|
| Aqueous wax dispersion described above (10% by weight) | 270 parts by weight |
| Deionized water | 176 parts by weight |
| Ethanol | 7,123 parts by weight |
| Cyclohexanone | 841 parts by weight |

### Preparation of microcrystal dispersions of color developing agent, coupler, and thermal solvent

Each of the microcrystal dispersions of the color developing agent (DDEV-1), the couplers Y-1, M-1, and C-1), and the thermal solvent (TS-1) was prepared in the manner described below. Specifically, 0.5g of Alkanol XC and 100g of water were added to 50g of the target compound and 30g of an aqueous 10-mass% solution of a modified polyvinyl alcohol (Poval MP203, supplied by Kuraray Co., Ltd.). The resulting mixture was mixed intimately into a slurry. The slurry was fed by a diaphragm pump and subjected to a dispersing process for 6 hours with a horizontal type of sand mill (UVM-2, supplied by Imex Co., Ltd.), which had been loaded with zirconia beads having a mean diameter of 0.5mm. Thereafter, water was added such that the concentration of the target compounds might become equal to 10% by mass, and the resulting mixture was worked to yield a dispersion of the target compound. The grains contained in the dispersion of the target compound had a median diameter of 0.40µ m and the maximum grain diameter of at most 2.0µ m. The obtained dispersion of the target compound was filtered with a polypropylene filter having a pore diameter of 10.0µ m, and foreign substances, such as dust, were thereby removed. The dispersion was then stored. Immediately before the dispersion was used, it was again filtered with a polypropylene filter having a pore diameter of 10.0µm.

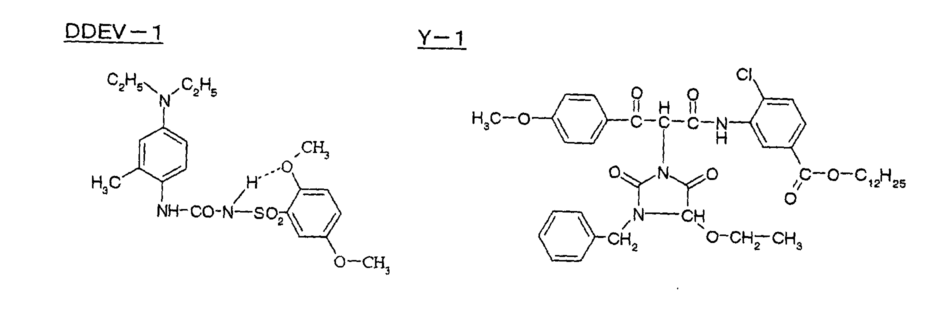

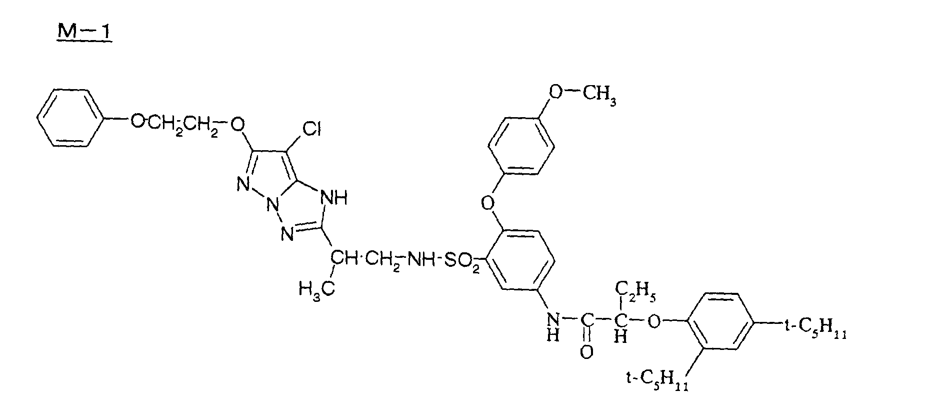

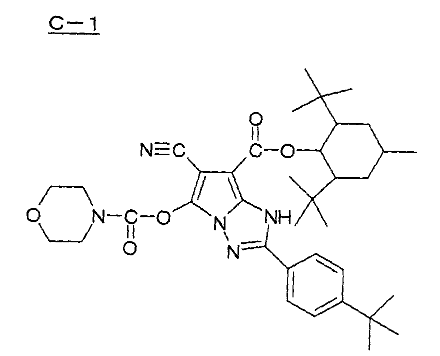

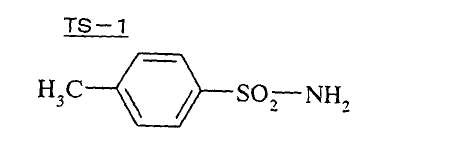

### Preparation of emulsified dispersions for photosensitive material sample No. 201

A yellow color forming emulsified dispersion was prepared in the manner described below. Specifically, 21.6g of a color developing agent (DDEV-2), 21.6g of a coupler (Y-2), 21.6g of a high boiling temperature organic solvent (g), and 40.0ml of ethyl acetate were dissolved at 60°C. The obtained solution was mixed into 300g of an aqueous solution, which contained 18.7g of lime-treated gelatin and 1.8g of a dodecylbenzene sulfonic acid solid salt. The resulting mixture was subjected to an emulsifying and dispersing process for 20 minutes at 10,000 rpm with a dissolver stirrer. Thereafter, distilled water was added such that the total amount might become equal to 540g, and mixing was performed for 10 minutes at 2,000 rpm. In the same manner as that described above, a yellow color forming emulsified dispersion was prepared by changing to 21.6g of the color developing agent (DDEV-2) and 21.6g of a coupler (M-2). Also, a cyan color forming emulsified dispersion was prepared by changing to 21.6g of a color developing agent (DDEV-3) and 21.6g of a coupler (C-2).

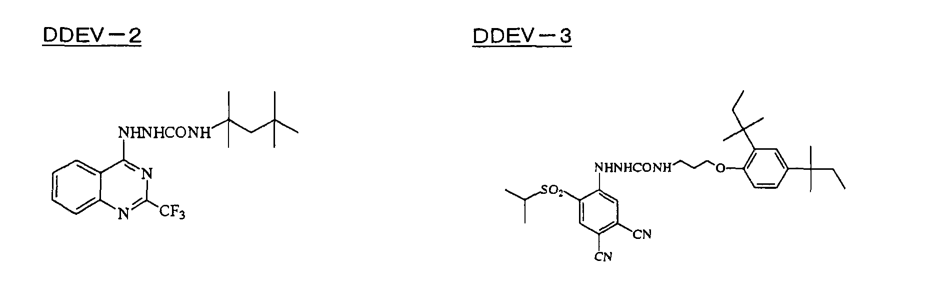

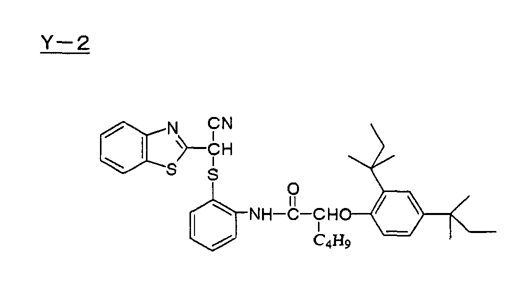

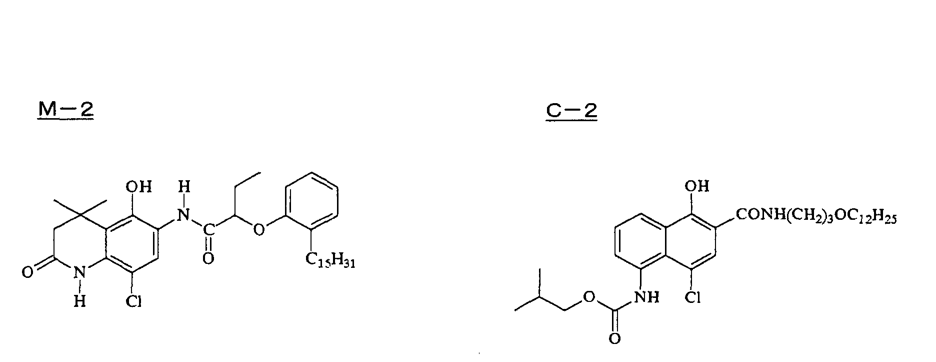

### High boiling temperature organic solvent (g)

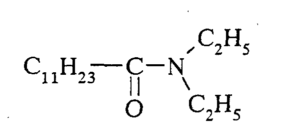

The multi-layer color photosensitive material sample No. 201 for heat development shown in Table 1 above was prepared by using the thus prepared emulsified dispersions, the emulsions described above, the dispersions described above, and the support described above.

### Anti-foggant (d)

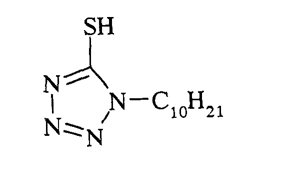

### Surface-active agent (g)

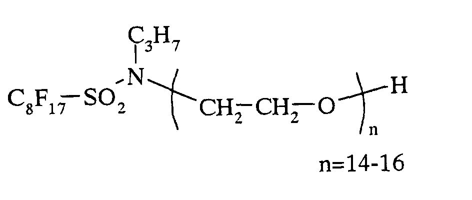

### Surface-active agent (r)

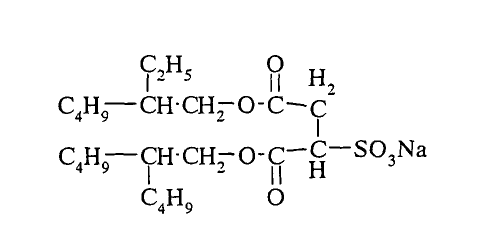

### Water-soluble polymer (s)

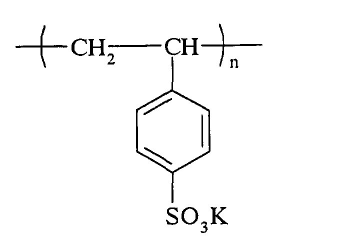

### Hardener (t)

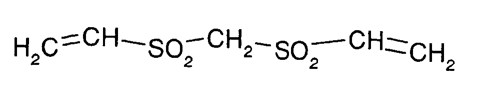

### Formalin scavenger(u)

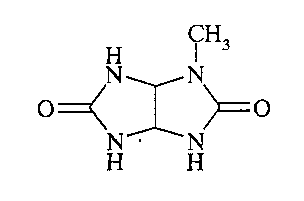

### Surface-active agent (y)

Alkanol XC

### (1-3) Preparation and exposure of photographic film

Sample pieces were cut out from the photosensitive material sample Nos. 101 and 201 described above and were exposed via a continuous wedge for 1/100 second under a white light source at 500 lux in accordance with the procedure (ANSI PH2.27) for determining the ISO sensitivity. After the exposure, the sample pieces were subjected to heat development at 160°C for 20 seconds by use of a heat drum. The transmission densities of the developed samples having been obtained from the heat development were measured, and fog and the maximum density were calculated.

The prepared photosensitive materials were cut to APS format, i.e., to a width of 24 mm and a length of 160 cm, perforated, loaded into an APS camera, and used to photograph human subjects and a Macbeth chart. While the following explanation is made with respect to the APS format, the photosensitive material of this invention is of course also usable in the 135 film format.

Similarly cut photosensitive materials were formed 0.7 mm inward from one longitudinal side with pairs of 2 mm x 2 mm perforations. The members of each pair were separated by 5.8 mm and the pairs were formed at intervals of 32 mm. Each cut sample was loaded into a plastic film cartridge of the type illustrated in Figures 1- 7 of U.S. Pat. No. 5,296,887.

The samples accommodated in the cartridges were loaded into lens-fitted photographic film units of the type illustrated in Figure 2 of European Patent Publication No. 723,180.

Various subjects differing in brightness were simultaneously photographed using flashless lens-fitted photographic film units each loaded with a so-obtained cartridge containing a different type of film. As in the case of using APS cameras, images of excellent graininess and sharpness were obtained.

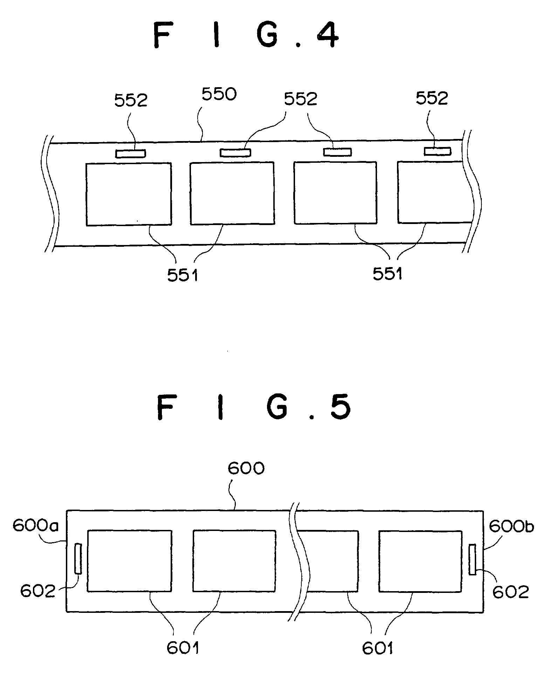

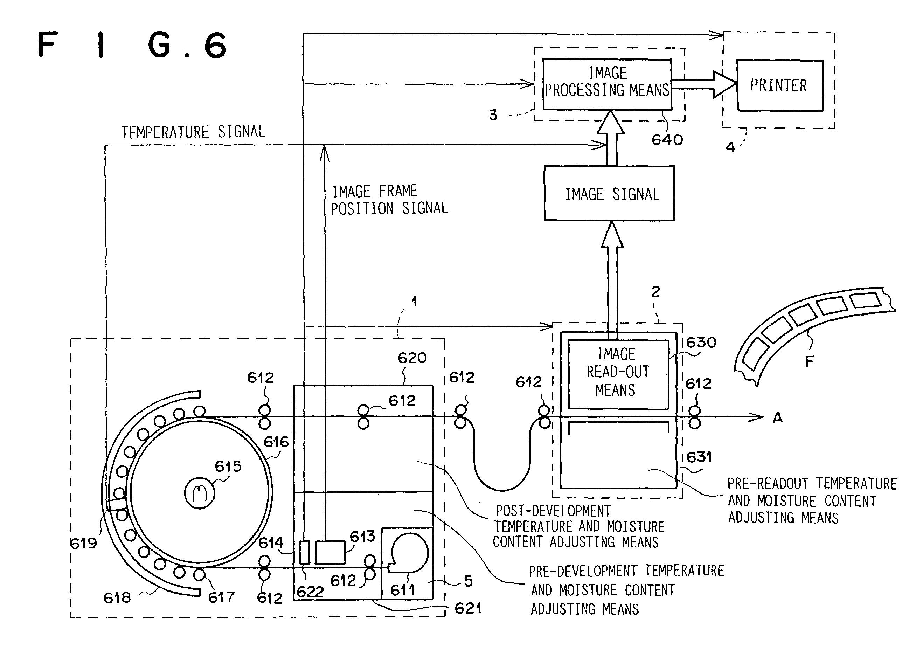

Besides the exposure operation conducted with the photographing of the object image by use of the camera, or the like, a patch for development confirmation may be exposed during the production of the photographic film comprising the photosensitive material employed in the image forming method and system in accordance with the present invention. The patch is constituted such that an image having a predetermined image density appears on the patch after the development. By the confirmation with the image formed on the patch, the user is capable of judging whether the development processing has been or has not been performed correctly. By way of example, as illustrated in Figure 4, a patch 552 may be located at a region surrounding each of images 551, 551, ... recorded on a photographic film 550. Alternatively, as illustrated in Figure 5, instead of being located for each of images 601, 601, ... on a photographic film 600, a patch 602 may be located at each of a leading end area 600a and a tail end area 600b of the photographic film 600. The patch may have a character shape, a figure shape, or the like. Also, the image forming system in accordance with the present invention may be provided with development judging means (not shown) for measuring the image density on the patch or detecting the character shape or the figure shape of the patch and judging whether the development processing has been or has not been performed correctly. The development judging means may be located at any position, at which the development judging means is capable of detecting the patch after being developed. For example, the development judging means maybe located in a read-out section 2 shown in Figure 6, which will be described later. In such cases, in cases where it has been found that the development processing is not conducted correctly, the occurrence of development error may be displayed by predetermined displaying means (not shown).

### (2) Image forming system

An embodiment of the image forming system according to the invention will now be explained in detail. The configuration of the image forming system of this invention is shown by the block diagram of Figure 2 touched on briefly earlier. The blocks of the system shown in this diagram can all be housed in a single case or can be constituted as stand-alone units, such as a developer, a film scanner, a personal computer for image processing, a digital printer and the like, interconnected into a single system. Otherwise, each block can be provided as a separate component mountable in a dedicated case and a system suitable for the needs at hand can be built by selecting the required components and mounting them in the case.

Since various types of media drives and digital printers can be utilized in the output section 4, this section of the system is preferably equipped with drives and printer of different types and arranged to switch among them automatically in response to the order received from the customer.

The case of the all-in-one system incorporating all system functions can be constituted as a generally box-like unit of somewhat smaller size the conventional laboratory system. It is not limited to this shape, however, and can have various appearances depending on the type of digital printer and user interface.

The embodiment described in the following comprises a developer-reader and an output section. The developer-reader is made up of the setting section 5, the development processing section 1, the read-out section 2 and the image processing section 3 shown in the block diagram of Figure 2. The output section, indicated by reference numeral 4 in Figure 2, is connected with the developer-reader and includes two types of digital printers (an ink-jet digital printer and a printer which produces prints by developing a photosensitive material after exposing it with a laser beam). The developer-reader and the digital printers are each equipped with a monitor, a number of dedicated operating buttons and a keyboard. Each is also provided with a speaker for sounding warnings. The steps of processing an exposed photographic film between setting of the film into the system to preparation of prints will now be explained in order.

### (2-1) Development processing section

As shown in Figure 6, the development processing section 1 is equipped with a setting section 5 adapted to be loaded with a film container containing exposed film F. The setting section 5 has a recessed cartridge retaining section (not shown) and a recessed lens-fitted photographic film unit retaining section (not shown) specially configured for snugly receiving photographic film used in the system of this invention, namely, for receiving a specially configured cartridge and a specially configured lens-fitted photographic film unit.

The setting section 5 is equipped with a light-blocking shutter (not shown). The light-blocking shutter closes automatically when the user presses a "ready" button (not shown) to notify the system that setting of a cartridge or lens-fitted photographic film unit has been completed.

The cartridges and lens-fitted photographic film unit usable in the invention system is marked with a bar code identifying the film type. When the ready button is pressed, a bar-code reader built into the system reads this bar code. If the bar codes indicates that the set film is of a type that the system cannot process, the system issues a warning via the speaker and displays an error message on the monitor to inform the user that the film cannot be processed. In such a case, the light-blocking shutter is not closed and the film container is returned to the user.

The following explanation will be made on the assumption that the setting of a cartridge placed in the setting section by the user has been properly completed.

When the light-blocking shutter has closed and the film container is shielded from light, the film F is drawn out of the set cartridge and conveyed in the direction of the arrow A by conveying rollers 621, 621, ... The empty cartridge removed of the film F is transferred along a separate conveyance path to a predetermined collecting section (not shown) where it is collected.

An image frame position sensor 613 for detecting an image frame position signal, which is recorded on the film at the time of the photographing operation, and magnetic recording information reading means 622 for reading the magnetic recording information from the magnetic recording layer of the film F are located on the side downstream from the setting section 5 in the conveyance direction. Also, a drum 616 and pushing members 617, 617, ... are located on the side downstream from the image frame position sensor 613 and the magnetic recording information reading means 622. The film F passes under the image frame position sensor 613 and the magnetic recording information reading means 622 and is then guided to the position between the lower surface of the drum 616 and the upper surfaces of the pushing members 617, 617, ...

The image frame position sensor 613 detects the image frame position signal, which has been recorded on the film at the time of the photographing operation. Also, a temperature signal is detected by a temperature sensor 619. The image frame position signal and the temperature signal are fed as the information, which represents the development temperature of each image frame, into the image processing section 3, which will be described later. In the image processing section 3, appropriate image processing is performed for each image frame in accordance with the information representing the development temperature.

In the magnetic recording information reading means 622, the read-out conditions, the image processing conditions, and the printing conditions having been recorded on the magnetic recording layer are read out. The information representing the read-out conditions, the information representing the image processing conditions, and the information representing the printing conditions are respectivelyfed into theread-out section 2, the image processing section 3, and the output section 4. In the read-out section 2, the image processing section 3, and the output section 4, the image readout, the image processing, and the print outputting are respectively performed in accordance with the respective conditions.

As illustrated in Figure 6, pre-development temperature and moisture content adjusting means 621 is located for keeping the temperature and the moisture content of the film F at values falling within predetermined ranges when the film F having been drawn out of the setting section 5 is passing under the image frame position sensor 613 and the magnetic recording information reading means 622.

The film F passes through the pre-development temperature and moisture content adjusting means 621 and is then guided to the position between the lower surface of the drum 616 and the upper surfaces of the pushing members 617, 617, ... Thereafter, the film F is brought by the pushing members 617, 617, ... into close contact with the drum 616 and is conveyed in this state along the outer circumferential surface of the drum 616.

Also, as illustrated in Figure 6, a halogen lamp 615 for heating the film F is located within the drum 616. Further, a heating member 618 is located in the vicinity of the left outer circumferential surface of the drum 616. A sensor (not shown) monitors whether the leading end of the film F has or has not reached an end area of the heating range at the outer circumference of the drum 616 (i.e., the range heated by the halogen lamp 615 and the heating member 618). In accordance with the results of the monitoring, the conveying rollers are controlled so as to continue the conveyance of the film F until the film F reaches the heating position. When the film F reaches the heating range, the conveyance of the film F is ceased. After the film F has been heated for a predetermined period of time by the halogen lamp 615 and the heating member 618, the conveyance is again performed. The temperature, to which the film F is heated, is detected by the temperature sensor 619, and the halogen lamp 615 and the heating member 618 are controlled such that the temperature falls within a predetermined temperature range. The control temperature of the heating member 618 is set at a temperature slightly lower than the development temperature. The heating member 618 has the effects of stabilizing the development temperature in cases where the temperature within the system does not reach the saturation temperature immediately after the electric power source of the system is turned on.

After the film F has been heated up to the tail end of the film F, the film F is conveyed by multiple pairs of conveying rollers 612, 612 into the read-out section 2.

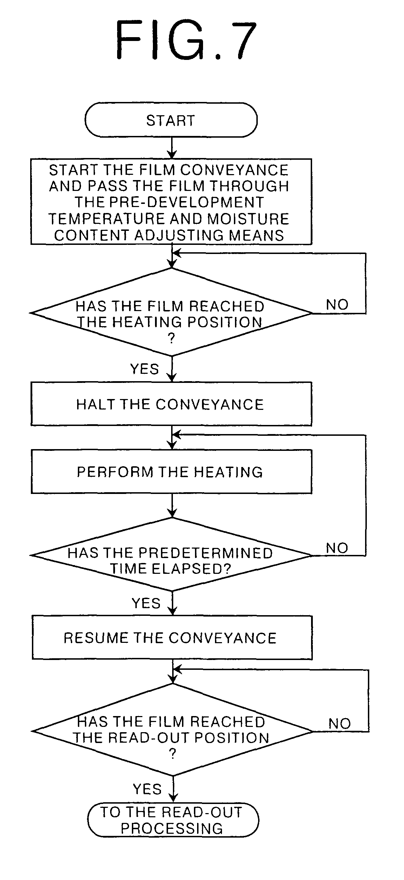

The flow of the control processing for the conveying rollers, and the like, is shown in Figure 7.

In the embodiment described above, the conveyance of the film F is ceased, and the entire area of the film F is heat-developed at once by the halogen lamp 615 and the heating member 618. Alternatively, for example, the heating with the halogen lamp 615 and the pushing members 617, 617, ... may be begun at the time at which the conveyance of the film F is started, and the film F may be heated while the film F is being conveyed at uniform speed by being sandwiched between the pushing members 617, 617, ... and the drum 616. In this manner, the heat development may be performed. In cases where the film F is thus conveyed at uniform speed by being sandwiched between the pushing members 617, 617, ... and the drum 616, each frame image on the film F is heated for an identical period of time. Therefore, development nonuniformity does not occur, and the heat development is capable of being performed appropriately. Also, in such cases, the heating range with the halogen lamp 615 and the pushing members 617, 617, ... need not be set to be wide for covering the entire area of the film F. Further, the conveyance of the film F need not be ceased and again started, and the heat development is capable of being performed while the film F is being conveyed.

### (2-2) Read-out section and image processing section

The read-out section 2 and the image processing section 3 will now be explained. Read-out sections 2a and 2b will be described as two examples of the configuration of the read-out section 2.

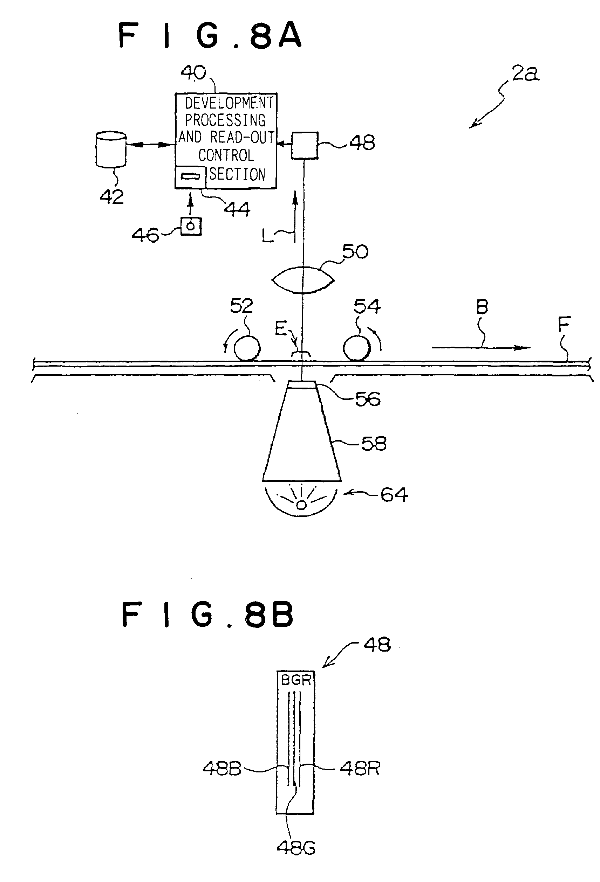

The read-out section 2a will be explained first with reference to Figures 8A and 8B. Figure 8A is a diagram showing the read-out section 2a as viewed in a direction perpendicular to the conveyance direction of the film F indicated by the arrow B. The film F developed by the development processing section 1 and conveyed to the read-out section 2a by the conveying rollers 612, 612, ..., arrives at a predetermined read-out position E between conveying rollers 52 and 54. A sensor (not shown) monitors whether or not the film F has arrived at read-out position E, and the conveyance is halted when its arrival is detected.

The read-out section 2a is equipped with a light source 64 for emitting a light beam toward the read-out position E. To prevent unevenness in the light quantity, a mirror box 58 and a diffusion plate 56 are provided in the order mentioned downstream of the light source 64 relative to direction of light travel (indicated by the arrow L).

A lens 50 is provided further downstream, on the other side of the film conveyance path, and, downstream of this, a CCD sensor 48 is disposed for reading a transmitted image produced by transmission of light through the film F. The lens 50 is for focusing the light transmitted through the film F on the CCD sensor 48.

As shown in Figure 8B, the CCD sensor 48 comprises a blue-component reading section 48B constituted of a line sensor for reading the blue component of the image, a green-component reading section 48G constituted as a line sensor for reading the green component, and a red component reading section 48R constituted as a line for reading the red component. The so-configured CCD sensor 48 digitally reads each color component of the image produced by the light transmitted through the film F line by line as the film F passes through the read-out position E.

As shown in Figure 8A, the CCD sensor 48 is connected with a development processing and read-out control section 40 which includes a microcomputer and controls the various processing operations of the development processing section 1 and the read-out section 2. The CCD sensor 48 transmits the image signal read for each color component to the development processing and read-out control section 40. The development processing and read-out control section 40 is provided with a MO disk drive 44 and is further connected with a magnetic disk unit 42. After the development processing and read-out control section 40 has effected predetermined image processing on the received image signal, it can store the processed signal on a MO disk 46 inserted in the MO disk drive 44 or in the magnetic disk unit 42. It can also read the stored signal.

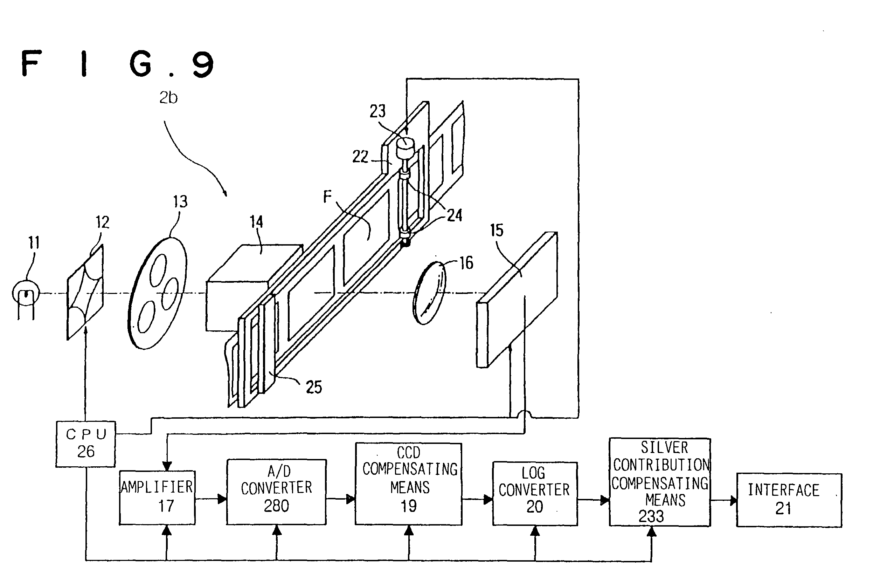

As in the read-out section 2b shown in Figure 9, it is also possible to use a CCD area sensor 15 capable of two-dimensional image reading.

The read-out section 2b shown in Figure 9 is adapted to photoelectrically read a color image by directing light onto a color image recorded on a film F which is a negative film made of the photosensitive material used in the invention and detecting the light transmitted through the film. It comprises a light source 11, a light regulating unit 12 for regulating the passage (quantity) of the light emitted by the light source 11, a color separation unit 13 for separating the light emitted by the light source 11 into R (red), G (green) and (B) color components, a diffusing unit 14 for diffusing the light emitted by the light source 11 so that it evenly illuminates the film F, a CCD area sensor 15 for photoelectrically detecting the light transmitted through the film F and a motor-driven zoom lens 16 for focusing the light transmitted through the film F on the CCD area sensor 15. By exchanging a film carrier (not shown), the read-out section 2b can be adapted for reading out various types of film, including 135 negative film, 135 positive film and advanced photo system (APS) film.

A halogen lamp is used as the light source 11, while the light regulating unit 12 is adapted to regulate passage of light by the movement of two diaphragm plates, the distance of plate movement being an index of the quantity of light passed. The color separation unit 13 sequentially separates the light into three colors frame to frame by rotating a disk fitted with R, G and B filters. The light-receiving elements of the CCD area sensor 15 are arranged to provide 2,048 pixels vertically and 3,072 pixels laterally. This is sufficient for high-resolution reading of film image information. The CCD area sensor 15 is configured so that during reading of a color image it first transmits an odd field of image signal consisting of odd-numbered lines of the photoelectrically read image and then transmits an even field of image signal consisting of even-numbered lines thereof.

The read-out section 2b further includes an amplifier 17 for amplifying R, G, B image signals generated by the CCD area sensor 15 based on the photoelectrically detected R, G and B color components, an A/D (analog/digital) converter 280 for digitizing the image signals, CCD compensating means 19 for processing the digitized image signals from the A/D converter 280 to correct for dark current and variance in sensitivity among the individual pixels, a log converter 20 for converting R, G, B image signals into density signals, and a silver contribution compensating means 233 for effecting a correction to reduce the overall density value of the image signal by the amount attributable to silver, thereby canceling the effect of silver halide and developed silver remaining on the photographic film. The silver contribution compensating means 233 is connected with an interface 21.

The film F is held in a carrier 22. After one frame of the film F held in the carrier 22 has been conveyed to a predetermined position by rollers 24 driven by a motor 23, it is maintained stationary for read-out. When read-out of the color image of the frame has been completed, the next frame is conveyed to the read-out position. For handling negative film, an NC135S autocarrier (available from Fuji Photo Film Co., Ltd.) or other such autocarrier used in the conventional photofinishing equipment can be adopted. Images can be read over a range corresponding to such print types as full size, panorama size and H-size. Adoption of a trimming carrier of the type used in conventional photofinishing equipment enables an approximately X1.4 center-to-center enlargement taking the center as an axis. Usable reversal film carriers include those disclosed in Japanese Unexamined Patent Publication Nos. 9(1997)-114011, 9(1997)-114016, 9(1997)-114017, 9(1997)-120104, and 9(1997)-130557.

Reference numeral 25 in Figure 9 designates a picture region detection sensor which detects the density distribution of the color images recorded on the film F and outputs a density signal indicative of the detected density to a CPU 26 for controlling the read-out section 2b. The CPU 26 uses the density signal to calculate the position of the color image picture region and stops the motor 23 when it discriminates that the color image picture region has reached the predetermined position.

The image forming system of this embodiment is configured not only to develop photographic film made of the photosensitive material used in this invention but also to read color prints for reproduction on other media. In addition to being equipped with the aforesaid transmission-type read-out section for reading film, therefore, it is further equipped with a reflection-type image read-out section for photoelectrically reading color images recorded on color prints and is configured to switch between these two read-out sections.

Also, the image forming system in accordance with the present invention may be provided with the read-out condition setting means (not shown) capable of selecting a spatial resolving power (a definition) and an image density resolving power, with which the image is to be read out, respectively from a plurality of spatial resolving powers and a plurality of image density resolving powers, and setting the selected spatial resolving power and the selected image density resolving power for the image readout. Also, the image readout may be performed with the standard spatial resolving power and the standard image density resolving power, which have been set previously by the read-out condition setting means. Further, the image readout may be performed with the high spatial resolving power and the high image density resolving power, which have been set by the read-out condition setting means. In this manner, two kinds of the image signals may be obtained. Thereafter, the standard image processing, which has been set previously, may be performed on the image signal, which has been obtained from the image readout performed with the standard spatial resolving power and the standard image density resolving power, and the digital image signal, which represents the standard image, may thereby be obtained. Also, the simple image processing, which is simpler than the standard image processing, may be performed on the image signal, which has been obtained from the image readout performed with the high spatial resolving power and the high image density resolving power, and the digital image signal, which represents the original image, may thereby be obtained. The digital image signals representing the standard image and the original image may be fed into and stored in the magnetic disk unit 42 in the read-out section 2a or an image signal server (not shown), which is connected to the interface 21 in the read-out section 2b. In such cases, the user is capable of obtaining the standard image and obtaining an enlarged image (a high definition image), a gradation-transformed image (low contrast finish or high contrast finish), or the like, as a reorder image in accordance with the original image. By way of example, the standard image and the original image are formed under the conditions shown in Table 6 below.

**Table 6**

| | Spatial resolving power | Image density resolving power | Color and image density matching | Sharpness processing , etc. |
|---|---|---|---|---|
| (1) Original image | 6M pixels (2048×3072) | 12 bits | None | None |
| (2) Standard image | 3M pixels (1536×2048) | 8 bits | Performed (Standard) | Performed (strong) |
| (3) User reorder image | 6M pixels (2048×3072) | 10 bits | Performed (soft gradation) | Soft focus processing |

In such cases, the user obtains the standard image, which has been read with a spatial resolving power of 3M pixels (1536× 2038) and an image density resolving power of 8 bits and has been subjected to the standard color density matching and the sharpness processing (strong). Also, the user obtains the original image, which has been read with a spatial resolving power of 6M pixels (2048× 3072) and an image density resolving power of 12 bits and has not been subjected to the image processing. Further, in accordance with the reorder conditions shown in Table 6 above, the image is formed in accordance with the original image.

Further, the development processing and read-out control section 40 and the CPU 26 maybe provided with communication means, such that the digital image signal is capable of being transferred from the magnetic disk unit 42 and the image signal server to an external computer. For example, the image forming system may be constituted such that the user computer is capable of accessing the file server via a public data network and outputting the file, or the user is capable of accessing the magnetic disk unit 42 and the image signal server via a portable terminal. The image forming system should be constituted such that no limitation is imposed upon the data network, and various kinds of WAN and LAN are capable of being used.

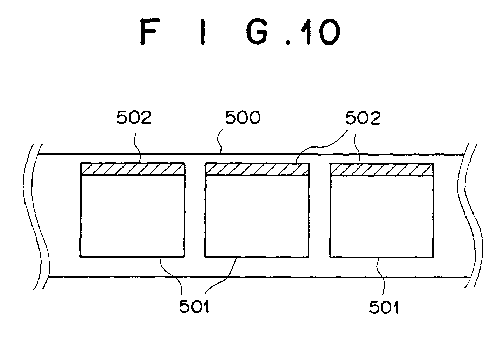

Furthermore, in cases where, for example, a read-out operation error occurs, or the image readout could not been conducted appropriately, an image re-readout may be performed. In such cases, deterioration of image quality due to the print-out effect should be avoided at the time of the image re-readout. For such purposes, in the embodiment of the image forming system, as illustrated in Figure 10, a film 500 may be provided with a reference region 502, to which a predetermined exposure quantity is given, at each of images 501, 501, ... on the film 500. Also, the system may be provided with compensation processing means (not shown) for determining the read-out conditions for the image re-readout (e.g., the intensity of the reading light) and the image processing conditions in accordance with the image signal, which is obtained by reading out the reference region 502. The information representing the read-out conditions having been determined by the compensation processing means is fed into the development processing and read-out control section 40 in the read-out section 2a and the CPU 26 in the read-out section 2b and is utilized for controlling the image read-out operation. The information representing the image processing conditions having been determined by the compensation processing means is fed into the image processing section 3, and the image processing is conducted under the image processing conditions. Alternatively, information, which represents cumulative light quantity of the reading light irradiated to the photosensitive material at the time of the image readout conducted prior to the image re-readout, may be stored. Also, in cases where the image re-readout is to be performed, reference may be made to print-out characteristics with respect to light intensities of the reading light, which print-out characteristics have been set previously, and the read-out conditions and the image processing conditions may be determined in accordance with the light quantity, which has been stored, and the print-out characteristics.

A detailed explanation having been made regarding the read-out section 2 shown in Figure 2, an explanation will now be given regarding the image processing section 3 shown in Figure 2.

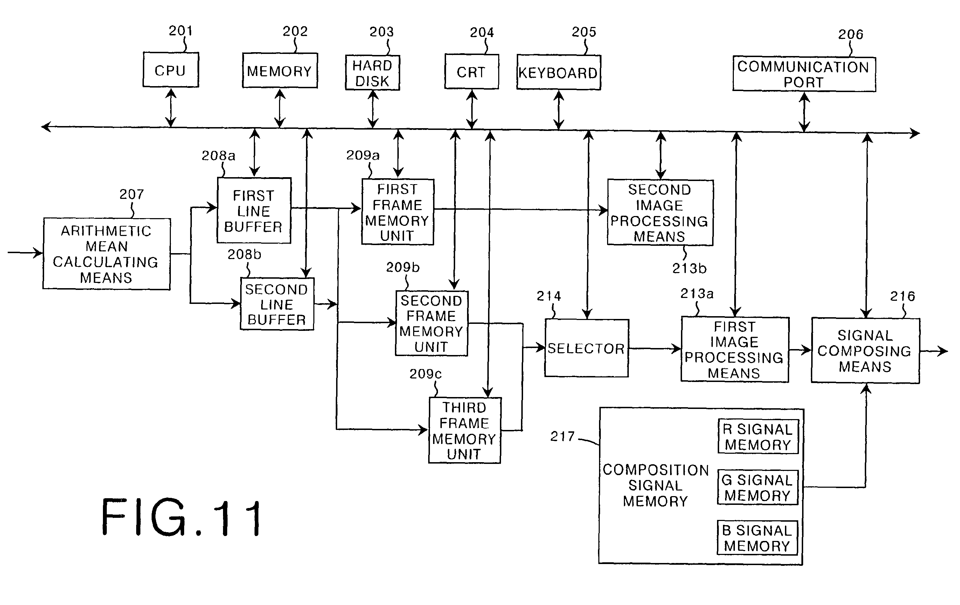

Figure 11 is a block diagram of the image processing section 3. As shown in this figure, the image processing section 3 comprises an interface which can be connected to the interface of the read-out section 2, arithmetic mean calculating means 207 for summing and averaging the values of sets of two adjacent pixels of the image signal generated and forwarded by the read-out section 2 line by line and defining the average value as one pixel, a first line buffer 208a and a second line buffer 208b for storing alternate lines of the image signal received from the arithmetic mean calculating means 207, and a first frame memory unit 209a, a second frame memory unit 209b and a third frame memory unit 209c for receiving line data stored in the first line buffers 208a, 208b and storing the image signal corresponding to a color image recorded in one frame of the film F or in one color print P. The first line buffer 208a and the second line buffer 208b are configured to alternately store odd-numbered line pixel signals in one line buffer and even-numbered line pixel signals in the other line buffer.

In the present embodiment, the image read-out section 2 conducts a first (preliminary) read-out of the color image recorded in one frame of the film F and the read-out image signal is converted to a digital image signal. Based on the image signal obtained from the preliminary read-out, the image processing section 3 sets the image read-out conditions for a second (main) read-out to be conducted next. The color image is then read again based on the set read-out conditions, i.e., main read-out is effected, thus generating the digital image signal to be image-processed for reproduction. In order to effect this processing, the image processing section 3 stores the image signal obtained by the preliminary read-out in the first frame memory unit 209a and the image signal obtained by the main read-out in the second frame memory unit 209b and the third frame memory unit 209c.

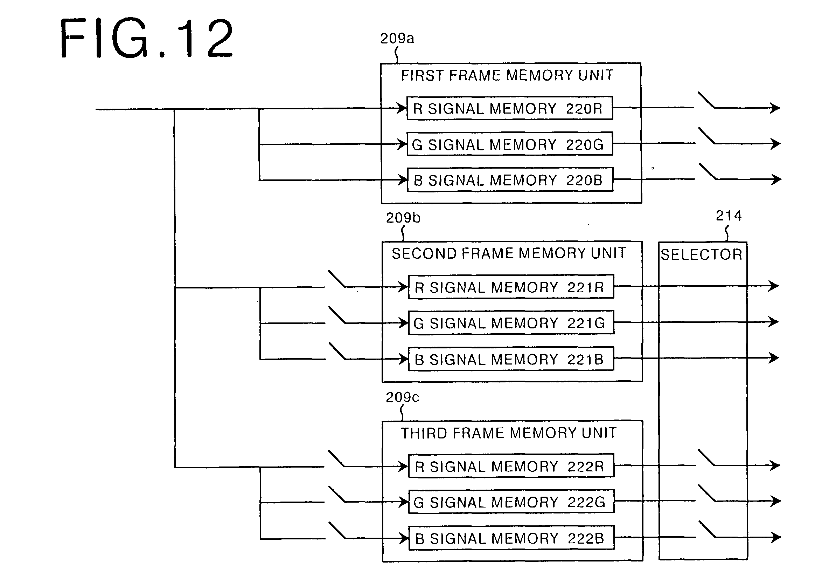

The explanation of the other constituent elements shown in Figure 11 will be preceded by a detailed explanation regarding the frame memory units. Figure 12 is a block diagram showing the particulars of the first frame memory unit 209a, second frame memory unit 209b and third frame memory unit 209c. As shown in Figure 12, for enabling the image processing section 3 to process the image signal generated by color image read-out, the first frame memory unit 209a, the second frame memory unit 209b and the third frame memory unit 209c are each provided with R, G and B signal memories for storing the image signals corresponding to R (red), G (green) and B (blue) components. Specifically, the first frame memory unit 209a has an R signal memory 220R, a G signal memory 220G and a B signal memory 220B, the second frame memory unit 209b has an R signal memory 221R, a G signal memory 221G and a B signal memory 221B, and the third frame memory unit 209c has an R signal memory 222R, a G signal memory 222G and B signal memory 222B. As mentioned above, the first frame memory unit 209a stores the image signal obtained by the preliminary read-out and the second and third frame memory units 209b and 209c store the image signal obtained by the main read-out. Figure 12 shows the state during input from the input bus of the image signal obtained by the preliminary read-out to the first frame memory unit 209a and output from the output bus of the image signal stored in the second frame memory unit 209b.

Returning to Figure 10, the configuration of the image processing section 3 will now be explained. The image processing section 3 has a CPU 201 which controls its overall operation. The CPU 201 can communicate with the CPU 26 of the read-out section 2b via a communication line (not shown) . It can also communicate via a communication line (not shown) with the CPU which controls the output section 4 described later. Based on the image signal obtained by the preliminary read-out and stored in the first frame memory unit 209a, the CPU 201 can change the image read-out conditions for the main read-out of the color image and, if necessary, can also change the image processing conditions in the image processing to be effected on the image later.

Specifically, the CPU 201 decides the image read-out conditions for the main read-out based on the image signal obtained by the preliminary read-out so as to enable efficient utilization of the dynamic range of the CCD area sensor 15 or the CCD line sensor 48 at the time of the main read-out and outputs a read-out control signal to development processing and read-out control section 40 of the read-out section 2a or the CPU 26 of the read-out section 2b. Upon receiving the read-out control signal, the development processing and read-out control section 40 of the read-out section 2a or the CPU 26 of the read-out section 2b controls the quantity of light passage regulated by the light regulating unit 12 and further controls the storage time of the CCD area sensor 15 or the CCD line sensor 48. As required, the CPU 201 at the same time outputs to first image processing means and second image processing means (described later) a control signal based on the obtained image signal so as to change the image processing parameters and other image processing conditions of the first image processing means and the second image processing means to enable reproduction on color photographic paper of a color image having optimum density, gradation and tone. The image read-out conditions and image processing conditions decided by the CPU 201 at this time are stored in a memory 202.

In conducting the aforesaid control, when image read-out conditions or image processing conditions have been saved at the request of the user, the CPU 201 does not decide the conditions based on the image signal obtained by the preliminary read-out as described in the foregoing but outputs the various control signals based on the saved conditions. When the user sets the different conditions using a keyboard 205 or other such input device and requests that they be saved, the conditions are stored in the memory 202. If the user then requests that the saved conditions be deleted, the conditions stored in the log converter 20 are invalidated. In effecting the control described in the foregoing, therefore, the CPU 201 first checks whether conditions are stored in the memory 202. If the result of the check is affirmative, the stored conditions are used. If negative, the CPU 201 decides the conditions based on the image signal obtained by the preliminary read-out. A configuration which does not require the saving of conditions always to be effected in terms of large units such as "image read-out conditions" and "image processing conditions" but also enables detailed conditions to be individually saved to and retrieved from the memory 202 is advantageous since, for example, it enables a color saturation setting to be saved and an automatically determined condition to be used for sharpness.

The processing effected on the image signal generated by the read-out section 2 between input to the image processing section 3 and storage in the first to third frame memory units will now be explained in detail.

As explained above, the image signal obtained by the preliminary read-out is used solely for deciding the image read-out conditions for the main read-out and the image processing conditions in the image processing conducted after read-out. The volume of the image signal obtained by the preliminary read-out is therefore smaller than that of the image signal obtained for the purpose of image processing for reproduction, i.e., the image signal obtained by the main read out. As explained in more detail later, moreover, this embodiment enables the user to reproduce a color image based on the image signal obtained by the preliminary read-out on a CRT 204, to set the image processing conditions while observing the reproduced color image and to save the set conditions for use in later image reproduction. Since the volume of the image signal obtained by preliminary read-out therefore need only be adequate for enabling reproduction of a color image on the CRT 204, this embodiment reduces the volume of the image signal obtained by the preliminary read-out and stores the reduced image signal in the first frame memory unit 209a.

For example, the image read-out section 2b is configured so that the CCD area sensor 15 transmits only the odd field or the even field of the image signal during the preliminary read-out, thereby reducing the volume of the read-out image signal to 1/2 that in the main read-out.

In addition, the image processing section 3 is configured so that the arithmetic mean calculating means 207 sums and averages the values of sets of two adjacent pixels of the image signal received line by line and defines the average values as single pixels, thereby reducing the number of pixels per line of the image signal to 1/2. It is further configured so that during preliminary read-out only the odd-numbered lines and only the even-numbered lines of the image signal reduced to 1/2 the number of pixels by the arithmetic mean calculating means 207 are stored alternately in the first line buffer 208a and the second line buffer 208b, thereby reducing the number of lines of image signal to 1/2. In other words, the number of lines of the image signal is reduced to 1/2 by transferring only the image signal of the odd-numbered lines or the image signal of the even-numbered lines to the first line buffer 208a and the second line buffer 208b and not transferring the other image signal to the first or second line buffers 208a, 208b. The pixels of an odd-numbered line transferred to the line buffers 208a, 208b at this time are stored only in one line buffer, either the first line buffer 208a or the second line buffer 208b, and the pixels of an even-numbered line are stored in the other. Each of the first and second line buffers 208a, 208b therefore stores pixels for alternate lines, either odd or even.

Moreover, only the image signal stored in one of the first line buffer 208a and the second line buffer 208b (only the pixels of every other line) is stored in the first frame memory unit 209a, thereby reducing the number of pixels of each line to 1/2. Finally, therefore, the number of pixels of the image signal obtained by the preliminary read-out is reduced to 1/16 and stored in the first frame memory unit 209a.

Thus, the number of pixels in the image signal is reduced in the foregoing manner during preliminary read-out. Therefore, while the second frame memory unit 209b and the third frame memory unit 209c for storing the image signal obtained by the main read-out have capacities enabling them to store the image signal obtained by read-out of a color image recorded in one frame of the film F or a color image recorded on one color print P, the first frame memory unit 209a for storing the image signal obtained by the preliminary read-out has a much smaller capacity than the second frame memory unit 209b and the third frame memory unit 209c.

The constituent elements of the image processing section 3 for effecting image processing on the image signal stored in the second frame memory unit 209b and the third frame memory unit 209c as a result of the main read-out will now be explained.

The image processing section 3 is further provided with first image processing means 213a (Figure 11) adapted to enable a color image to be reproduced on the final support with the desired density, gradation and tone by subjecting the image signal stored in the second frame memory unit 209b and the third frame memory unit 209c to gradation correction, color transform, density transform and other such image processing by use of lookup tables or matrix computation, and second image processing means 213b adapted to enable a color image to be reproduced on the screen of a CRT (explained later) with the desired picture quality by subjecting the image signal stored in the first frame memory unit 209a to gradation correction, color transform, density transform and other such image processing by use of lookup tables or matrix computation. The outputs of the second frame memory unit 209b and the third frame memory unit 209c are sent to a selector 214 which selects the output of either the second frame memory unit 209b or the third frame memory unit 209c so as to input the image signal stored in one or the other of the second frame memory unit 209b and the third frame memory unit 209c to the first image processing means 213a.

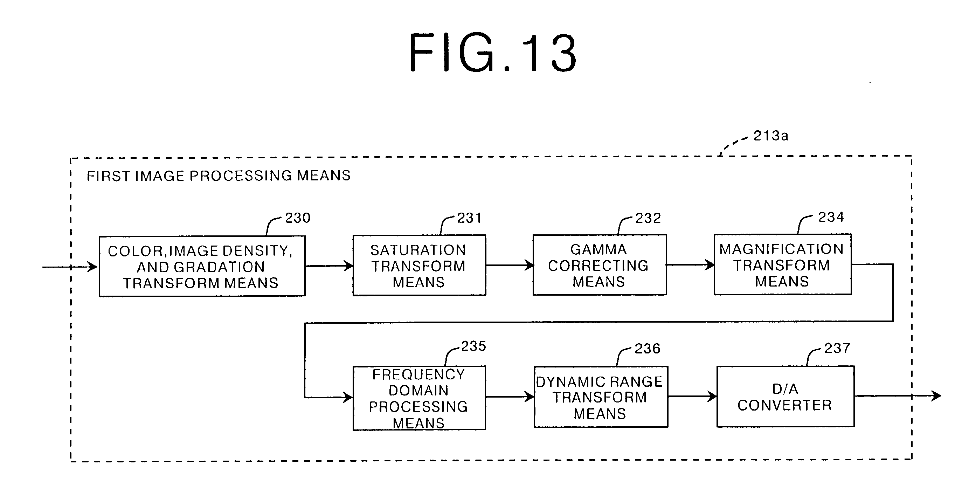

Figure 13 is a block diagram showing the particulars of the first image processing means 213a. As shown in Figure 13, the first image processing means 213a comprises color, image density, and gradation transform means 230 for transforming the density signal, color signal and gradation signal of the image signal, saturation transform means 231 for transforming the saturation signal of the image signal, gamma correcting means 232, digital magnification transform means 234 for transforming the number of pixels of the image signal, frequency domain processing means 235 for frequency-domain processing the image signal, dynamic range transform means 236 for transforming the dynamic range of the image signal, and a D/A converter 237. Since, in what is known as pipeline processing, all of these transform means operate simultaneously and upon completion of an operation effect the next processing operation, the processing can be conducted at high speed.

In addition to gradation correction, color transform, and density transform, the first image processing means 213a illustrated in Figure 13 can also effect processing for enhancing sharpness while simultaneously suppressing film graininess, as described in Japanese Patent Application No. 7-337510. Further, as described in Japanese Patent Application No. 7-165965, it can effect selective shading for reproducing an excellent image form one with high contrast.

As shown in Figure 11, the first image processing means 213a is connected to signal composing means 216 and the signal composing means 216 is connected with a composition signal memory 217. The composition signal memory 217 has an R signal memory, a G signal memory and a B signal memory for storing the image signal corresponding to the R (red), G (green) and B (blue) components of graphics, characters or the like. The composition signal memory 217 stores the image signal relating to graphics, characters and the like for synthesis with the image signal obtained by reading out a color image recorded on the film F when the output section 4 (explained below) reproduces a color image on the final support. The signal composing means 216 is connected to an interface with the output section 4.

In addition to the input bus and the output bus to which the first frame memory unit 209a, second frame memory unit 209b and third frame memory unit 209c are connected, the image processing section 3 also has a data bus to which are connected the CPU 201 for overall control of the image processing section, the memory 202 for storing an operating program executed by the CPU 201 and data related to image processing conditions, a hard disk 203 for storing the image signal, the CRT 204, the keyboard 205, a communication port 206 for connection with another color image reproducing system via a communication line, and communication lines to the CPU 26 etc. of the read-out section 2b.

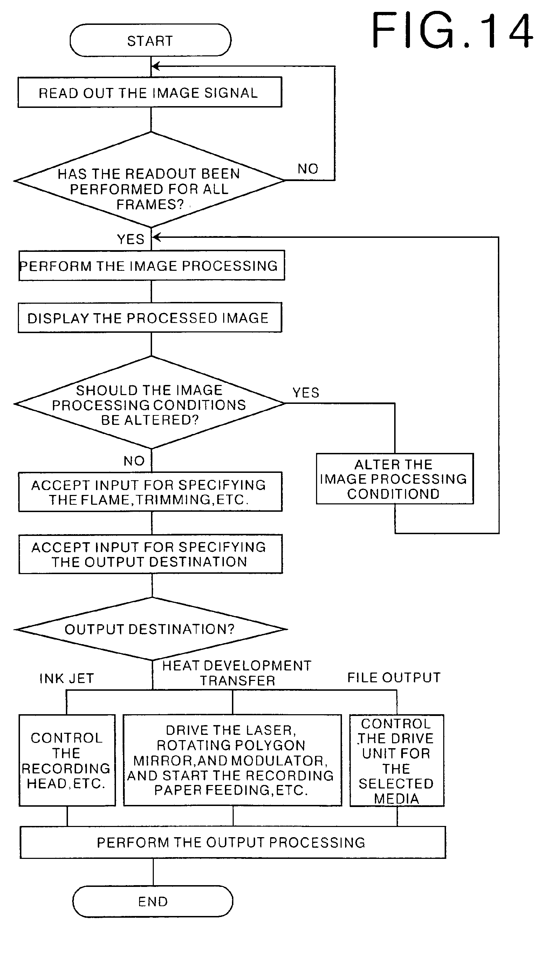

The flow of the processing steps from read-out to image processing can be represented in the form of a flowchart as shown in Figure 14. As indicated in Figure 14, the image processing section 3 not only regulates the read-out conditions but also receives various kinds of input from the user at the time of effecting various types of image processing on the image signal after read out. After image processing the processed images are therefore displayed on a monitor as occasion demands so that the user can ascertain the completion of the image processing. Since different users have different preferences regarding color and gradation, the user is allowed to use a keyboard or the like to designate changes in the image displayed on the monitor, e.g., to request that the image be made a little brighter. The image processing section 3 then conducts the image processing again using processing conditions modified based on the requests input by the user and displays the newly processed image on the monitor.

The user is able to select only desired ones of the displayed processed images for output. The image processing section 3 also displays the processed image on the monitor at any other time necessary, such as a trimmed image when trimming instructions are input, and then proceeds with the processing when the user inputs confirmation (by pressing an OK button, for example).

Upon receiving an output destination instruction, the image processing section 3 transmits the processed image signal to the CPU of the designated output apparatus. The flowchart of Figure 14 shows four types of output, which will nowbe explained in detail.

### (2-3) File output

The digital image signal generated in the image processing section can be stored on a hard disk, transmitted via communication means, written to predetermined media using a recording media drive, and the like. If desired, the image signal can be outputted as a compressed file.

Usable type of storage media include, for example, Photo CD, MO and ZIP, and is possible to equip a single system with multiple types of media drives. I is also possible to provide multiple media drives of the same type for enabling processing to be conducted in parallel.

### (2-4) Print output

As explained earlier, the image forming system of this embodiment includes four types of digital printers as examples of means for providing printed output: the ink-jet printer, the sublimation transfer printer, and the printer which prepares a print by recording an image on a heat-developable photosensitive material and then superimposing the heat-developable photosensitive material on an image-receiving material to heat-development transfer the image thereto (e.g., the Pictrography 3500 available from Fuji Photo Film Co., Ltd.). The printer is used preferably selected in response to instructions from the user. Each of the printers will be explained more specifically.

### Ink-jet printer

The ink-jet printer similarly usable as means for print output will now be explained with reference to the drawings.

The ink-jet printer has a control section (gradation recording control section), a recording section including recording heads and a drive signal generating section, and a paper feed and conveyance section.

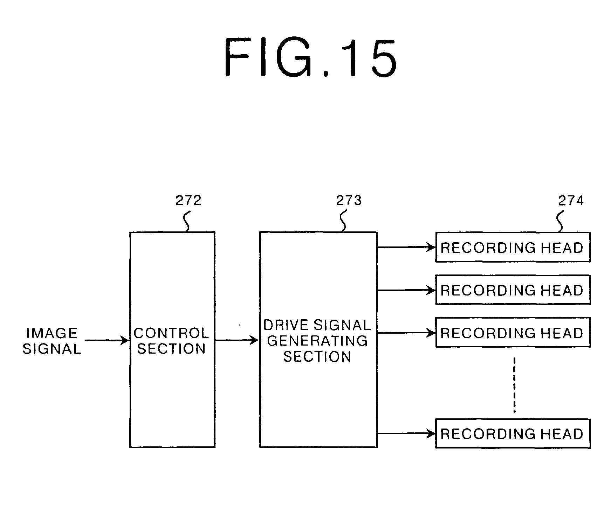

As shown in Figure 15, the control section 272 of this ink-jet printer receives the image signal from the image processing section 3 and image-processes the density information included in the image signal to convert it to a digitized signal for gradation recording, based on which the drive signal generating section 273 produces signals for driving the printing heads 274.

Figure 15 is a schematic diagram showing the recording section of the ink-jet printer equipped with a plurality of recording heads 274. If four ink colors are used (cyan, magenta, yellow and black, for example) and the density of each color has two levels (light and dark), eight ink tanks and eight recording heads are required.

Ink is supplied from each ink tank 275 containing a specific color/density ink through an ink pipe 276 to a corresponding color/density printing head 274. The color/density printing heads 274 are fixed to a carriage 277 slidably mounted on a shaft 278 fixed parallel to the recording paper, to be evenly spaced in parallel at the same height and to be oriented perpendicular to and equidistant from the surface of recording paper.

When the carriage 277 mounted with the recording heads 274 slides along the shaft 278 (main scanning) , the color/density recording heads 274 are supplied through a drive cable with respective drive signals carrying recording information. In response to these drive signals, the recording heads 274 jet ink to thereby record a dot pattern on the recording paper conveyed from a paper supply section onto the surface of a platen roller 279. Since the drive signals are delayed in accordance with the distance between the color/density recording heads 274, each point on the recording paper can be affixed an ink droplet from every color/density recording head 274.

The dots recorded at each point on the recording paper can be multigradation-recorded in full color by causing the color/density recording heads 274 to over strike dots while varying the density level and the number of droplets jetted, one line can be printed by sliding the recording heads 274 (main scanning), and a full color, multigradation image can be recorded on the recording paper by causing the platen roller 279 to feed the recording paper one line at a time (sub-scanning).

Moreover, since the number of ink overstrikes is varied in the foregoing case, multigradation can be achieved using only one ink of a single density level for each color.

While the foregoing example assumes the size of each pixel to be approximately equal to the size of one dot, gradation can also be achieved by controlling the timing of ink droplet jetting so as to define a pixel as a matrix of m x n dots and varying the distribution of dots in the matrix. Moreover, a still greater range of gradation levels can be obtained by using different combinations of matrix dot distribution and the density. Since use of matrices reduces resolution relative to the earlier example by an amount proportional to matrix size, however, degradation of resolution is preferably prevented by reducing dot size and increasing dot density.

The recorded sheet obtained in the foregoing manner is output to a discharge section by the conveyance system.

### Printer for producing print by thermal development transfer

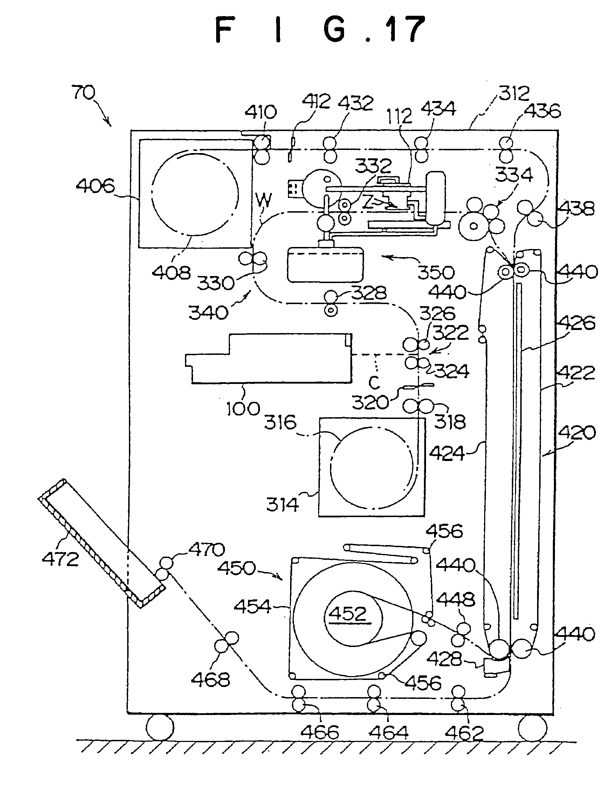

Referring to Figures 17 to 19, there will now be explained a printer which produces photo prints by scanning a photosensitive material with a laser beam modulated based on the image signal received from the image processing section 3, thereby exposing the photosensitive material, and then effecting thermal development transfer by superimposing the exposed photosensitive material and an image-receiving material to become the final support.

As shown in Figure 17, the frame 312 of a digital printer 70 houses a photosensitive material magazine 314 containing photosensitive material 316. The photosensitive material 316 is accommodated in the photosensitive material magazine 314 in roll form such that when it is drawn out the photosensitive (exposure) surface of the photosensitive material 316 faces to the left in the figure.

Nip rollers 318 and a cutter 320 are disposed near the photosensitive material take-out opening of the photosensitive material magazine 314. Predetermined lengths of the photosensitive material 316 drawn out of the photosensitive material magazine 314 by the nip rollers 318 can be cut by the cutter 320. The cutter 320 is constituted, for example, as a rotary type cutter having a fixed blade and a moving blade. The moving blade is moved vertically by a cam or the like to cut the photosensitive material 316 in cooperation with the fixed blade.

Above the cutter 320 are a plurality of conveying roller pairs 324, 326, 328, 330, 332 and 334 disposed in the order mentioned. Although not shown, a guide plate is provided between each adjacent pair of conveying rollers. For convenience in explanation, the nip rollers 318 and the conveying roller pairs 324, 326, 328, 330, 332 and 334 for conveying the photosensitive material 316 to a thermal development transfer section 420 explained in the following are collectively referred to as "conveying rollers R." The photosensitive material 316 cut to the predetermined length is first conveyed to an exposure section 322 provided between the rollers 324 and the rollers 326.

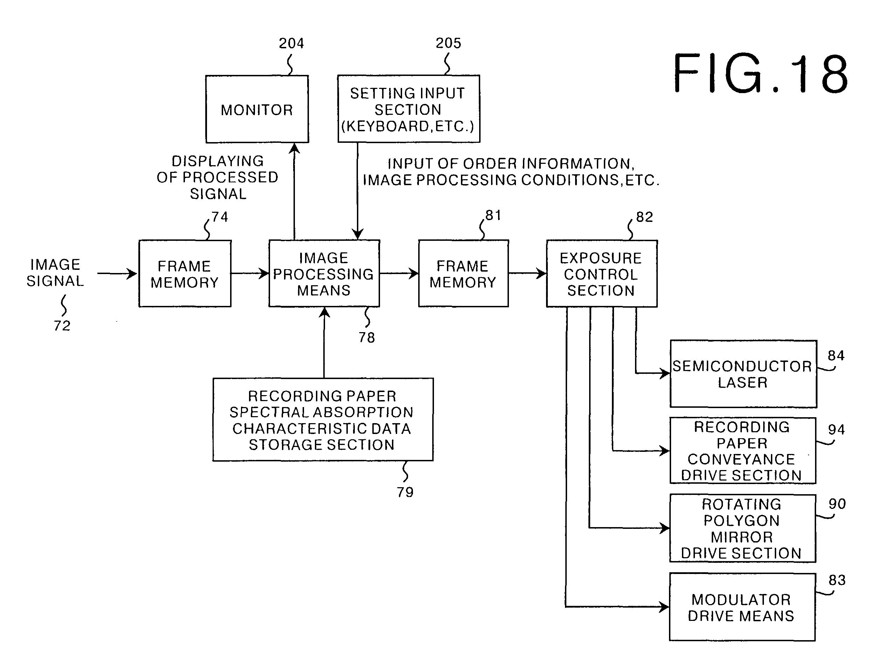

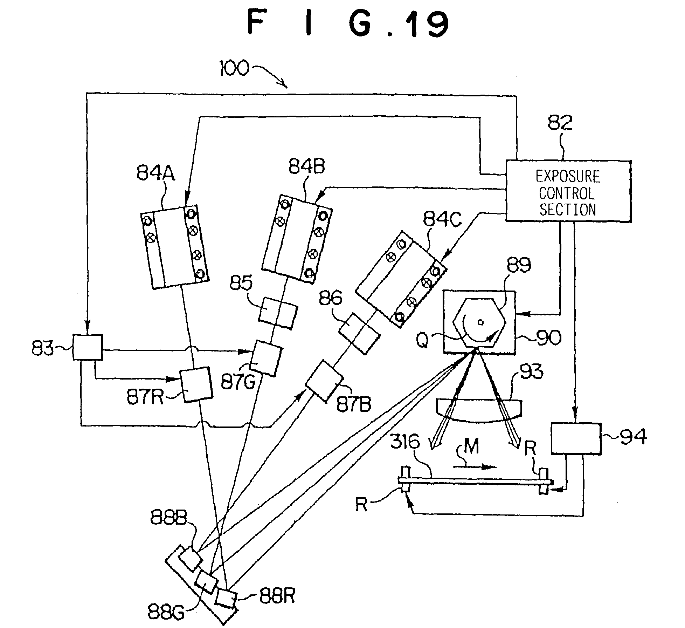

A laser beam irradiation section 100 is installed on the left side of the exposure section 322. The structure and function of the laser beam irradiation section 100 will be explained with reference to Figures 18 and 19.

Figure 18 is a block diagram illustrating the function of the laser beam irradiation section 100. As shown in Figure 18, an image signal 72 inputted to the laser beam irradiation section 100 are once stored in a frame memory 74. The image signal can be transmitted directly from the image processing section 3 or be read from a floppy disk or the like storing the image signal.

The image signal stored in the frame memory 74 is read by an image processing means 78 which effects processing on the image signal to correct for differences between the spectral absorption characteristics of different recording papers, for example. A recording paper spectral absorption characteristic data storage section 79 storing spectral absorption characteristic data for different types of recording paper is connected to the image processing means 78 and the image processing means 78 reads out the spectral absorption characteristic data for the recording paper concerned before carrying out the image processing.

The image processing means 78 can display an image based on the image-processed image signal on a display section 204 constituted as a monitor display or the like. This enables the user to visually ascertain the result of the image processing. Moreover, the printer is configured so that the user can, when necessary, modify the settings related to the image processing as desired through a setting input section 205 including a keyboard, setting switches or the like.

The image processing means 78 also stores the image-processed image signal in a frame memory 81.

As shown in Figure 19, the laser beam irradiation section 100 has semiconductor laser beam sources 84A, 84B, 84C for producing red laser beams. The laser beam emitted by the semiconductor laser beam source 84B is converted to a green laser beam by wavelength converting means 85 and the laser beam emitted by the laser beam source 84°C is converted to a blue laser beam by a wavelength converter 86.

The red laser beam emitted by the laser beam source 84A, the green laser beam wavelength-converted by the wavelength converting means 85 and the blue laser beam wavelength-converted by the wavelength converter 86 enter light modulators 87R, 87G, 87B, which can be acousto-optic modulators (AOMs) or the like. The light modulators 87R, 87G, 87B are each input with a modulation signal from the modulator drive means 83 and modulate the intensities of the laser beams in accordance with the modulation signals.

The red laser beam modulated in intensity by the light modulator 87R is reflected onto a rotating polygon mirror 89 by a reflecting mirror 88R. The green laser beam modulated in intensity by the light modulator 87G is reflected onto the rotating polygon mirror 89 by a reflecting mirror 88G. The blue laser beam modulated in intensity by the light modulator 87B is reflected onto the rotating polygon mirror 89 by a reflecting mirror 88B.

Since the rotating polygon mirror 89 rotates at a predetermined angular velocity in the direction of the arrow Q, the laser beams are scanned by the rotating polygon mirror 89 in the main scanning direction indicated by the arrow M, pass through an fθ lens 93 and expose the photosensitive material 316 at the exposure section 322 shown in Figure 17. As indicated in Figure 18 and 19, the digital printer 70 is provided with an exposure control section 82 incorporating a microcomputer. The exposure control section 82 controls the exposure and thermal development processing in the digital printer 70. The exposure control section 82 reads the image-processed image signal from the frame memory 81 and controls the operations necessary for exposing the photosensitive material 316 based on the image signal, namely, the operations of the semiconductor laser beam sources 84A, 84B, 84C, a rotating polygon mirror drive section 90 for rotationally driving the rotating polygon mirror 89 as the deflector for scanning exposure, a recording paper conveyance drive section 94 for conveying the photosensitive material 316, and the modulator drive means 83.

As shown in Figure 17, the laser beam C from the laser beam irradiation section 100 described in the foregoing is directed to the exposure section 322, where it exposes the photosensitive material 316.

Above the exposure section 322 are provided a U-turn section 340 for conveying the photosensitive material 316 while bowing it into a U-like shape and a water-imparting section 350 for applying solvent for image forming.

The photosensitive material 316 which has moved up from the photosensitive material magazine 314 and been exposed at the exposure section 322 is conveyed by the conveying roller pairs 328, 330 and fed into the water-imparting section 350 while passing through a conveyance path W above the U-turn section 340.

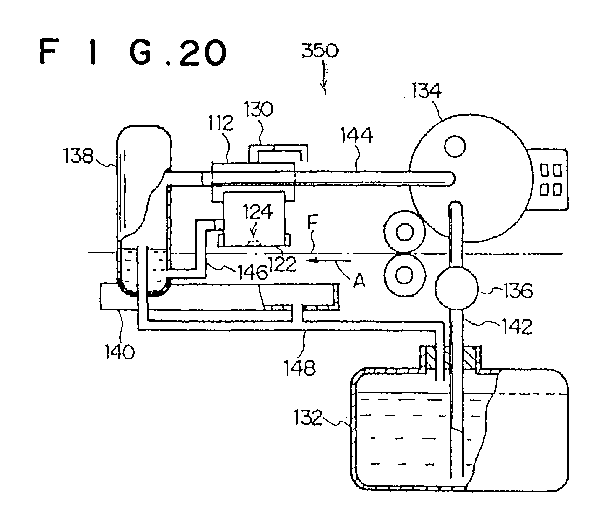

The structure of the water-imparting section 350 will be described hereinbelow with reference to Figures 20, 21, and 22. As shown in Figure 20, the water-imparting apparatus 350 is equipped with a jet tank 112 for storing water to be jetted onto the photosensitive material 316 and jetting water onto the photosensitive material 316.

A water bottle 132 for storing water for supply to the jet tank 112 is disposed diagonally below the jet tank 112. A filter 134 is disposed above the water bottle 132 for filtering the water. The water bottle 132 and the filter 134 are connected by a water feed pipe 142 fitted midway with a pump 136.

A sub-tank 138 for storing water to be passed to the water bottle 132 is disposed to the side of the jet tank 112. The sub-tank 138 is connected with the filter 134 via a water feed pipe 144.

When the pump 136 is operated, therefore, water is passed from the water bottle 132 to the filter 134, is filtered by the filter 134 and the filtered water is forwarded to the sub-tank 138, where it is temporarily stored.

The sub-tank 138 and the jet tank 112 are connected by a water feed pipe 146. The jet tank 112 is filled by water supplied from the water bottle 132 by the pump 136 through the filter 134, the sub-tank 138, the water feed pipe 146 etc.

A tray 140 connected with a return pipe 148 leading to the water bottle 132 is provided below the jet tank 112. Overflow water from the jet tank 112 is received by the tray 140 and returned to the water bottle 132 through the return pipe 148. The return pipe 148 also extends to and projects into the sub-tank 138 so that water in excess of the required amount accumulating in the sub-tank 138 is returned to the water bottle 132. A nozzle plate 122 formed by bending a rectangular piece of elastically deformable thin plate material is disposed at the lower extremity of the jet tank 112 (i.e., at the portion facing the conveyance path of the photosensitive material 316).

Multiple nozzle holes 124 (measuring several tens of µ m in diameter, for example) for jetting water contained in the jet tank 112 are disposed in the nozzle plate 122 at regular intervals along a straight line which intersects the direction of conveyance of the photosensitive material 316 (lies perpendicular to the drawing sheet of Figure 20) and extends across the whole width of the photosensitive material 316.

An air release pipe 130 extends from the upper portion of the jet tank 112 for enabling communication between the interior and exterior of the jet tank 112. The air release pipe 130 can be opened and closed by a valve installed therein (not shown). By opening and closing of the valve, the interior of the jet tank 112 can be communicated with and shut off from the external air.

The jet tank 112 is shown in Figure 21. As illustrated, the end portions of the nozzle plate 122 are fixed one to each of a pair of lever plates 120 as by adhesion with a bonding agent or the like. Each lever plate 120 is attached to one of a pair of side walls 112A of the jet tank 112 through a support member 112B of thin width formed at the lower portion of the side wall 112A.

The surface of the crown of the jet tank 112 is formed by a pair of abutting crown walls 112C parts of which project outward of jet tank 112 proper and a number of piezoelectric elements 126 (three per side, for example) are attached to the undersurfaces of the projecting portions of the crown walls 112C. The lower surfaces of these piezoelectric elements 126 are attached to the outer edge portions of the lever plates 120, thereby connecting the piezoelectric elements 126 and the lever plates 120.

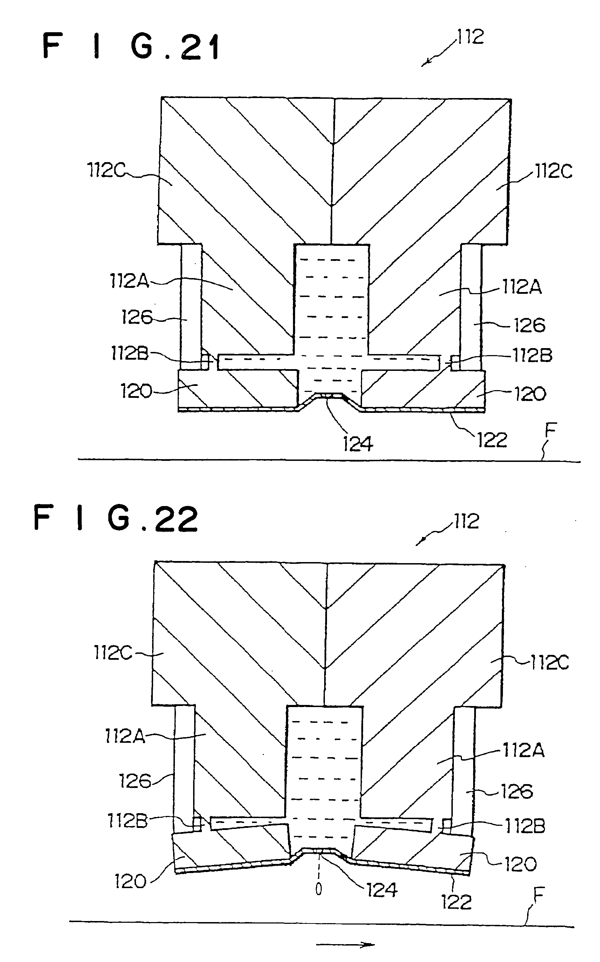

The piezoelectric elements 126, the lever plates 120 and the support members 112B thus constitute a lever mechanism. Specifically, as shown in Figure 22, when the outer edge portions of the lever plates 120 are moved downward by the piezoelectric elements 126, the inner edge portions of the lever plates 120 are moved upward. This displacement is transferred to the nozzle plate 122, whereby the nozzle plate 122 is displaced and the water in the jet tank 112 pressurized. As a result, water is jetted from the jet tank 112 through the nozzle holes 124 toward the photosensitive material 316. In Figure 17, water from the jet tank 112 is jetted toward the photosensitive material 316 at the point indicated by the arrow Z.

On the other hand, an image-receiving material magazine 406 for storing image-receiving material 408 is disposed at the upper left of the frame 312. The image-forming surface of the image-receiving material 408 is coated with a dye fixing material containing a mordant. The image-receiving material 408 is accommodated in the image-receiving material magazine 406 in roll form such that when it is drawn out the image-forming surface faces to downward.

Nip rollers 410 are disposed near the image-receiving material take-out opening of the image-receiving material magazine 406. The nipping by the nip rollers can be released when the image-receiving material 408 has been drawn out of the image-receiving material magazine 406.

A cutter 412 is disposed to the side of the nip rollers 410. Like the cutter 320 for the photosensitive material described earlier, the cutter 412 can be also be constituted, for example, as a rotary type cutter having a fixed blade and a moving blade. The moving blade is moved vertically by a cam or the like to cut the photosensitive material 316 drawn out of the image-receiving material magazine 406 in cooperation with the fixed blade. The image-receiving material 408 is cut to a shorter length than the photosensitive material 316.

To the side of the cutter 412 are disposed conveying roller pairs 432, 434, 436, 438 and intervening guide plates for enabling the predetermined cut length of image-receiving material 408 to be conveyed to the thermal development transfer section 420 side.

The thermal development transfer section 420 has a pair of endless belts 422, 424 of loop shape wrapped about a plurality of rollers 440 to extend with their longer sides oriented vertically. Therefore, when any of the rollers 440 is rotated, both of the endless belts 422, 424 wrapped about the rollers are also rotated.

A flat heating plate 426 is provided inside the loop of the endless belt 422 so that its longer side extends vertically and that its surface faces the left inner surface of the endless belt 422. Although not shown, a wire heater is disposed inside the heating plate 426. The heating plate 426 can be heated to a predetermined temperature by this heater.

The photosensitive material 316 is fed between the endless belts 422, 424 of the thermal development transfer section 420 by the conveying rollers 334 at the end of the conveyance path. The image-receiving material 408 is conveyed synchronously with the conveyance of the photosensitive material 316 by the rollers 438 at end of its conveyance path so as be fed between the endless belts 422, 424 of the thermal development transfer section 420 and superimposed on the photosensitive material 316. The conveyance is conducted so that the photosensitive material 316 leads the image-receiving material 408 by a predetermined length.

Since the image-receiving material 408 is smaller than the photosensitive material 316 in both breadth and length, the four peripheral edges of the photosensitive material 316 project beyond the peripheral edges of the image-receiving material 408 when the two materials are superimposed.

As result of the foregoing, the photosensitive material 316 and the image-receiving material 408 superimposed by the endless belts 422, 424, remain superimposed as they are conveyed as sandwiched between the endless belts 422, 424. When the superimposed photosensitive material 316 and image-receiving material 408 have been completely accommodated between the endless belts 422, 424, the rotation of the endless belts 422, 424 is halted and the photosensitive material 316 clamped therebetween is heated by the heating plate 426. The photosensitive material 316 is heated by the heating plate 426 through the endless belt 422 both when being conveyed in the clamped state and when halted. As the heating proceeds, diffusible dyes are released and the dyes are simultaneously transferred to the dye fixing layer of the image-receiving material 408, whereby an image is formed on the image-receiving material 408.

Apeeling claw 428 is disposed downstream of the endless belts 422, 424 relative to the material feed direction. Of the photosensitive material 316 and the image-receiving material 408 conveyed as clamped between the endless belts 422, 424, the peeling claw 428 engages with tip portion of only the photosensitive material 316, whereby the tip of the photosensitive material 316 projecting from between the endless belts 422, 424 can be peeled from the image-receiving material 408.

A pair of photosensitive material discharge rollers 448 are disposed to the left of the peeling claw 428. The photosensitive material 316 is guided to the left by the peeling claw 428 so that it can be conveyed toward a waste photosensitive material receiving section 450.

The waste photosensitive material receiving section 450 is equipped with a drum 452 for taking up the photosensitive material 316 and a belt 454, part of which is wound about the drum 452. The belt 454 further passes over a number of rollers 456. Rotation of these rollers 456 rotates the belt 454 which in turn rotates the drum 452.

Therefore, when the photosensitive material 316 is fed during rotation of the belt 454 owing to the rotation of the rollers 456, the photosensitive material 316 can be collected around the drum 452.

Pairs of image-receiving material discharge rollers 462, 464, 466, 468 and 470 are further provided in the order mentioned to enable conveyance of the image-receiving material 408 from the lower end of the endless belts 422, 424 to the left in Figure 17. The image-receiving material 408 exiting from between the endless belts 422, 424 is conveyed by these image-receiving material discharge rollers 462, 464, 466, 468 and 470 and discharged to a tray 472.

### Digital printing using large amount of processing solution

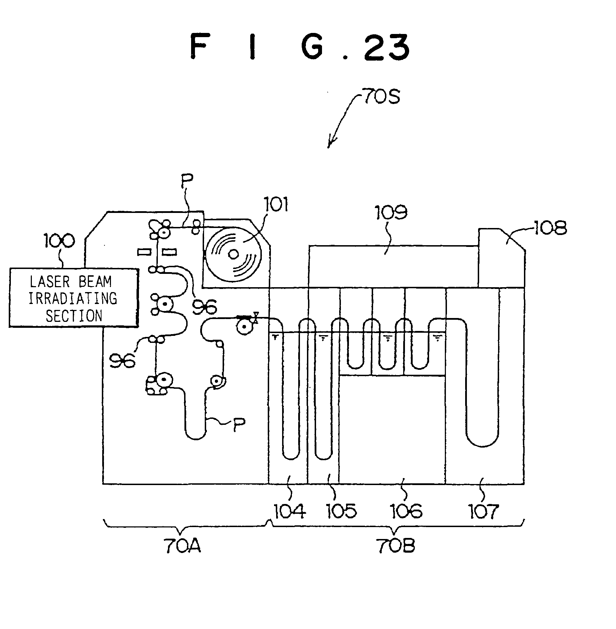

When the image forming system of this invention is implemented as all-in-one apparatus including one or more printers, the printers are preferably of a type not requiring wet processing, such as those described in the foregoing. In contrast, when only the developer-reader is installed in a convenience store or the like and the digitized image signal is transmitted via a telephone line or other communication line to a photo service provider for print processing, the effects and advantages of this invention can be enjoyed even by use of a printer-processor 70S, such as shown in Figure 23, which uses large amounts of processing solutions. The general structure of the printer-processor 70S and the processing it conducts will be explained with reference to Figure 23.

As shown in Figure 23, the printer-processor 70S includes an exposure section 70A which image-wise exposes color paper P by scanning with a laser beam in accordance with the image signal and a developing section 70B for effecting development, fixing and other processing on the color paper P exposed by the exposure section 70A.

The exposure section 70A is equipped with a magazine 101 for accommodating a roll of color paper P which is conveyed along a predetermined conveyance path by rollers 96. The exposure section 70A is provided with a laser beam irradiation section 100 of the same structure as that described earlier. As the color paper P is being conveyed, the laser beam irradiation section 100 scans it with a laser beam based on the image signal.

The laser scanning is conducted in the main scanning direction perpendicular to the direction of color paper P conveyance. The scanning with the laser beam and the conveyance of the color paper P are synchronized by the exposure control section 82 in the laser beam irradiation section 100 (see Figure 19). As a result, the color paper P is exposed to an image based on the image signal.

The image-wise exposed color paper P is forwarded to the developing section 70B having a color developing tank 104 containing color developing solution, a bleach-fixing tank 105 containing bleach-fixing solution and a washing tank 106 containing water-washing solution. During conveyance, it is subjected to color development in the color developing tank 104, bleach-fixing in the bleach-fixing tank 105 and water washing in the washing tank 106.

The color paper P subjected to color development, bleach-fixing and water washing is then sent to a drying section 107 where it is dried, to a cutter section 108 where it is cut it into lengths each corresponding to the length of one image recorded in one frame of the color print P, and to a sorter 109 which sorts the cut pieces based on the individual rolls of the film or by customer.

### (2-5) Order processing

An example of the order processing will now be explained. As was pointed out in the explanation of the image processing section, once the development, read-out and image processing of the photographic film has been completed, the user can view the image signal on the monitor. A number of sets of image signals are displayed simultaneously and the user designates one of the sets using a mouse. This causes the designated image signal to be displayed to the full size of the screen, making it possible to observe the image details. In the present embodiment, the user is able to make the following designations with respect to the observed photographic image signal. The "designations," "selections" and the like referred to here are made by use of conventional methods and means, such as by input of a number displayed on the monitor screen using a keyboard or by clicking on the displayed number using a mouse.

The type of output , such as file, print or transmission to a remote system (if communication means is provided) , can also be designated. The type of print or media can be simultaneously designated. The designations can be made in terms of development units (e.g., photo film units) or frame units. Based on the input designations, the image processing section 3 decides the destination of the image signal transfer.

Gradation correction and trimming can also be conducted before output. Since the gradation correction and other image processing automatically conducted by the system are for obtaining image quality meeting generally accepted standards, it is easy to envision that users may have different preferences regarding the image processing. This embodiment is therefore designed to respond to user instructions for images that are, for example, sharper or brighter. When such an instruction is input, the system conducts the image processing again based on the instruction and once more displays the image-processed signal. The user can repeat the processing until satisfied with the image quality.

Similarly in the case of trimming, when a trimmed region is designated on the monitor screen, the region is framed by lines and the user can repeatedly modify the desired region until satisfied. The system can therefore be arranged, for example, such that if one of the frames recorded on the developed photographic film is particularly appealing to the user, he or she can trim the frame as desired and transmit the processed image signal to a special laboratory to be made into a postcard. If this service is offered, it should also be made possible select the postcard design and the like from the screen.

When the system is installed at a location such as a convenience store, the service fee is displayed on the monitor screen when the user presses an OK button to indicate that all desired processing has been completed and output is made only if the designated amount is paid by inserting bills and/or coins. Alternatively, it is possible to receive payment of the development fee before the cartridge or the like is set in the setting section and then to collect payment for preparation of prints or the like later.

The image forming method and system according to the invention have been described with respect to specific embodiments. Photos are taken for many purposes: to commemorate important events, make postcards, secure images for use in presentations, and countless others. Regardless of purpose, however, it is naturally desirable to be able to achieve the purpose quickly, simply, and without having to make repeated trips to a photo shop.

The image forming method and system according to this invention respond to these desires of users of photographic services by permitting them to obtain desired services at the time desired. As such, the enable what might be called "on-demand" photo services. The invention thus not only provides excellent technologies but can also be anticipated to produce a great effect from the commercial aspect.

## Claims

1. An image forming method, wherein a photosensitive material containing a photosensitive silver halide and an organic silver salt and capable of forming an image, which corresponds to a latent image having been recorded on the photosensitive material through an image-wise exposure operation, when the photosensitive material is heated, is utilized, the method comprising the steps of:
i) heating the photosensitive material, on which the latent image has been recorded, the image, which corresponds to the latent image having been recorded on the photosensitive material, being thereby formed on the photosensitive material,
ii) performing an image readout for reading out the image from the heat-developed photosensitive material, on which the image has been formed with the heating, an image signal, which represents the image, being thereby obtained, and
iii) performing predetermined image processing on the image signal, a digital image signal, from which the image is capable of being reproduced, being thereby formed.

2. A method as defined in Claim 1 wherein the heating of the photosensitive material is performed at a temperature ranging from 100°C to 200°C and for a period ranging from 5 seconds to 60 seconds.

3. A method as defined in Claim 1 wherein the photosensitive material is a heat-developable photosensitive color photographic material comprising:
a support, and
at least three kinds of photosensitive layers, which are overlaid on the support, each of the photosensitive layers containing at least photosensitive silver halide grains, organic silver salt grains, a binder, a color developing agent, and a dye-donating coupler, each of the three kinds of photosensitive layers being sensitive to different wavelength regions, and capable of forming dyes of different hues from an oxidation product of the color developing agent and the dye-donating couplers, and
a color image of at least three colors is formed on the heat-developed photosensitive color photographic material.

4. A method as defined in Claim 1, 2, or 3 wherein the photosensitive silver halide contains tabular photosensitive silver halide grains, which have an aspect ratio falling within the range between 4 and 100, in a proportion of at least 50% by volume.

5. A method as defined in Claim 1, 2, or 3 wherein the organic silver salt is a silver salt of a compound containing an imino group.

6. A method as defined in Claim 5 wherein the organic silver salt is a silver salt of a derivative of benzotriazole.

7. An image forming system for use in an image forming method as defined in Claim 1, the system comprising:
a development processing section provided with heating means for heating the photosensitive material, on which the latent image has been recorded, in order to form the image, which corresponds to the latent image, on the heat-developed photosensitive material.

8. A system as defined in Claim 7 wherein the heating means performs the heating of the photosensitive material at a temperature ranging from 100°C to 200°C and for a period ranging from 5 seconds to 60 seconds.

9. A system as defined in Claim 7 wherein the photosensitive material is a heat-developable photosensitive color photographic material comprising:
a support, and
at least three kinds of photosensitive layers, which are overlaid on the support, each of the photosensitive layers containing at least photosensitive silver halide grains, organic silver salt grains, a binder, a color developing agent, and a dye-donating coupler, each of the three kinds of photosensitive layers being sensitive to different wavelength regions, and capable of forming dyes of different hues from an oxidation product of the color developing agent and the dye-donating couplers, and
the heating means forms a color image of at least three colors on the heat-developed photosensitive color photographic material.

10. A system as defined in Claim 7, 8, or 9 wherein the photosensitive silver halide contains tabular photosensitive silver halide grains, which have an aspect ratio falling within the range between 4 and 100, in a proportion of at least 50% by volume.

11. A system as defined in Claim 7, 8, or 9 wherein the organic silver salt is a silver salt of a compound containing an imino group.

12. A system as defined in Claim 11 wherein the organic silver salt is a silver salt of a derivative of benzotriazole.

13. A system as defined in Claim 7, 8, or 9 wherein the development processing section is provided with pre-development temperature and moisture content adjusting means for adjusting a temperature and a moisture content of the photosensitive material at values falling within predetermined ranges immediately before the photosensitive material is heated by the heating means.

14. A system as defined in Claim 7, 8, or 9 wherein the development processing section is provided with post-development temperature and moisture content adjusting means for adjusting a temperature and a moisture content of the heat-developed photosensitive material at values falling within predetermined ranges immediately after the photosensitive material is heated by the heating means.

15. A system as defined in Claim 7, 8, or 9 wherein the system further comprises:
image read-out means for performing an image readout for reading out the image from the heat-developed photosensitive material, on which the image has been formed with development processing performed in the development processing section, in order to obtain an image signal, which represents the image, and
image processing means for performing predetermined image processing on the image signal in order to form a digital image signal, from which the image is capable of being reproduced.

16. A system as defined in Claim 15 wherein the system further comprises pre-readout temperature and moisture content adjusting means for adjusting a temperature and a moisture content of the heat-developed photosensitive material at values falling within predetermined ranges immediately before the image readout from the heat-developed photosensitive material is performed by the image read-out means and/or while the image readout from the heat-developed photosensitive material is being performed by the image read-out means.

17. A system as defined in Claim 15 wherein the system further comprises compensation processing means for compensating for a contribution of a print-out effect, which occurs in accordance with the undeveloped photosensitive silver halide and developed silver remaining on the heat-developed photosensitive material, to the image signal in cases where an image re-readout is performed by the image read-out means.

18. A system as defined in Claim 17 wherein the photosensitive material is provided with a reference region, to which a predetermined exposure quantity is given,
read-out conditions of the image read-out means and image processing conditions of the image processing means are determined in accordance with image signal components, which correspond to the reference region and are obtained when information in the reference region is read out by the image read-out means,
in cases where the image re-readout is performed by the image read-out means, the image re-readout is performed by the image read-out means under the read-out conditions having thus been determined, the image signal being thereby obtained, and
the image processing is performed on the obtained image signal and by the image processing means under the image processing conditions having thus been determined.

19. A system as defined in Claim 17 wherein the system further comprises light quantity storage means for storing information, which represents cumulative light quantity of reading light irradiated to the heat-developed photosensitive material at the time of the image readout,
reference is made to print-out characteristics with respect to light intensities of reading light, which print-out characteristics have been set previously,
read-out conditions of the image read-out means and image processing conditions of the image processing means are determined in accordance with the light quantity, which has been stored in the light quantity storage means, and the print-out characteristics,
in cases where the image re-readout is performed by the image read-out means, the image re-readout is performed by the image read-out means under the read-out conditions having thus been determined, the image signal being thereby obtained, and
the image processing is performed on the obtained image signal and by the image processing means under the image processing conditions having thus been determined.

20. A system as defined in Claim 15 wherein the system further comprises read-out condition setting means capable of selecting a spatial resolving power and an image density resolving power, with which the image is to be read out, respectively from a plurality of spatial resolving powers and a plurality of image density resolving powers, and setting the selected spatial resolving power and the selected image density resolving power for the image readout,
the image read-out means performs the image readout with the spatial resolving power and the image density resolving power, which have been set by the read-out condition setting means ,
the system still further comprises image processing condition setting means capable of selecting image processing conditions, under which the image processing is to be performed on the image signal having been obtained from the image readout performed by the image read-out means with the spatial resolving power and the image density resolving power having been set by the read-out condition setting means, from a plurality of image processing conditions, and setting the selected image processing conditions for the image processing, and
the image processing means performs the image processing on the image signal and under the image processing conditions, which have been set by the image processing condition setting means.

21. A system as defined in Claim 20 wherein the image read-out means performs the image readout with a standard spatial resolving power and a standard image density resolving power, which have been set previously by the read-out condition setting means,
the image processing means performs standard image processing, which has been set previously by the image processing condition setting means, on an image signal, which has been obtained from the image readout performed with the standard spatial resolving power and the standard image density resolving power, in order to form a digital image signal, which represents a standard image,
the image read-out means performs the image readout with a high spatial resolving power and a high image density resolving power, which have been set by the read-out condition setting means, and
the image processing means performs simple image processing, which is simpler than the standard image processing having been set previously by the image processing condition setting means, on an image signal, which has been obtained from the image readout performed with the high spatial resolving power and the high image density resolving power, in order to form a digital image signal, which represents an original image,
whereby at least two kinds of the digital image signals, which represent the standard image and the original image, are formed.

22. A system as defined in Claim 20 wherein the image read-out means performs the image readout with a high spatial resolving power and a high image density resolving power, which have been set by the read-out condition setting means,
the image processing means performs simple image processing, which is simpler than standard image processing having been set previously by the image processing condition setting means, on an image signal, which has been obtained from the image readout performed with the high spatial resolving power and the high image density resolving power, in order to form a digital image signal, which represents an original image, and
the image processing means performs re-sizing and image density resolving power transform on the digital image signal, which represents the original image, and in accordance with a standard spatial resolving power and a standard image density resolving power, which have been set previously, in order to form a digital image signal, which represents a standard image.

23. A system as defined in Claim 15 wherein the system further comprises:
identification code appending means for appending a heat-developed photosensitive material identification code for identifying the heat-developed photosensitive material and an image identification code for identifying each of a plurality of images, which have been formed on the heat-developed photosensitive material, to each of digital image signals representing the plurality of the images, each of the digital image signals having been obtained from the predetermined image processing performed on one of image signals, which represent the plurality of the images and have been obtained with the image readout performed by the image read-out means, and
storage means for storing the digital image signals, which represent the plurality of the images, the heat-developed photosensitive material identification code, and the image identification codes, such that it may be clear which heat-developed photosensitive material identification code and which image identification code correspond to which digital image signal.

24. A system as defined in Claim 23 wherein the system further comprises image signal retrieving means for retrieving each of the digital image signals, which represent the plurality of the images, in accordance with the heat-developed photosensitive material identification code and the image identification code, and in accordance with input conditions specified from a client terminal device, which is connected with the storage means via a communication line, and
the image processing means again performs image processing on the digital image signal, which has been retrieved by the image signal retrieving means, and in accordance with the input conditions.

25. A system as defined in Claim 7, 8, or 9 wherein the photosensitive material is provided with a patch, on which an image having a predetermined image density is capable of being formed, the patch being located at an area surrounding each of a plurality of images formed on the photosensitive material, and
the system further comprises development judging means for measuring the image density of the image having been formed on the patch after development processing, and making a judgment in accordance with the results of the measurement and as to whether the development processing has been or has not been performed correctly.

26. A system as defined in Claim 7, 8, or 9 wherein the photosensitive material is provided with a patch, on which a predetermined pattern image is capable of being formed, the patch being located at an area surrounding each of a plurality of images formed on the photosensitive material, and
the system further comprises development judging means for detecting an image density form having been formed on the patch after development processing, and making a judgment in accordance with the results of the detection and as to whether the development processing has been or has not been performed correctly.

27. A system as defined in Claim 7, 8, or 9 wherein the photosensitive material is provided with a patch, on which an image having a predetermined image density is capable of being formed, the patch being located at an end area of the photosensitive material, and
the system further comprises development judging means for measuring the image density of the image having been formed on the patch after development processing, and making a judgment in accordance with the results of the measurement and as to whether the development processing has been or has not been performed correctly.

28. A system as defined in Claim 7, 8, or 9 wherein the photosensitive material is provided with a patch, on which a predetermined pattern image is capable of being formed, the patch being located at an end area of the photosensitive material, and
the system further comprises development judging means for detecting an image density form having been formed on the patch after development processing, and making a judgment in accordance with the results of the detection and as to whether the development processing has been or has not been performed correctly.

29. A system as defined in Claim 7, 8, or 9 wherein the photosensitive material is provided with a magnetic recording layer, on which information is recorded magnetically, and
the system further comprises magnetic recording information reading means for reading the information, which has been recorded on the magnetic recording layer, before development processing is performed in the development processing section.

30. A system as defined in Claim 15 wherein the system further comprises at least one unit of printing means for outputting a print in accordance with the digital image signal.

31. A system as defined in Claim 30 wherein the information, which has been recorded on the magnetic recording layer, is at least one kind of information, which is among the information representing read-out conditions of the image read-out means, the information representing image processing conditions of the image processing means, and the information representing printing conditions of the printing means, and
the system executes at least one kind of operation, which is among the image readout performed by the image read-out means under the read-out conditions having been read by the magnetic recording information reading means, the image processing performed by the image processing means under the image processing conditions having been read by the magnetic recording information reading means, and the print outputting performed by the printing means under the printing conditions having been read by the magnetic recording information reading means.
